# EUROPEAN PATENT SPECIFICATION

(11) **EP 3 425 025 B1**
(45) Date of publication and mention of the grant of the patent: **03.03.2021**
(21) Application number: 17759527.9
(22) Date of filing: 01.02.2017
(51) Int. Cl.: C09K 19/30, C09K 19/12, C09K 19/14, C09K 19/20, C09K 19/32, C09K 19/34, C09K 19/38, C09K 19/54, G02F 1/13, C09K 19/56, G02F 1/137

(54) **LIQUID CRYSTAL COMPOSITION AND LIQUID CRYSTAL DISPLAY ELEMENT**
FLÜSSIGKRISTALLZUSAMMENSETZUNG UND FLÜSSIGKRISTALLANZEIGEELEMENT
COMPOSITION DE CRISTAUX LIQUIDES ET ÉLÉMENT D'AFFICHAGE À CRISTAUX LIQUIDES

(30) Priority: 29.02.2016 JP 2016036991
(43) Date of publication of application: 09.01.2019
(73) Proprietor: JNC Corporation, Chiyoda-ku Tokyo 100-8105 (JP); JNC Petrochemical Corporation, Tokyo 100-0004 (JP)
(72) Inventor: KURIHARA, Eriko, Ichihara-shi Chiba 290-8551 (JP); SAITO, Masayuki, Ichihara-shi Chiba 290-8551 (JP)
(74) Representative: Becker & Kurig Partnerschaft Patentanwälte PartmbB
(86) International application number: PCT/JP2017/003533
(87) International publication number: WO 2017/150056

(56) References cited:
- EP-A1- 3 067 405
- EP-A1- 3 067 406
- WO-A1-2010/067662
- WO-A1-2013/125379
- JP-A- 2006 233 182
- JP-A- 2007 039 639
- JP-A- 2008 208 365
- JP-A- 2010 503 733
- JP-A- 2011 089 013
- JP-B1- 5 637 420

## Description

### Technical Field

The invention relates to a liquid crystal composition, a liquid crystal display device including the composition, and so forth. In particular, the invention relates to a liquid crystal composition having negative dielectric anisotropy, and a liquid crystal display device that includes the composition and has a mode such as an IPS mode, a VA mode, an FFS mode and an FPA mode. The invention also relates to a liquid crystal display device having a polymer sustained alignment mode.

### Background Art

In a liquid crystal display device, a classification based on an operating mode for liquid crystal molecules includes a phase change (PC) mode, a twisted nematic (TN) mode, a super twisted nematic (STN) mode, an electrically controlled birefringence (ECB) mode, an optically compensated bend (OCB) mode, an in-plane switching (IPS) mode, a vertical alignment (VA) mode, a fringe field switching (FFS) mode and a field-induced photo-reactive alignment (FPA) mode. A classification based on a driving mode in the device includes a passive matrix (PM) and an active matrix (AM). The PM is classified into static, multiplex and so forth, and the AM is classified into a thin film transistor (TFT), a metal insulator metal (MIM) and so forth. The TFT is further classified into amorphous silicon and polycrystal silicon. The latter is classified into a high temperature type and a low temperature type based on a production process. A classification based on a light source includes a reflective type utilizing natural light, a transmissive type utilizing backlight and a transflective type utilizing both the natural light and the backlight.

The liquid crystal display device includes a liquid crystal composition having a nematic phase. The composition has suitable characteristics. An AM device having good characteristics can be obtained by improving characteristics of the composition. Table 1 below summarizes a relationship in two characteristics. The characteristics of the composition will be further described based on a commercially available AM device. A temperature range of the nematic phase relates to a temperature range in which the device can be used. A preferred maximum temperature of the nematic phase is about 70°C or higher, and a preferred minimum temperature of the nematic phase is about -10°C or lower. Viscosity of the composition relates to a response time in the device. A short response time is preferred for displaying moving images on the device. A shorter response time even by one millisecond is desirable. Accordingly, small viscosity in the composition is preferred. Small viscosity at low temperature is further preferred.

**Table 1. Characteristics of composition and AM device**

| No. | Characteristics of composition | Characteristics of AM device |
|---|---|---|
| 1 | Wide temperature range of a nematic phase | Wide usable temperature range |
| 2 | Small viscosity | Short response time |
| 3 | Large optical anisotropy | Large contrast ratio, corresponding to narrowed gap |
| 4 | Large negative dielectric anisotropy | Low threshold voltage and small electric power consumption Large contrast ratio |
| 5 | Large specific resistance | Large voltage holding ratio and large contrast ratio |
| 6 | High stability to ultraviolet light and heat | Long service life |

Optical anisotropy of the composition relates to a contrast ratio in the device. According to a mode of the device, large optical anisotropy or small optical anisotropy, more specifically, suitable optical anisotropy is required. A product (Δn × d) of the optical anisotropy (Δn) of the composition and a cell gap (d) in the device is designed so as to maximize the contrast ratio. A suitable value of the product depends on a type of the operating mode. The value is in the range of about 0.30 micrometer to about 0.40 micrometer in a device having the VA mode, and in the range of about 0.20 micrometer to about 0.30 micrometer in a device having the IPS mode or the FFS mode. In the above case, a composition having large optical anisotropy is preferred for a device having a small cell gap. Large dielectric anisotropy in the composition contributes to low threshold voltage, small electric power consumption and a large contrast ratio in the device. Accordingly, the large dielectric anisotropy is preferred. Large specific resistance in the composition contributes to a large voltage holding ratio and the large contrast ratio in the device. Accordingly, a composition having large specific resistance at room temperature and also at a temperature close to the maximum temperature of the nematic phase in an initial stage is preferred. The composition having large specific resistance at room temperature and also at a temperature close to the maximum temperature of the nematic phase even after the device has been used for a long period of time is preferred. Stability of the composition to ultraviolet light and heat relates to a service life of the device. In the case where the stability is high, the device has a long service life. Such characteristics are preferred for an AM device use in a liquid crystal projector, a liquid crystal television and so forth.

In a liquid crystal display device having a polymer sustained alignment (PSA) mode, a liquid crystal composition containing a polymer is used. First, a composition to which a small amount of a polymerizable compound is added is injected into the device. Next, the composition is irradiated with ultraviolet light while voltage is applied between substrates of the device. The polymerizable compound is polymerized to form a network structure of the polymer in the composition. In the composition, alignment of liquid crystal molecules can be controlled by the polymer, and therefore the response time in the device is shortened and also image persistence is improved. Such an effect of the polymer can be expected for a device having the mode such as the TN mode, the ECB mode, the OCB mode, the IPS mode, the VA mode, the FFS mode and the FPA mode.

A composition having positive dielectric anisotropy is used in an AM device having the TN mode. A composition having negative dielectric anisotropy is used in an AM device having the VA mode. In an AM device having the IPS mode or the FFS mode, a composition having positive or negative dielectric anisotropy is used. In an AM device having a polymer sustained alignment mode, a composition having positive or negative dielectric anisotropy is used. Examples of a first component in the invention are disclosed in Patent literature Nos. 1 to 4 described below Examples of a second component in the invention are disclosed in Patent literature No. 5 described below.

### Citation List

### Patent Literature

Patent literature No. 1: JP H9-77692 A.
Patent literature No. 2: JP H10-114690 A.
Patent literature No. 3: JP H11-140447 A.
Patent literature No. 4: JP 2011-89013 A
Patent literature No. 5: WO 2013/125379 A1.

### Summary of Invention

### Technical Problem

One of aims of the invention is to provide a liquid crystal composition satisfying at least one of characteristics such as high maximum temperature of a nematic phase, low minimum temperature of the nematic phase, small viscosity, suitable optical anisotropy, large negative dielectric anisotropy, large specific resistance, high stability to ultraviolet light and high stability to heat. Another aim is to provide a liquid crystal composition having a suitable balance regarding at least two of the characteristics. Another aim is to provide a liquid crystal display device including such a composition. Another aim is to provide an AM device having characteristics such as a short response time, a large voltage holding ratio, low threshold voltage, a large contrast ratio and a long service life.

### Solution to Problem

The invention concerns a liquid crystal composition that has a nematic phase and negative dielectric anisotropy, and contains at least one compound selected from the group of compounds represented by formula (1) as a first component and at least one compound selected from the group of compounds represented by formula (2) as a second component, and a liquid crystal display device including the composition: 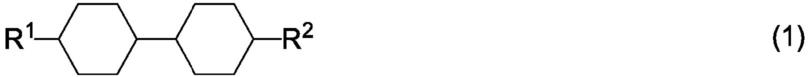 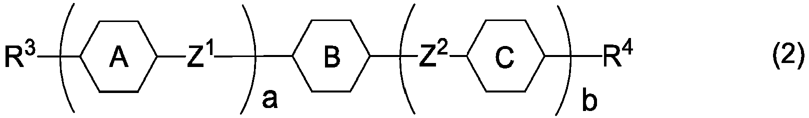 wherein, in formula (1), R¹ is alkenyl having 2 to 12 carbons; and R² is 1-propenyl; in formula (2), R³ is alkenyl having 2 to 12 carbons, or alkenyl having 2 to 12 carbons in which at least one hydrogen is replaced by fluorine or chlorine; R⁴ is alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one hydrogen is replaced by fluorine or chlorine; ring A and ring C are independently 1,4-cyclohexylene, 1,4-cyclohexenylene, tetrahydropyran-2,5-diyl, 1,4-phenylene, 1,4-phenylene in which at least one hydrogen is replaced by fluorine or chlorine, naphthalene-2,6-diyl, naphthalene-2,6-diyl in which at least one hydrogen is replaced by fluorine or chlorine, chroman-2,6-diyl, or chroman-2,6-diyl in which at least one hydrogen is replaced by fluorine or chlorine; ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl; Z¹ and Z² are independently a single bond, ethylene, carbonyloxy or methyleneoxy; a is 0, 1 or 2; b is 0 or 1; a sum of a and b is 3 or less; and in which, ring A is 1,4-cyclohexylene, Z¹ is a single bond, a is 1, when b is 0, R⁴ is alkyl having 1 to 12 carbons, alkenyl having 2 to 12 carbons, alkenyloxy having 2 to 12 carbons, or alkyl having 1 to 12 carbons in which at least one hydrogen is replaced by fluorine or chlorine.

### Advantageous Effects of Invention

One of advantages of the invention is a liquid crystal composition satisfying at least one of characteristics such as high maximum temperature of a nematic phase, low minimum temperature of the nematic phase, small viscosity, suitable optical anisotropy, large negative dielectric anisotropy, large specific resistance, high stability to ultraviolet light and high stability to heat. Another advantage is a liquid crystal composition having a suitable balance regarding at least two of the characteristics. Another advantage is a liquid crystal display device including such a composition. Another advantage is an AM device having characteristics such as a short response time, a large voltage holding ratio, low threshold voltage, a large contrast ratio and a long service life.

### Description of Embodiments

Usage of terms herein is as described below. Terms "liquid crystal composition" and "liquid crystal display device" may be occasionally abbreviated as "composition" and "device," respectively. "Liquid crystal display device" is a generic term for a liquid crystal display panel and a liquid crystal display module. "Liquid crystal compound" is a generic term for a compound having a liquid crystal phase such as a nematic phase and a smectic phase, and a compound having no liquid crystal phase but to be mixed with the composition for the purpose of adjusting characteristics such as a temperature range of the nematic phase, viscosity and dielectric anisotropy. The compound has a six-membered ring such as 1,4-cyclohexylene or 1,4-phenylene, and has rod-like molecular structure. "Polymerizable compound" is a compound to be added for the purpose of forming a polymer in the composition.

The liquid crystal composition is prepared by mixing a plurality of liquid crystal compounds. A proportion (content) of the liquid crystal compounds is expressed in terms of weight percent (% by weight) based on the total amount of the liquid crystal composition. An additive such as an optically active compound, an antioxidant, an ultraviolet light absorber, a dye, an antifoaming agent, the polymerizable compound, a polymerization initiator and a polymerization inhibitor is added to the liquid crystal composition when necessary. A proportion (amount of addition) of the additive is expressed in terms of weight percent (% by weight) based on the total amount of the liquid crystal composition in a manner similar to the proportion of the liquid crystal compounds. Weight parts per million (ppm) may be occasionally used. A proportion of the polymerization initiator and the polymerization inhibitor is exceptionally expressed based on the total amount of the polymerizable compound.

"Maximum temperature of the nematic phase" may be occasionally abbreviated as "maximum temperature." "Minimum temperature of the nematic phase" may be occasionally abbreviated as "minimum temperature." An expression "having large specific resistance" means that the composition has large specific resistance at room temperature and also at a temperature close to the maximum temperature of the nematic phase in an initial stage, and the composition has the large specific resistance at room temperature and also at a temperature close to the maximum temperature of the nematic phase even after the device has been used for a long period of time. An expression "having a large voltage holding ratio" means that the device has a large voltage holding ratio at room temperature and also at a temperature close to the maximum temperature of the nematic phase in an initial stage, and the device has the large voltage holding ratio at room temperature and also at a temperature close to the maximum temperature of the nematic phase even after the device has been used for a long period of time. An expression "increase the dielectric anisotropy" means that a value of dielectric anisotropy positively increases in a composition having positive dielectric anisotropy, and the value of dielectric anisotropy negatively increases in a composition having negative dielectric anisotropy.

A compound represented by formula (1) may be occasionally abbreviated as "compound (1)." At least one compound selected from the group of compounds represented by formula (2) may be occasionally abbreviated as "compound (2)." "Compound (1)" means one compound, a mixture of two compounds or a mixture of three or more compounds represented by formula (1). A same rule applies also to any other compound represented by any other formula. An expression "at least one piece of 'A'" means that the number of 'A' is arbitrary. An expression "at least one piece of 'A' may be replaced by 'B'" means that, when the number of 'A' is 1, a position of 'A' is arbitrary, and also when the number of 'A' is 2 or more, positions thereof can be selected without restriction. A same rule applies also to an expression "at least one piece of 'A' is replaced by 'B'."

A symbol of terminal group R³ is used in a plurality of compounds in chemical formulas of component compounds. In the compounds, two groups represented by two pieces of arbitrary R³ may be identical or different. For example, in one case, R³ of compound (2-1) is vinyl and R³ of compound (2-2) is vinyl. In another case, R³ of compound (2-1) is vinyl and R³ of compound (2-2) is 1-propenyl. A same rule applies also to a symbol of any other terminal group or the like. In formula (3), when c is 2, two of ring D exists. In the compound, two rings represented by two of ring D may be identical or different. A same rule applies also to two of arbitrary ring D when c is larger than 2. A same rule applies also to a symbol of Z¹, ring A or the like. A same rule applies also to such a case where two pieces of -Sp²-P⁵ exist in compound (5-27).

Symbol A, B, C or the like surrounded by a hexagonal shape corresponds to a six-membered ring such as ring A, ring B and ring C, respectively. In compound (5), the hexagonal shape represents the six-membered ring or a fused ring. An oblique line crossing the hexagonal shape represents that arbitrary hydrogen on the ring may be replaced by a group such as -Sp¹-P¹. A subscript such as h represents the number of groups to be replaced. When the subscript is 0, no such replacement exists. When h is 2 or more, a plurality of pieces of -Sp²-P² exist on ring K. The plurality of groups represented by -Sp²-P² may be identical or different.

Then, 2-fluoro-1,4-phenylene means two divalent groups described below. In a chemical formula, fluorine may be leftward (L) or rightward (R). A same rule applies also to a left-right asymmetrical divalent group derived from a ring such as tetrahydropyran-2,5-diyl. A same rule applies also to a divalent bonding group such as carbonyloxy (-COO- or -OCO-).

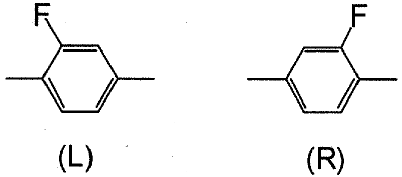

The invention as claimed is defined by the appended claims.

A liquid crystal composition that has a nematic phase and negative dielectric anisotropy, and contains at least one compound selected from the group of compounds represented by formula (1) as a first component and at least one compound selected from the group of compounds represented by formula (2) as a second component: 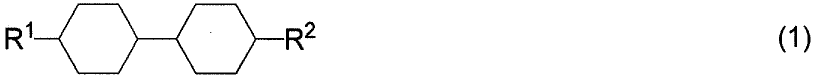 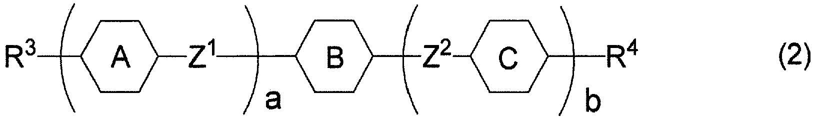 wherein, in formula (1), R¹ is independently alkenyl having 2 to 12 carbons and R² is 1-propenyl; in formula (2), R³ is alkenyl having 2 to 12 carbons, or alkenyl having 2 to 12 carbons in which at least one hydrogen is replaced by fluorine or chlorine; R⁴ is alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one hydrogen is replaced by fluorine or chlorine; ring A and ring C are independently 1,4-cyclohexylene, 1,4-cyclohexenylene, tetrahydropyran-2,5-diyl, 1,4-phenylene, 1,4-phenylene in which at least one hydrogen is replaced by fluorine or chlorine, naphthalene-2,6-diyl, naphthalene-2,6-diyl in which at least one hydrogen is replaced by fluorine or chlorine, chroman-2,6-diyl, or chroman-2,6-diyl in which at least one hydrogen is replaced by fluorine or chlorine; ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl; Z¹ and Z² are independently a single bond, ethylene, carbonyloxy or methyleneoxy; a is 0, 1 or 2; b is 0 or 1; a sum of a and b is 3 or less; and in which, ring A is 1,4-cyclohexylene, Z¹ is a single bond, a is 1, when b is 0, R⁴ is alkyl having 1 to 12 carbons, alkenyl having 2 to 12 carbons, alkenyloxy having 2 to 12 carbons, or alkyl having 1 to 12 carbons in which at least one hydrogen is replaced by fluorine or chlorine.

The liquid crystal composition according to the present invention can contain at least one compound selected from the compound represented by formula (1-2), formula (1-5), formula (1-6) or formula (1-7) as shown in the list below as the first component. The other shown compounds may be comprised in addition.

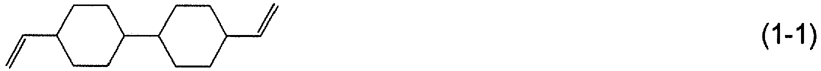

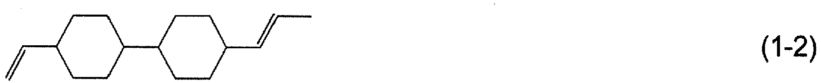

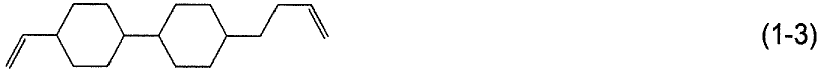

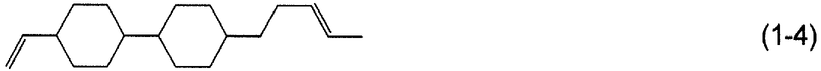

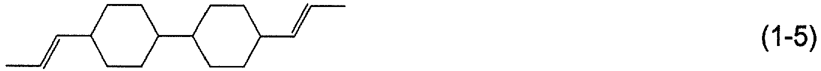

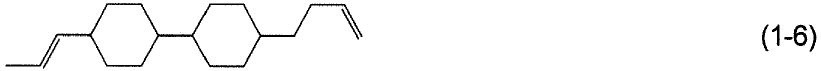

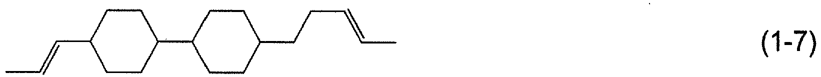

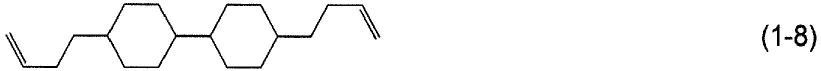

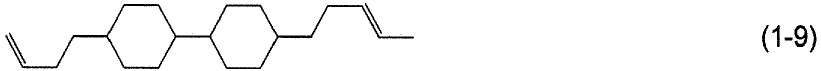

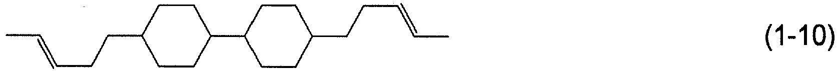

In the liquid crystal composition according to the present invention the first component can be comprised in a proportion in the range of 5% by weight to 75% by weight based on the total amount of the liquid crystal composition.

The liquid crystal composition according to the present invention can contain at least one compound selected from the group of compounds represented by formula (2-1) to formula (2-21) as the second component: 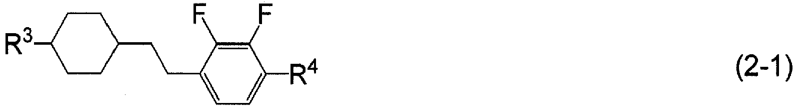 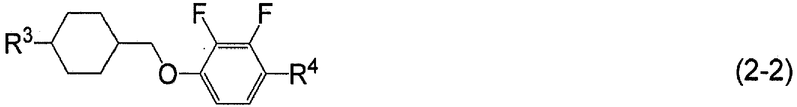 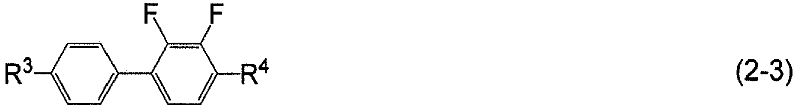 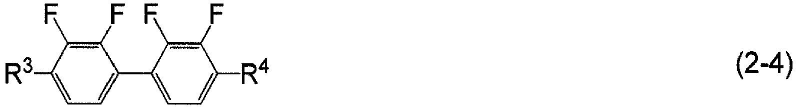 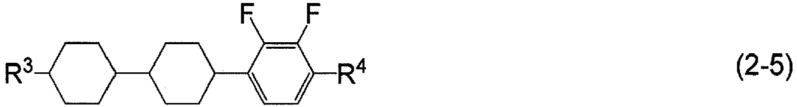 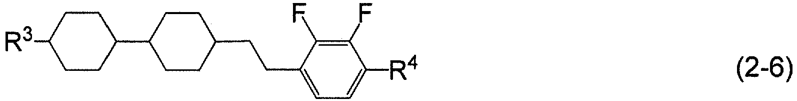 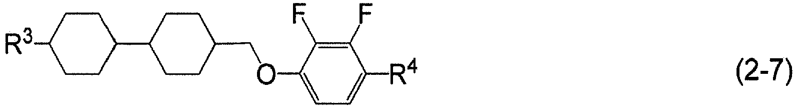 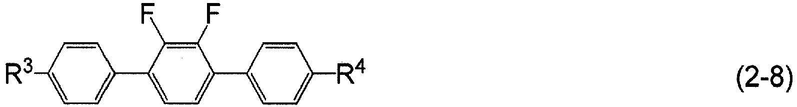 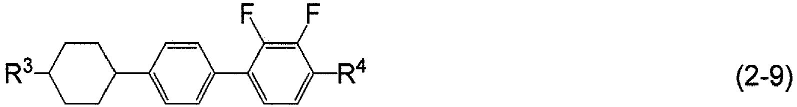 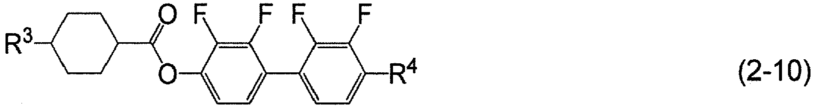 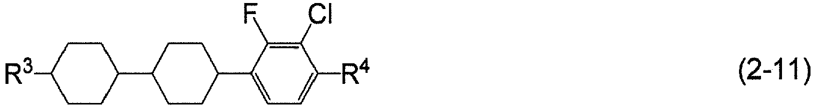 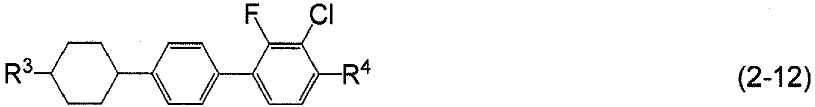 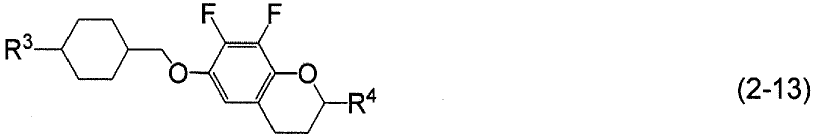 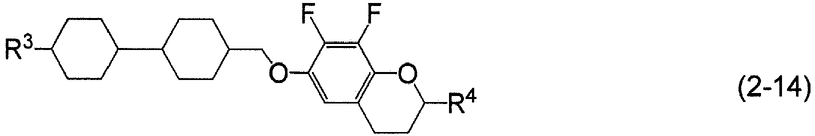 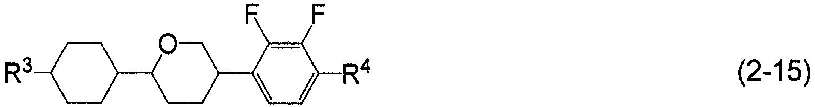 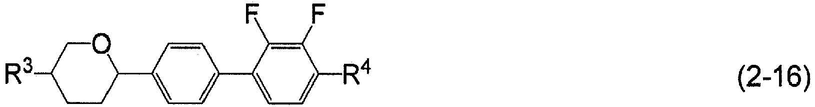 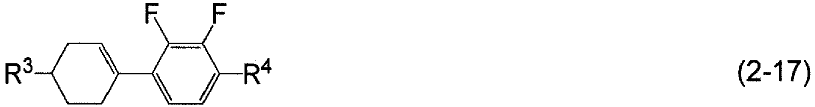 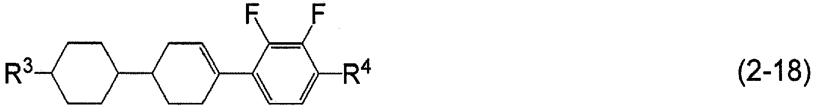 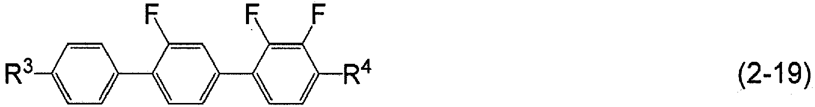 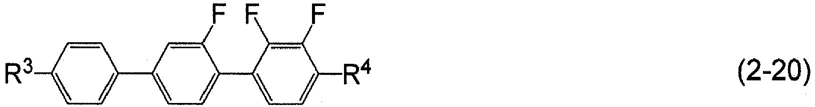 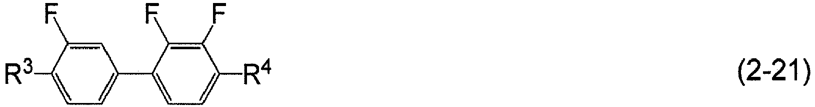 wherein, in formula (2-1) to formula (2-21), R³ is alkenyl having 2 to 12 carbons, or alkenyl having 2 to 12 carbons in which at least one hydrogen is replaced by fluorine or chlorine; and R⁴ is alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one hydrogen is replaced by fluorine or chlorine.

In the liquid crystal composition according to the present invention the second component can be comprised in a proportion in the range of 5% by weight to 70% by weight based on the total amount of the liquid crystal composition.

The liquid crystal composition according to the present invention can contain at least one compound selected from the group of compounds represented by formula (3) as a third component: 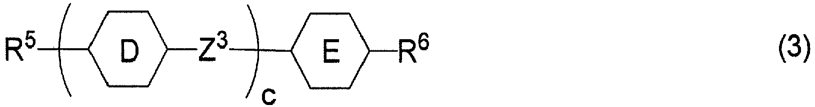 wherein, in formula (3), R⁵ and R⁶ are independently alkyl having 1 to 12 carbons, alkoxy having 1 to 12 carbons, alkenyl having 2 to 12 carbons, alkyl having 1 to 12 carbons in which at least one hydrogen is replaced by fluorine or chlorine, or alkenyl having 2 to 12 carbons in which at least one hydrogen is replaced by fluorine or chlorine; ring D and ring E are independently 1,4-cyclohexylene, 1,4-phenylene, 2-fluoro-1,4-phenylene or 2,5-difluoro-1,4-phenylene; Z³ is a single bond, ethylene or carbonyloxy; c is 1, 2 or 3; and in which, the compound represented by formula (1) is excluded.

The optionally comprised third component of the liquid crystal composition according to the present invention can be at least one compound selected from the group of compounds represented by formula (3-1) to formula (3-13): 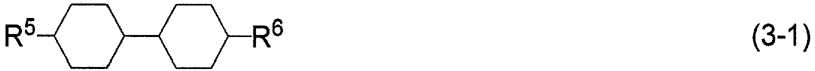 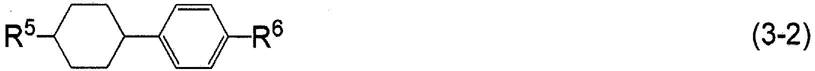 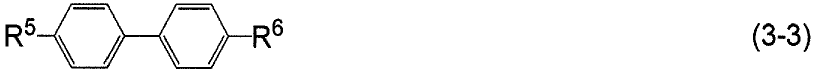 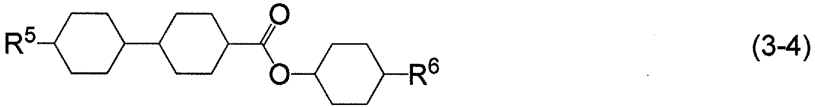 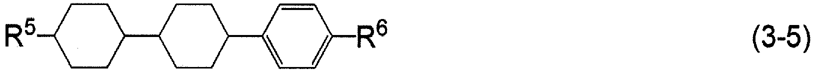 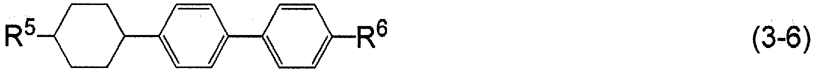 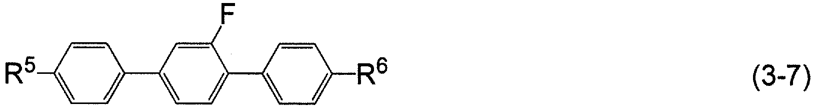 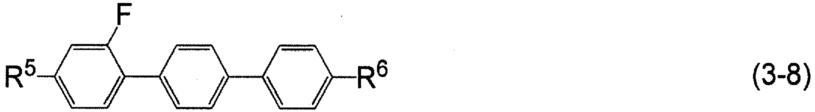 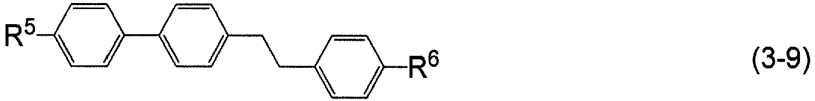 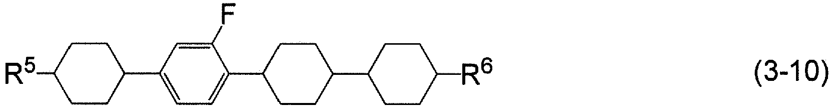 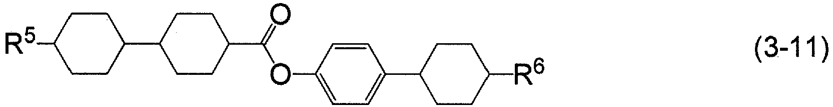 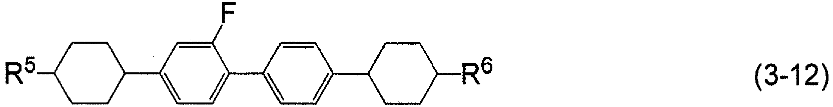 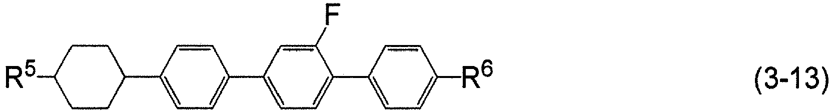 wherein, in formula (3-1) to formula (3-13), R⁵ and R⁶ are independently alkyl having 1 to 12 carbons, alkoxy having 1 to 12 carbons, alkenyl having 2 to 12 carbons, alkyl having 1 to 12 carbons in which at least one hydrogen is replaced by fluorine or chlorine, or alkenyl having 2 to 12 carbons in which at least one hydrogen is replaced by fluorine or chlorine, and in which the compound represented by formula (1) is excluded.

In the liquid crystal composition according to the present invention the third component can be comprised in a proportion in the range of 3% by weight to 50% by weight based on the weight of the liquid crystal composition.

The liquid crystal composition according to the present invention can contain at least one compound selected from the group of compounds represented by formula (4) as a fourth component: 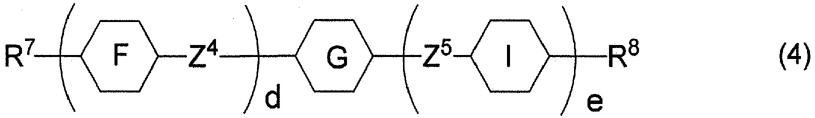 wherein, in formula (4), R⁷ and R⁸ are independently alkyl having 1 to 12 carbons, alkoxy having 1 to 12 carbons, or alkyl having 1 to 12 carbons in which at least one hydrogen is replaced by fluorine or chlorine; ring F and ring I are independently 1,4-cyclohexylene, 1,4-cyclohexenylene, tetrahydropyran-2, 5-diyl, 1,4-phenylene, 1,4-phenylene in which at least one hydrogen is replaced by fluorine or chlorine, naphthalene-2,6-diyl, naphthalene-2,6-diyl in which at least one hydrogen is replaced by fluorine or chlorine, chroman-2,6-diyl, or chroman-2,6-diyl in which at least one hydrogen is replaced by fluorine or chlorine; ring G is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl; Z⁴ and Z⁵ are independently a single bond, ethylene, carbonyloxy or methyleneoxy; d is 1, 2 or 3; e is 0 or 1; and a sum of d and e is 1 to 3.

The optionally comprised fourth component of the liquid crystal composition according to the present invention can be at least one compound selected from the group of compounds represented by formula (4-1) to formula (4-22): 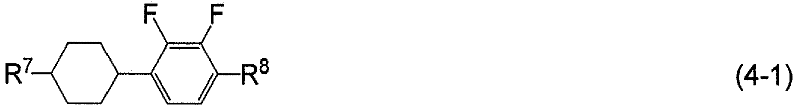 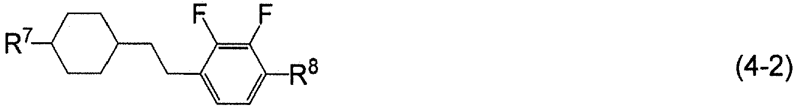 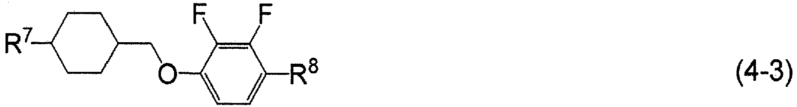 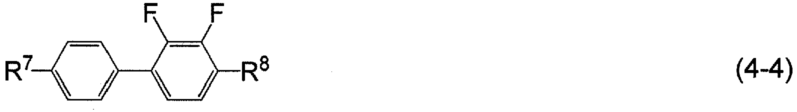 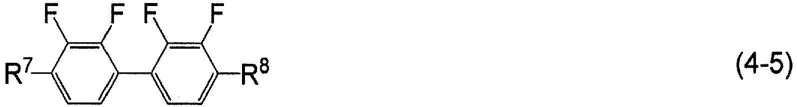 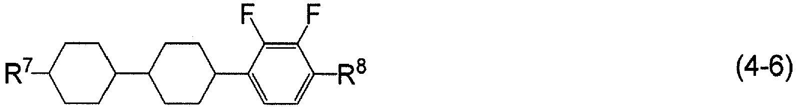 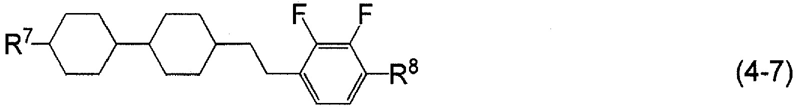 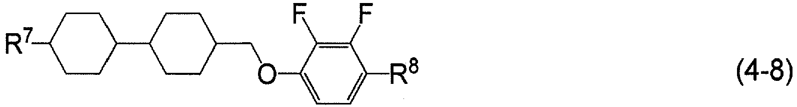 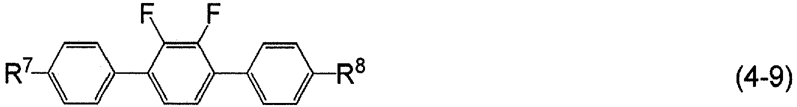 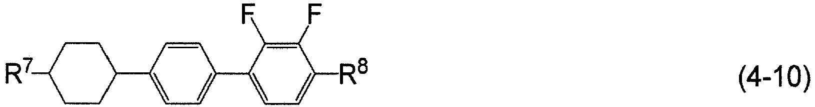 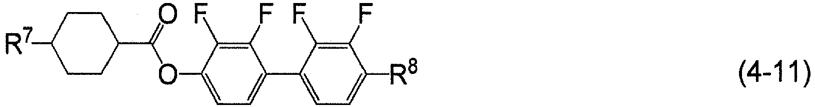 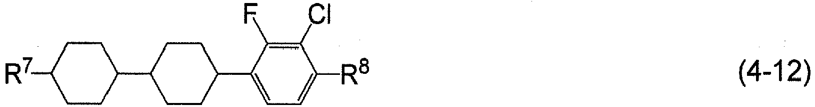 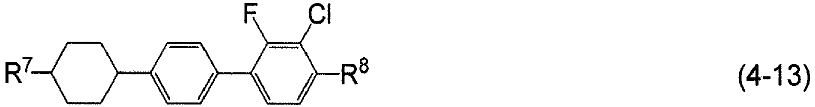 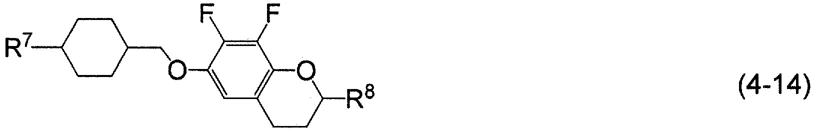 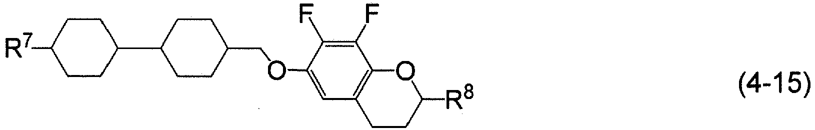 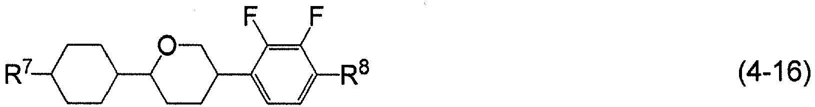 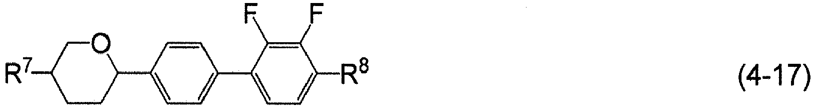 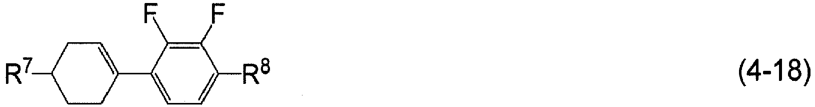 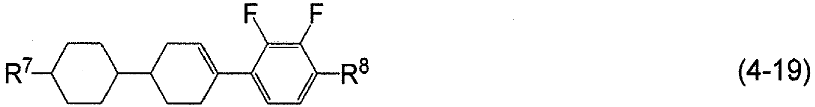 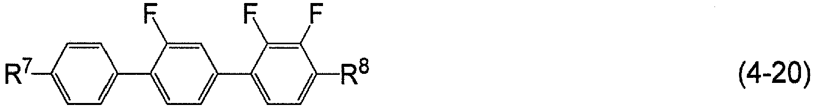 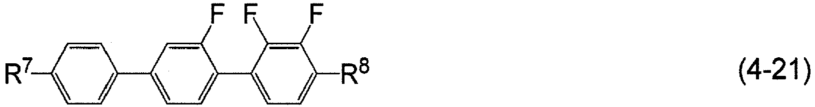 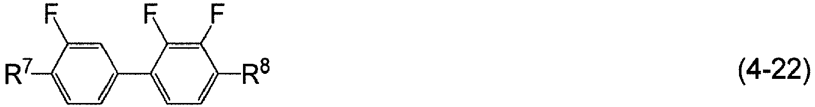 wherein, in formula (4-1) to formula (4-22), R⁷ and R⁸ are independently alkyl having 1 to 12 carbons, alkoxy having 1 to 12 carbons, or alkyl having 1 to 12 carbons in which at least one hydrogen is replaced by fluorine or chlorine.

In the liquid crystal composition according to the present invention the fourth component can be comprised in a proportion in the range of 3% by weight to 60% by weight based on the weight of the liquid crystal composition.

The liquid crystal composition according to the present invention can contain at least one polymerizable compound selected from the group of compounds represented by formula (5) as an additive: 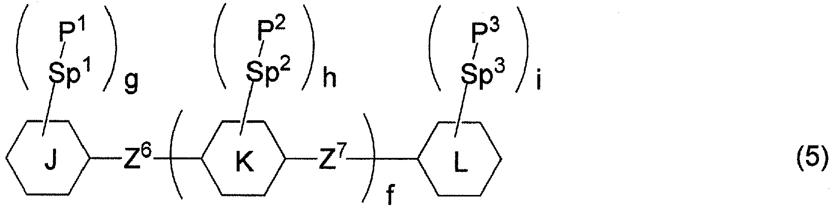 wherein, in formula (5), ring J and ring L are independently cyclohexyl, cyclohexenyl, phenyl, 1-naphthyl, 2-naphthyl, tetrahydropyran-2-yl, 1,3-dioxane-2-yl, pyrimidine-2-yl or pyridine-2-yl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine; ring K is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine; Z⁶ and Z⁷ are independently a single bond or alkylene having 1 to 10 carbons, and in the alkylene, at least one piece of -CH₂- may be replaced by -O-, -CO-, -COO- or -OCO-, and at least one piece of -CH₂-CH₂- may be replaced by -CH=CH-, -C(CH₃)=CH-, -CH=C(CH₃)- or -C(CH₃)=C(CH₃)-, and in the groups, at least one hydrogen may be replaced by fluorine or chlorine; P¹, P² and P³ are independently a polymerizable group; Sp¹, Sp² and Sp³ are independently a single bond or alkylene having 1 to 10 carbons, and in the alkylene, at least one piece of -CH₂- may be replaced by -O-, -COO-, -OCO- or -OCOO-, and at least one piece of -CH₂-CH₂- may be replaced by -CH=CH- or -C≡C-, and in the groups, at least one hydrogen may be replaced by fluorine or chlorine; f is 0, 1 or 2; g, h and i are independently 0, 1, 2, 3 or 4; and a sum of g, h and i is 1 or more.

In formula (5), P¹, P² and P³ can independently be selected from the group of groups represented by formula (P-1) to formula (P-6) : 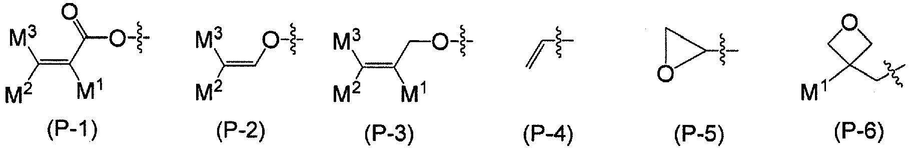
wherein, in formula (P-1) to formula (P-6), M¹, M² and M³ are independently hydrogen, fluorine, alkyl having 1 to 5 carbons, or alkyl having 1 to 5 carbons in which at least one hydrogen is replaced by fluorine or chlorine; and
in formula (5), when all of g pieces of P¹ and i pieces of P³ are the group represented by formula (P-4), at least one of g pieces of Sp¹ and i pieces of Sp³ is alkylene in which at least one piece of -CH₂- is replaced by -O-, -COO-, -OCO- or -OCOO-.

The liquid crystal composition according to the present invention can contain at least one polymerizable compound selected from the group of compounds represented by formula (5-1) to formula (5-27) as the additive: 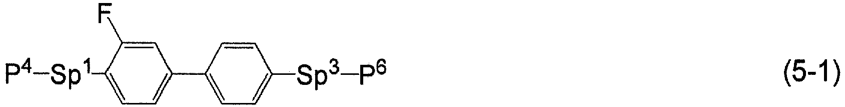 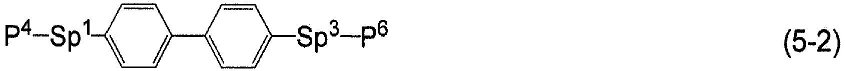 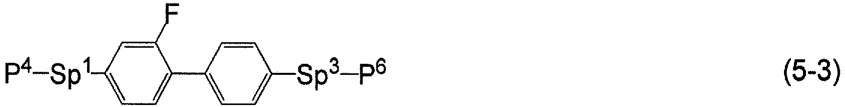 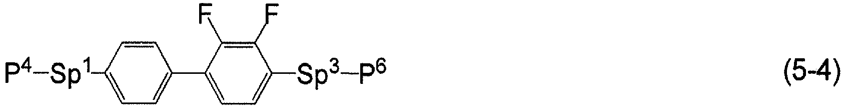 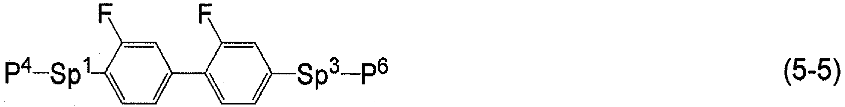 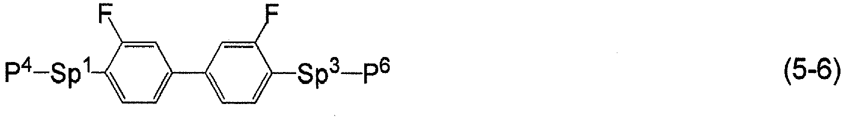 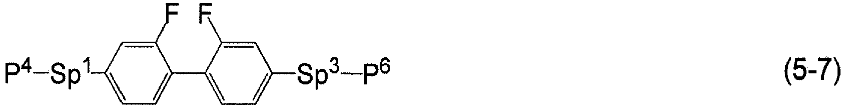 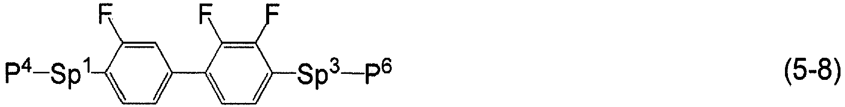 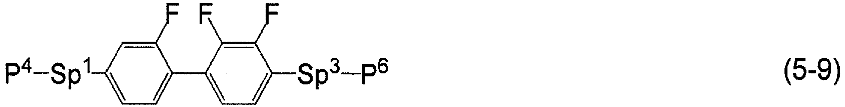 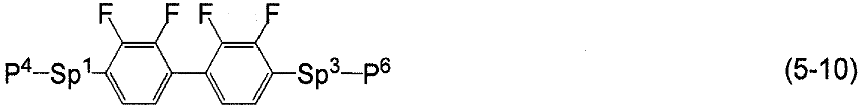 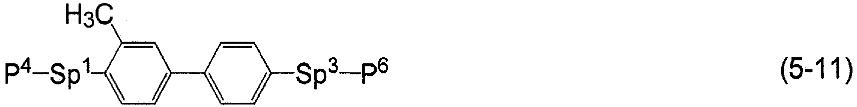 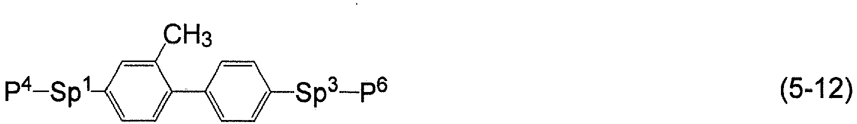 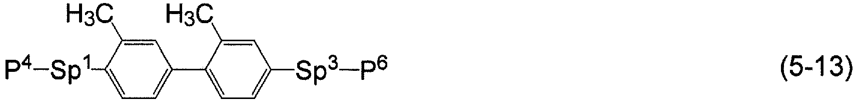 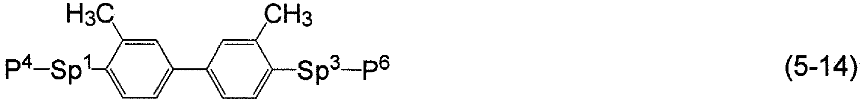 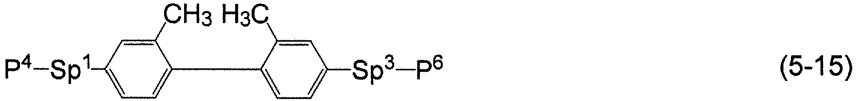 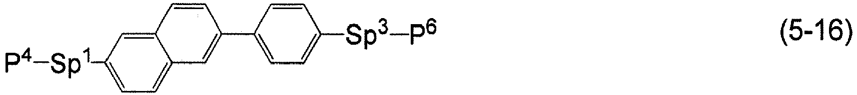 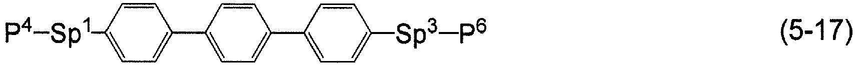 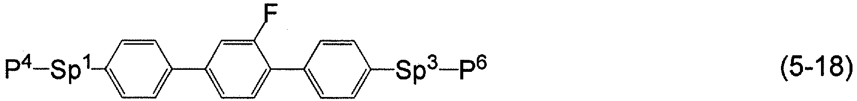 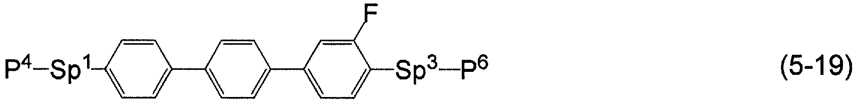 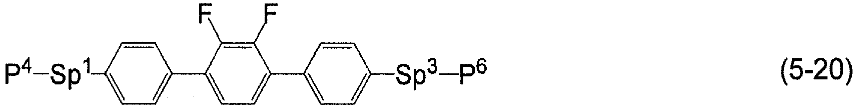 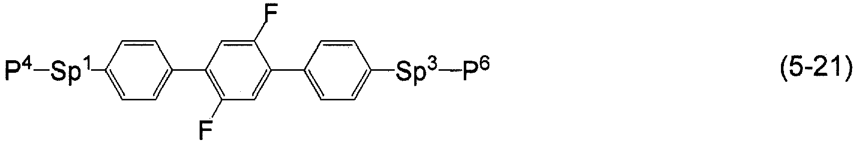 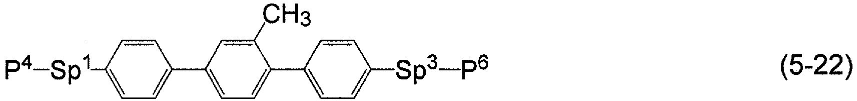 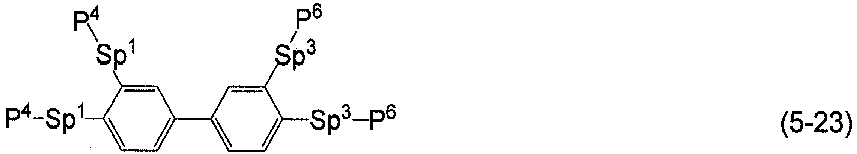 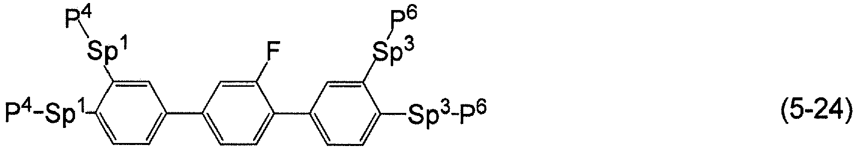 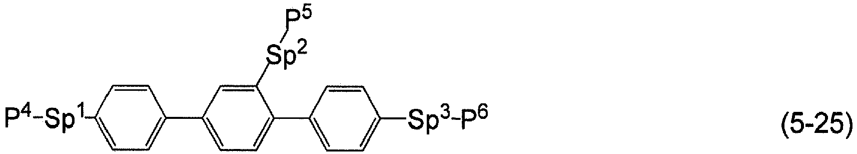 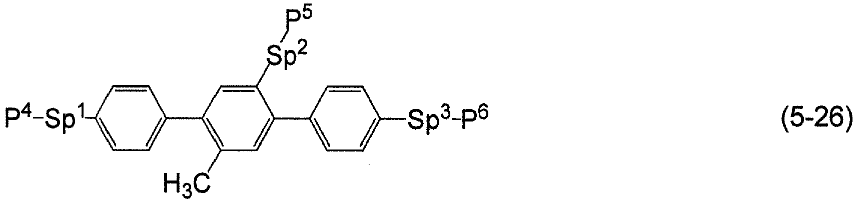 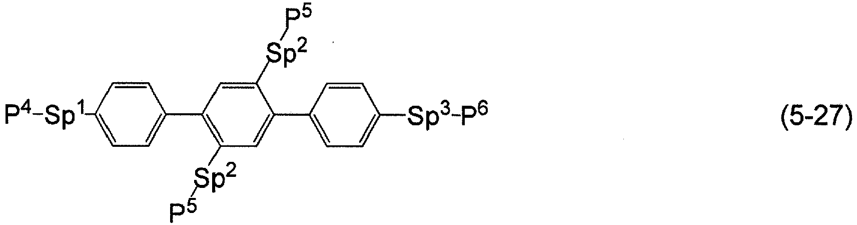 wherein, in formula (5-1) to formula (5-27), P⁴, P⁵ and P⁶ are independently a polymerizable group selected from the group of groups represented by formula (P-1) to formula (P-3); 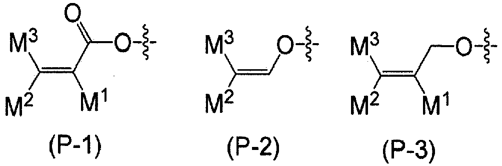
wherein, in formula (P-1) to formula (P-3), M¹, M² and M³ are independently hydrogen, fluorine, alkyl having 1 to 5 carbons, or alkyl having 1 to 5 carbons in which at least one hydrogen is replaced by fluorine or chlorine; and
in formula (5-1) to formula (5-27), Sp¹, Sp² and Sp³ are independently a single bond or alkylene having 1 to 10 carbons, and in the alkylene, at least one piece of -CH₂- may be replaced by -O-, -COO-, -OCO- or -OCOO-, and at least one piece of -CH₂-CH₂-may be replaced by -CH=CH- or -C=C-, and in the groups, at least one hydrogen may be replaced by fluorine or chlorine.

In the liquid crystal composition according to the present invention the additive can be comprised in a proportion in the range of 0 . 03% by weight to 10% by weight based on the total amount of the liquid crystal composition.

The present invention is further concerned with a liquid crystal display device, including the liquid crystal composition according to the present invention.

The liquid crystal display device according to the present invention can have an operating mode which is an IPS mode, a VA mode, an FFS mode or an FPA mode, and a driving mode in the liquid crystal display device can be an active matrix mode.

The liquid crystal display device can be a polymer sustained alignment mode liquid crystal display device, including the liquid crystal composition according to the present invention, or the polymerizable compound in the liquid crystal composition can be polymerized.

A further aspect of the present invention is the use of the liquid crystal composition according to the present invention in a liquid crystal display device.

The liquid crystal composition according to the present invention can be used in a polymer sustained alignment mode liquid crystal display device.

Embodiments of the invention further include the following items: (a) the composition, further containing at least one of additives such as an optically active compound, an antioxidant, an ultraviolet light absorber, a dye, an antifoaming agent, a polymerizable compound, a polymerization initiator and a polymerization inhibitor; (b) an AM device including the composition; (c) a polymer sustained alignment (PSA) mode AM device including the composition further containing a polymerizable compound; (d) the polymer sustained alignment (PSA) mode AM device, wherein the device includes the composition, and the polymerizable compound in the composition is polymerized; (e) a device including the composition and having a PC mode, a TN mode, an STN mode, an ECB mode, an OCB mode, an IPS mode, a VA mode, an FFS mode or an FPA mode; (f) a transmissive device including the composition; (g) use of the composition as the composition having the nematic phase; and (h) use as an optically active composition by adding the optically active compound to the composition.

The composition of the invention will be described in the following order. First, a constitution of the component compounds in the composition will be described. Second, main characteristics of the component compounds and main effects of the compounds on the composition will be described. Third, a combination of components in the composition, a preferred proportion of the components and the basis thereof will be described. Fourth, a preferred embodiment of the component compounds will be described. Fifth, a preferred component compound will be described. Sixth, an additive that may be added to the composition will be described. Seventh, methods for synthesizing the component compounds will be described. Last, an application of the composition will be described.

First, the constitution of the component compounds in the composition will be described. The composition of the invention is classified into composition A and composition B. Composition A may further contain any other liquid crystal compound, an additive or the like in addition to the liquid crystal compound selected from compound (1), compound (2), compound (3) and compound (4). An expression "any other liquid crystal compound" means a liquid crystal compound different from compound (1), compound (2), compound (3) and compound (4). Such a compound is mixed with the composition for the purpose of further adjusting the characteristics. The additive is the optically active compound, the antioxidant, the ultraviolet light absorber, the dye, the antifoaming agent, the polymerizable compound, the polymerization initiator, the polymerization inhibitor or the like.

Composition B consists essentially of liquid crystal compounds selected from compound (1), compound (2), compound (3) and compound (4). An expression "essentially" means that the composition may contain the additive, but contains no any other liquid crystal compound. Composition B has a smaller number of components than composition A has. Composition B is preferred to composition A from a viewpoint of cost reduction. Composition A is preferred to composition B from a viewpoint of possibility of further adjusting the characteristics by mixing any other liquid crystal compound.

Second, the main characteristics of the component compounds and the main effects of the compounds on the characteristics of the composition will be described. The main characteristics of the component compounds are summarized in Table 2 on the basis of advantageous effects of the invention. In Table 2, a symbol L stands for "large" or "high," a symbol M stands for "medium" and a symbol S stands for "small" or "low." The symbols L, M and S represent a classification based on a qualitative comparison among the component compounds, and 0 (zero) means that "a value is zero" or "a value is nearly zero."

**Table 2. Characteristics of compounds**

| Compounds | Compound (1) | Compound (2) | Compound (3) | Compound (4) |
|---|---|---|---|---|
| Maximum temperature | S to M | S to L | S to L | S to L |
| Viscosity | S | S to M | S to M | M to L |
| Optical anisotropy | S | M to L | S to L | M to L |
| Dielectric anisotropy | 0 | M to L¹⁾ | 0 | M to L¹⁾ |
| Specific resistance | L | L | L | L |

| | | | | |
|---|---|---|---|---|
| **1) A compound having negative dielectric anisotropy.** | | | | |

Upon mixing the component compounds with the composition, the main effects of the component compounds on the characteristics of the composition are as described below. Compound (1) decreases the viscosity and decreases the minimum temperature. Compound (2) decreases the viscosity and increases the dielectric anisotropy. Compound (3) increases the maximum temperature or decreases the viscosity. Compound (4) increases the dielectric anisotropy and decreases the minimum temperature. Compound (5) are polymerized to give a polymer, and the polymer shortens a response time of the device, and improves image persistence.

Third, the combination of components in the composition, the preferred proportion of the component compounds and the basis thereof will be described. A preferred combination of the components in the composition includes a combination of the first component and the second component, a combination of the first component, the second component and the third component, a combination of the first component, the second component and the fourth component, a combination of the first component, the second component and the additive component, a combination of the first component, the second component, the third component and the fourth component, a combination of the first component, the second component, the third component and the additive component, or a combination of the first component, the second component, the third component, the fourth component and the additive component. A further preferred combination includes a combination of the first component, the second component, the third component and the fourth component, or a combination of the first component, the second component, the third component, the fourth component and the additive component.

A preferred proportion of the first component is about 5% by weight or more for decreasing the viscosity, and about 75% by weight or less for increasing the dielectric anisotropy. A further preferred proportion is in the range of about 15% by weight to about 65% by weight. A particularly preferred proportion is in the range of about 25% by weight to about 55% by weight.

A preferred proportion of the second component is about 5% by weight or more for increasing the dielectric anisotropy, and about 70% by weight or less for decreasing the viscosity. A further preferred proportion is in the range of about 10% by weight to about 65% by weight. A particularly preferred proportion is in the range of about 15% by weight to about 60% by weight.

A preferred proportion of the third component is about 3% by weight or more for increasing the maximum temperature or decreasing the viscosity, and about 50% by weight or less for increasing the dielectric anisotropy. A further preferred proportion is in the range of about 5% by weight to about 40% by weight. A particularly preferred proportion is in the range of about 5% by weight to about 30% by weight.

A preferred proportion of the fourth component is about 3% by weight or more for increasing the dielectric anisotropy, and about 60% by weight or less for decreasing the minimum temperature. A further preferred proportion is in the range of about 5% by weight to about 50% by weight. A particularly preferred proportion is in the range of about 5% by weight to about 40% by weight.

Compound (5) is added to the composition for the purpose of adapting the composition to the polymer sustained alignment mode device. A preferred proportion of the additive component is about 0.03% by weight or more for aligning liquid crystal molecules, and about 10% by weight or less for preventing poor display in the device. A further preferred proportion is in the range of about 0.1% by weight to about 2% by weight. A particularly preferred proportion is in the range of about 0.2% by weight to about 1.0% by weight.

Fourth, the preferred embodiment of the component compounds will be described. In formula (1), formula (2), formula (3) and formula (4), R¹ is independently alkenyl having 2 to 12 carbons. R² is 1-propenyl. R³ is alkenyl having 2 to 12 carbons, or alkenyl having 2 to 12 carbons in which at least one hydrogen is replaced by fluorine or chlorine. R⁴ is alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one hydrogen is replaced by fluorine or chlorine. Preferred R⁴ is alkyl having 1 to 12 carbons for increasing the stability, and alkoxy having 1 to 12 carbons for increasing the dielectric anisotropy. R⁵ and R⁶ are independently alkyl having 1 to 12 carbons, alkoxy having 1 to 12 carbons, alkenyl having 2 to 12 carbons, alkyl having 1 to 12 carbons in which at least one hydrogen is replaced by fluorine or chlorine, or alkenyl having 2 to 12 carbons in which at least one hydrogen is replaced by fluorine or chlorine. Preferred R⁵ or R⁶ is alkenyl having 2 to 12 carbons for decreasing the viscosity, and alkyl having 1 to 12 carbons for increasing the stability. R⁷ and R⁸ are independently alkyl having 1 to 12 carbons, alkoxy having 1 to 12 carbons, or alkyl having 1 to 12 carbons in which at least one hydrogen is replaced by fluorine or chlorine. Preferred R⁷ or R⁸ is alkyl having 1 to 12 carbons for increasing the stability, and alkoxy having 1 to 12 carbons for increasing the dielectric anisotropy. Alkyl is straight-chain alkyl or branched-chain alkyl, but includes no cyclic alkyl. Straight-chain alkyl is preferred to branched-chain alkyl. A same rule applies also to a terminal group such as alkoxy and alkenyl.

Preferred alkyl is methyl, ethyl, propyl, butyl, pentyl, hexyl, heptyl or octyl. Further preferred alkyl is ethyl, propyl, butyl, pentyl or heptyl for decreasing the viscosity.

Preferred alkoxy is methoxy, ethoxy, propoxy, butoxy, pentyloxy, hexyloxy or heptyloxy. Further preferred alkoxy is methoxy or ethoxy for decreasing the viscosity.

Preferred alkenyl is vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. Further preferred alkenyl is vinyl, 1-propenyl, 3-butenyl or 3-pentenyl for decreasing the viscosity. A preferred configuration of -CH=CH- in the alkenyl depends on a position of a double bond. Trans is preferred in alkenyl such as 1-propenyl, 1-butenyl, 1-pentenyl, 1-hexenyl, 3-pentenyl and 3-hexenyl for decreasing the viscosity, for instance. Cis is preferred in alkenyl such as 2-butenyl, 2-pentenyl and 2-hexenyl.

Preferred examples of alkyl in which at least one hydrogen is replaced by fluorine or chlorine include fluoromethyl, 2-fluoroethyl, 3-fluoropropyl, 4-fluorobutyl, 5-fluoropentyl, 6-fluorohexyl, 7-fluoroheptyl or 8-fluorooctyl. Further preferred examples are 2-fluoroethyl, 3-fluoropropyl, 4-fluorobutyl or 5-fluoropentyl for increasing the dielectric anisotropy.

Preferred examples of alkenyl in which at least one hydrogen is replaced by fluorine or chlorine include 2,2-difluorovinyl, 3,3-difluoro-2-propenyl, 4,4-difluoro-3-butenyl, 5,5-difluoro-4-pentenyl or 6,6-difluoro-5-hexenyl. Further preferred examples include 2,2-difluorovinyl or 4,4-difluoro-3-butenyl for decreasing the viscosity.

Ring A, ring C, ring F and ring I are independently 1,4-cyclohexylene, 1,4-cyclohexenylene, tetrahydropyran-2,5-diyl, 1,4-phenylene, 1,4-phenylene in which at least one hydrogen is replaced by fluorine or chlorine, naphthalene-2,6-diyl, naphthalene-2,6-diyl in which at least one hydrogen is replaced by fluorine or chlorine, chroman-2,6-diyl, or chroman-2,6-diyl in which at least one hydrogen is replaced by fluorine or chlorine. Preferred ring A or ring F is 1,4-cyclohexylene for decreasing the viscosity or increasing the maximum temperature. Preferred ring C or ring I is 1,4-cyclohexylene for decreasing the viscosity or increasing the maximum temperature, and 1,4-phenylene for decreasing the minimum temperature. Ring B and ring G are 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl. Preferred ring B or ring G is 2,3-difluoro-1,4-phenylene for decreasing the viscosity, 2-chloro-3-fluoro-1,4-phenylene for decreasing the optical anisotropy, and 7,8-difluorochroman-2,6-diyl for increasing the dielectric anisotropy. Ring D and ring E are independently 1,4-cyclohexylene, 1,4-phenylene, 2-fluoro-1,4-phenylene or 2,5-difluoro-1,4-phenylene. Preferred ring D or ring E is 1,4-cyclohexylene for decreasing the viscosity or increasing the maximum temperature, and 1,4-phenylene for decreasing the minimum temperature. With regard to a configuration of 1,4-cyclohexylene, trans is preferred to cis for increasing the maximum temperature. Tetrahydropyran-2,5-diyl includes: 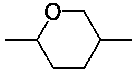 or 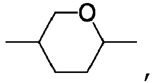 and preferably

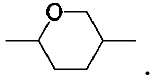

Z¹, Z², Z⁴ and Z⁵ are independently a single bond, ethylene, carbonyloxy or methyleneoxy. Preferred Z¹, Z², Z⁴ or Z⁵ is a single bond for decreasing the viscosity, ethylene for decreasing the minimum temperature, and methyleneoxy for increasing the dielectric anisotropy. Z³ is a single bond, ethylene or carbonyloxy. Preferred Z³ is a single bond for increasing the stability.

Then, a is 0, 1 or 2, b is 0 or 1, and a sum of a and b is 3 or less. Preferred a is 1 for decreasing the viscosity, and 2 or 3 for increasing the maximum temperature. Preferred b is 0 for decreasing the viscosity, and 1 for decreasing the minimum temperature. Then, c is 1, 2 or 3. Preferred c is 1 for decreasing the viscosity, and 2 or 3 for increasing the maximum temperature. Then, d is 1, 2 or 3, e is 0 or 1, and a sum of d and e is 1 to 3. Preferred d is 1 for decreasing the viscosity, and 2 or 3 for increasing the maximum temperature. Preferred e is 0 for decreasing the viscosity, and 1 for decreasing the minimum temperature.

In formula (2), ring A is 1,4-cyclohexylene, Z¹ is a single bond, a is 1, and when b is 0, R⁴ is alkyl having 1 to 12 carbons, alkenyl having 2 to 12 carbons, alkenyloxy having 2 to 12 carbons, or alkyl having 1 to 12 carbons in which at least one hydrogen is replaced by fluorine or chlorine.

When a compound represented by formula (3) overlaps with a compound represented by formula (1), the compound is regarded as the compound represented by formula (1).

In formula (5), P¹, P² and P³ are independently a polymerizable group. Preferred P¹, P² or P³ is a polymerizable group selected from the group of groups represented by formula (P-1) to formula (P-6). Further preferred P¹, P² or P³ is a group represented by formula (P-1), formula (P-2) or formula (P-3). Particularly preferred P¹, P² or P³ is a group represented by formula (P-1) or formula (P-2). Most Preferred P¹, P² or P³ is a group represented by formula (P-1). A preferred group represented by formula (P-1) is -OCO-CH=CH₂ or -OCO-C(CH₃)=CH₂. A wavy line in formula (P-1) to formula (P-6) represents a site to form a bonding.

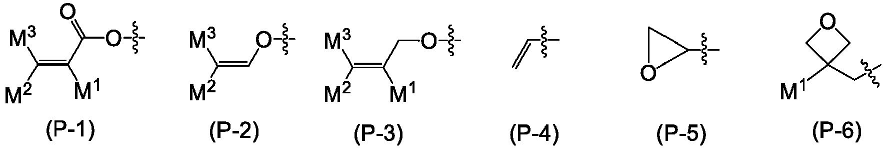

In formula (P-1) to formula (P-6), M¹, M² and M³ are independently hydrogen, fluorine, alkyl having 1 to 5 carbons, or alkyl having 1 to 5 carbons in which at least one hydrogen is replaced by fluorine or chlorine. Preferred M¹, M² or M³ is hydrogen or methyl for increasing reactivity. Further preferred M¹ is hydrogen or methyl, and further preferred M² or M³ is hydrogen.

Sp¹, Sp² and Sp³ are independently a single bond or alkylene having 1 to 10 carbons, and in the alkylene, at least one piece of -CH₂- may be replaced by -O-, -COO-, -OCO- or -OCOO-, and at least one piece of -CH₂-CH₂- may be replaced by -CH=CH- or -C≡C-, and in the groups, at least one hydrogen may be replaced by fluorine or chlorine. Preferred Sp¹, Sp² or Sp³ is a single bond, -CH₂-CH₂-, -CH₂O-, -OCH₂-, -COO-, -OCO-, -CO-CH=CH- or -CH=CH-CO-. Further preferred Sp¹, Sp² or Sp³ is a single bond.

In formula (5), when all of g pieces of P¹ and i pieces of P³ are the group represented by formula (P-4), at least one of g pieces of Sp¹ and i pieces of Sp³ is alkylene in which at least one piece of -CH₂- is replaced by -O-, -COO-, -OCO- or -OCOO-.

Ring J and ring L are independently cyclohexyl, cyclohexenyl, phenyl, 1-naphthyl, 2-naphthyl, tetrahydropyran-2-yl, 1,3-dioxane-2-yl, pyrimidine-2-yl or pyridine-2-yl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine. Preferred ring J or ring L is phenyl. ring K is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine. Preferred ring K is 1,4-phenylene or 2-fluoro-1,4-phenylene.

Z⁶ and Z⁷ are independently a single bond or alkylene having 1 to 10 carbons, and in the alkylene, at least one piece of -CH₂-may be replaced by -O-, -CO-, -COO- or -OCO-, and at least one piece of -CH₂-CH₂- may be replaced by -CH=CH-, -C(CH₃)=CH-, -CH=C(CH₃)- or -C(CH₃)=C(CH₃)-, and in the groups, at least one hydrogen may be replaced by fluorine or chlorine. Preferred Z⁶ or Z⁷ is a single bond, -CH₂-CH₂-, -CH₂O-, -OCH₂-, -COO- or -OCO-. Further preferred Z⁶ or Z⁷ is a single bond.

Then, f is 0, 1 or 2. Preferred f is 0 or 1. Then, g, h and i are independently 0, 1, 2, 3 or 4, and a sum of g, h and i is 1 or more. Preferred g, h or i is 1 or 2.

Fifth, the preferred component compound will be described. Preferred compound (1) includes compound (1-2), compound (1-5), compound (1-6) and compound (1-7) described above. The first component preferably includes compound (1-2).

Preferred compound (2) includes compound (2-1) to compound (2-21) described above. In the compounds, at least one of the second components preferably includes compound (2-3), compound (2-5), compound (2-6), compound (2-7) or compound (2-9). At least two of the second components preferably includes a combination of compound (2-3) and compound (2-5), a combination of compound (2-3) and compound (2-7), or a combination of compound (2-3) and compound (2-9).

Preferred compound (3) includes compound (3-1) to compound (3-13) described above. In the compounds, at least one of the third components preferably includes compound (3-1), compound (3-3), compound (3-5), compound (3-6) or compound (3-7). At least two of the third components preferably includes a combination of compound (3-1) and compound (3-3), or a combination of compound (3-1) and compound (3-5).

Preferred compound (4) includes compound (4-1) to compound (4-22) described above. In the compounds, at least one of the fourth components preferably includes compound (4-1), compound (4-2), compound (4-3), compound (4-4), compound (4-6), compound (4-7), compound (4-8) or compound (4-10). At least two of the fourth components preferably includes a combination of compound (4-1) and compound (4-4), a combination of compound (4-1) and compound (4-6), a combination of compound (4-1) and compound (4-8), a combination of compound (4-1) and compound (4-10), a combination of compound (4-3) and compound (4-6), a combination of compound (4-3) and compound (4-8), a combination of compound (4-3) and compound (4-10), a combination of compound (4-4) and compound (4-6), a combination of compound (4-4) and compound (4-7), a combination of compound (4-4) and compound (4-8), or a combination of compound (4-4) and compound (4-10).

Preferred compound (5) includes compound (5-1) to compound (5-27) described above. In the compounds, at least one of the additive components preferably includes compound (5-1), compound (5-2), compound (5-24), compound (5-25), compound (5-26) or compound (5-27). At least two of the additive components preferably includes a combination of compound (5-1) and compound (5-2), a combination of compound (5-1) and compound (5-18), a combination of compound (5-2) and compound (5-24), a combination of compound (5-2) and compound (5-25), a combination of compound (5-2) and compound (5-26), a combination of compound (5-25) and compound (5-26), or a combination of compound (5-18) and compound (5-24).

Sixth, the additive that may be added to the composition will be described. Such an additive includes the optically active compound, the antioxidant, the ultraviolet light absorber, the dye, the antifoaming agent, the polymerizable compound, the polymerization initiator and the polymerization inhibitor. The optically active compound is added to the composition for the purpose of inducing helical structure in liquid crystal molecules to give a twist angle. Examples of such a compound include compound (6-1) to compound (6-5) . A preferred proportion of the optically active compound is about 5% by weight or less. A further preferred proportion is in the range of about 0.01% by weight to about 2% by weight.

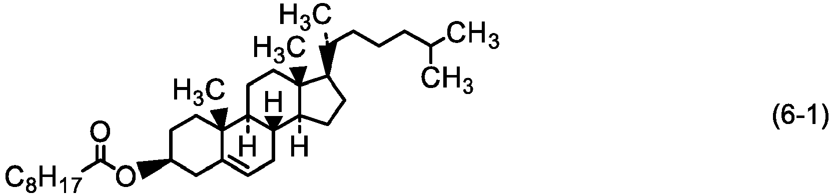

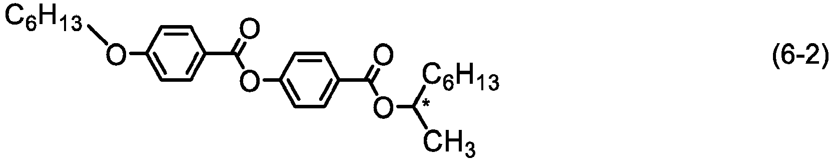

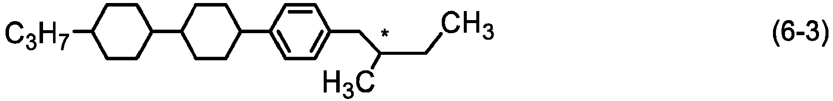

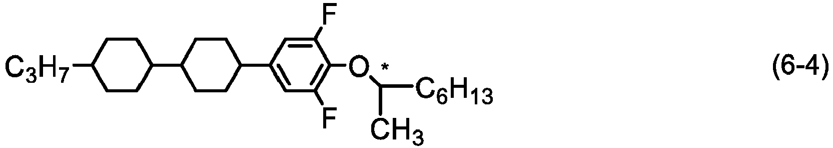

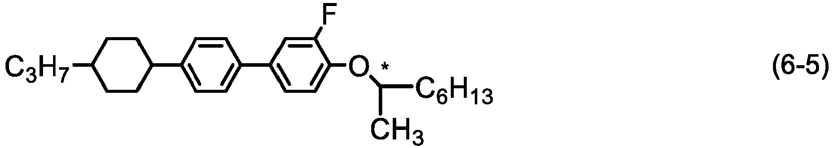

The antioxidant is added to the composition for preventing a decrease in the specific resistance caused by heating in air, or for maintaining a large voltage holding ratio at room temperature and also at a temperature close to the maximum temperature even after the device has been used for a long period of time. Preferred examples of the antioxidant include compound (7) in which n is an integer from 1 to 9.

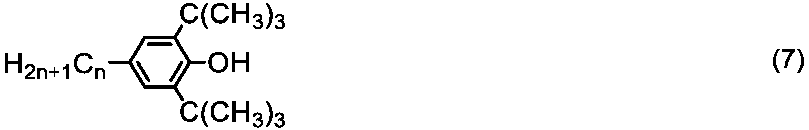

In compound (7), preferred n is 1, 3, 5, 7 or 9. Further preferred n is 7. Compound (7) in which n is 7 is effective in maintaining a large voltage holding ratio at room temperature and also at a temperature close to the maximum temperature even after the device has been used for a long period of time because such compound (7) has small volatility. A preferred proportion of the antioxidant is about 50 ppm or more for achieving an effect thereof, and about 600 ppm or less for avoiding a decrease in the maximum temperature or an increase in the minimum temperature. A further preferred proportion is in the range of about 100 ppm to about 300 ppm.

Preferred examples of the ultraviolet light absorber include a benzophenone derivative, a benzoate derivative and a triazole derivative. A light stabilizer such as an amine having steric hindrance is also preferred. A preferred proportion of the absorber or the stabilizer is about 50 ppm or more for achieving an effect thereof, and about 10,000 ppm or less for avoiding a decrease in the maximum temperature or an increase in the minimum temperature. A further preferred proportion is in the range of about 100 ppm to about 10,000 ppm.

A dichroic dye such as an azo dye or an anthraquinone dye is added to the composition to be adapted for a device having a guest host (GH) mode. A preferred proportion of the dye is in the range of about 0.01% by weight to about 10% by weight. The antifoaming agent such as dimethyl silicone oil or methylphenyl silicone oil is added to the composition for preventing foam formation. A preferred proportion of the antifoaming agent is about 1 ppm or more for achieving an effect thereof, and about 1,000 ppm or less for preventing poor display. A further preferred proportion is in the range of about 1 ppm to about 500 ppm.

The polymerizable compound is used to be adapted for a polymer sustained alignment (PSA) mode device. Compound (5) is suitable for the purpose. Any other polymerizable compound that is different from compound (5) may be added to the composition together with compound (5). In place of compound (5), any other polymerizable compound that is different from compound (5) may be added to the composition. Preferred examples of such a polymerizable compound include a compound such as acrylate, methacrylate, a vinyl compound, a vinyloxy compound, propenyl ether, an epoxy compound (oxirane, oxetane) and vinyl ketone. Further preferred examples include an acrylate derivative or a methacrylate derivative. A preferred proportion of compound (5) is about 10% by weight or more based on the total amount of the polymerizable compound. A further preferred proportion is about 50% by weight or more based thereon. A particularly preferred proportion is about 80% by weight or more based thereon. A most preferred proportion is 100% by weight based thereon.

The polymerizable compound such as compound (5) is polymerized by irradiation with ultraviolet light. The polymerizable compound may be polymerized in the presence of a suitable initiator such as a photopolymerization initiator. Suitable conditions for polymerization, suitable types of the initiator and suitable amounts thereof are known to those skilled in the art and are described in literature. For example, Irgacure 651 (registered trademark; BASF), Irgacure 184 (registered trademark; BASF) or Darocur 1173 (registered trademark; BASF), each being a photopolymerization initiator, is suitable for radical polymerization. A preferred proportion of the photopolymerization initiator is in the range of about 0.1% by weight to about 5% by weight based on the total amount of the polymerizable compound. A further preferred proportion is in the range of about 1% by weight to about 3% by weight based thereon.

Upon storing the polymerizable compound such as compound (5), the polymerization inhibitor may be added thereto for preventing polymerization. The polymerizable compound is ordinarily added to the composition without removing the polymerization inhibitor. Examples of the polymerization inhibitor include hydroquinone, a hydroquinone derivative such as methylhydroquinone, 4-t-butylcatechol, 4-methoxyphenol and phenothiazine.

Seventh, the methods for synthesizing the component compounds will be described. The compounds can be prepared according to known methods. Examples of the synthetic methods are described. Compound (1-1) is prepared according to the method described in JP H9-77692 A. Compound (2-5) is prepared according to a method described in JP 2000-53602 A. Compound (3-1) is prepared according to a method described in JP S59-176221 A. Compound (4-6) is prepared according to a method described in JP H2-503441 A. Compound (5-18) is prepared according to a method described in JP H7-101900 A. The antioxidant is commercially available. A compound in which n in formula (7) is 1 is available from Sigma-Aldrich Corporation. Compound (7) in which n is 7 or the like is prepared according to a method described in US 3660505 B.

Any compounds whose synthetic methods are not described above can be prepared according to methods described in books such as Organic Syntheses (John Wiley & Sons, Inc.), Organic Reactions (John Wiley & Sons, Inc.), Comprehensive Organic Synthesis (Pergamon Press) and New Experimental Chemistry Course (Shin Jikken Kagaku Koza in Japanese) (Maruzen Co., Ltd.). The composition is prepared according to a publicly known method using the thus obtained compounds. For example, the component compounds are mixed and dissolved in each other by heating.

Last, the application of the composition will be described. Most of the compositions have a minimum temperature of about -10°C or lower, a maximum temperature of about 70°C or higher, and optical anisotropy in the range of about 0.07 to about 0.20. A composition having optical anisotropy in the range of about 0.08 to about 0.25 may be prepared by controlling a proportion of the component compounds or by mixing any other liquid crystal compound. Further, a composition having optical anisotropy in the range of about 0.10 to about 0.30 may be prepared according to the method. A device including the composition has large voltage holding ratio. The composition is suitable for use in the AM device. The composition is particularly suitable for use in a transmissive AM device. The composition can be used as the composition having the nematic phase, or as the optically active composition by adding the optically active compound.

The composition can be used in the AM device. The composition can also be used in a PM device. The composition can also be used in an AM device and a PM device each having a mode such as the PC mode, the TN mode, the STN mode, the ECB mode, the OCB mode, the IPS mode, the FFS mode, the VA mode and the FPA mode. Use in the AM device having the TN mode, the OCB mode, the IPS mode or the FFS mode is particularly preferred. In the AM device having the IPS mode or the FFS mode, alignment of liquid crystal molecules when no voltage is applied may be parallel or perpendicular to a glass substrate. The devices may be of a reflective type, a transmissive type or a transflective type. Use in the transmissive device is preferred. The composition can also be used in an amorphous silicon-TFT device or a polycrystal silicon-TFT device. The composition can also be used in a nematic curvilinear aligned phase (NCAP) device prepared by microencapsulating the composition, or a polymer dispersed (PD) device in which a three-dimensional network-polymer is formed in the composition.

### Examples

The invention will be described in greater detail by way of Examples. However, the invention is not limited by the Examples. The invention includes a mixture of a composition in Example 1 and a composition in Example 2. The invention also includes a mixture in which at least two compositions in Examples are mixed. The thus prepared compound was identified by methods such as an NMR analysis. Characteristics of the compound, the composition and a device were measured by methods described below.

NMR analysis: For measurement, DRX-500 made by Bruker BioSpin Corporation was used. In ¹H-NMR measurement, a sample was dissolved in a deuterated solvent such as CDCl₃, and measurement was carried out under conditions of room temperature, 500 MHz and 16 times of accumulation. Tetramethylsilane was used as an internal standard. In ¹⁹F-NMR measurement, CFCl₃ was used as an internal standard, and measurement was carried out under conditions of 24 times of accumulation. In explaining nuclear magnetic resonance spectra obtained, s, d, t, q, quin, sex and m stand for a singlet, a doublet, a triplet, a quartet, a quintet, a sextet and a multiplet, and br being broad, respectively.

Gas chromatographic analysis: For measurement, GC-14B Gas Chromatograph made by Shimadzu Corporation was used. A carrier gas was helium (2 mL per minute). A sample vaporizing chamber and a detector (FID) were set to 280°C and 300°C, respectively. A capillary column DB-1 (length 30 m, bore 0.32 mm, film thickness 0.25 µm; dimethylpolysiloxane as a stationary liquid phase; non-polar) made by Agilent Technologies, Inc. was used for separation of component compounds. After the column was kept at 200°C for 2 minutes, the column was heated to 280°C at a rate of 5°C per minute. A sample was prepared in an acetone solution (0.1% by weight), and then 1 microliter of the solution was injected into the sample vaporizing chamber. A recorder was C-R5A Chromatopac made by Shimadzu Corporation or the equivalent thereof. The resulting gas chromatogram showed a retention time of a peak and a peak area corresponding to each of the component compounds.

As a solvent for diluting the sample, chloroform, hexane or the like may also be used. The following capillary columns may also be used for separating component compounds: HP-1 (length 30 m, bore 0.32 mm, film thickness 0.25 µm) made by Agilent Technologies, Inc., Rtx-1 (length 30 m, bore 0.32 mm, film thickness 0.25 µm) made by Restek Corporation and BP-1 (length 30 m, bore 0.32 mm, film thickness 0.25 µm) made by SGE International Pty. Ltd. A capillary column CBP1-M50-025 (length 50 m, bore 0.25 mm, film thickness 0.25 µm) made by Shimadzu Corporation may also be used for the purpose of preventing an overlap of peaks of the compounds.

A proportion of liquid crystal compounds contained in the composition may be calculated by the method as described below. A mixture of the liquid crystal compounds is detected by gas chromatograph (FID). An area ratio of each peak in the gas chromatogram corresponds to the ratio (weight ratio) of the liquid crystal compounds. When the capillary columns described above were used, a correction coefficient of each of the liquid crystal compounds may be regarded as 1 (one). Accordingly, the proportion (% by weight) of the liquid crystal compounds can be calculated from the area ratio of each peak.

Sample for measurement: When characteristics of the composition and the device were measured, the composition was used as a sample as was. Upon measuring characteristics of a compound, a sample for measurement was prepared by mixing the compound (15% by weight) with a base liquid crystal (85% by weight). Values of characteristics of the compound were calculated, according to an extrapolation method, using values obtained by measurement. (Extrapolated value) = {(measured value of a sample) - 0.85 × (measured value of a base liquid crystal) } / 0.15. When a smectic phase (or crystals) precipitates at the ratio thereof at 25°C, a ratio of the compound to the base liquid crystal was changed step by step in the order of (10% by weight : 90% by weight), (5% by weight : 95% by weight) and (1% by weight : 99% by weight) . Values of maximum temperature, optical anisotropy, viscosity and dielectric anisotropy with regard to the compound were determined according to the extrapolation method.

A base liquid crystal described below was used. A proportion of the component compound was expressed in terms of weight percent (% by weight).

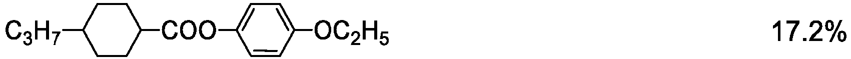

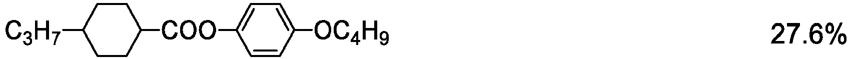

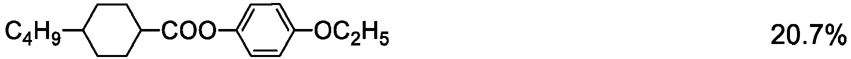

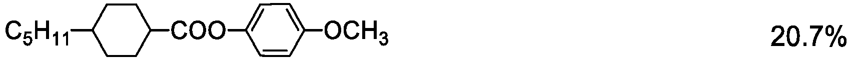

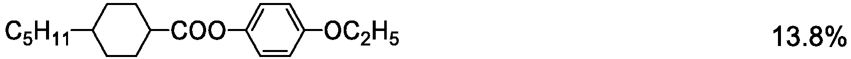

Measuring method: Characteristics were measured according to methods described below. Most of the measuring methods are applied as described in the Standard of Japan Electronics and Information Technology Industries Association (hereinafter abbreviated as JEITA) (JEITA ED-2521B) discussed and established by JEITA, or modified thereon. No thin film transistor (TFT) was attached to a TN device used for measurement.
(1) Maximum temperature of nematic phase (NI; °C): A sample was placed on a hot plate in a melting point apparatus equipped with a polarizing microscope, and heated at a rate of 1°C per minute. Temperature when part of the sample began to change from a nematic phase to an isotropic liquid was measured. A maximum temperature of the nematic phase may be occasionally abbreviated as "maximum temperature."
(2) Minimum temperature of nematic phase (T_{C}; °C): Samples each having a nematic phase were put in glass vials and kept in freezers at temperatures of 0°C, -10°C, -20°C, -30°C and -40°C for 10 days, and then liquid crystal phases were observed. For example, when the sample was maintained in the nematic phase at -20°C and changed to crystals or a smectic phase at -30°C, T_{C} was expressed as T_{C} < -20°C. A minimum temperature of the nematic phase may be occasionally abbreviated as "minimum temperature."
(3) Viscosity (bulk viscosity; η; measured at 20°C; mPa·s): For measurement, a cone-plate (E type) rotational viscometer made by Tokyo Keiki Inc. was used.
(4) Viscosity (rotational viscosity; γ1; measured at 25°C; mPa·s): Measurement was carried out according to a method described in M. Imai et al., Molecular Crystals and Liquid Crystals, Vol. 259, p. 37 (1995). A sample was put in a VA device in which a distance (cell gap) between two glass substrates was 20 micrometers. Voltage was applied stepwise to the device in the range of 39 V to 50 V at an increment of 1 V. After a period of 0.2 second with no voltage application, voltage was repeatedly applied under conditions of only one rectangular wave (rectangular pulse; 0.2 second) and no voltage application (2 seconds). A peak current and a peak time of transient current generated by the applied voltage were measured. A value of rotational viscosity was obtained from the measured values and calculation equation (8) on page 40 of the paper presented by M. Imai et al. Dielectric anisotropy required for the calculation was measured according to section (6).
(5) Optical anisotropy (refractive index anisotropy; Δn; measured at 25°C): Measurement was carried out by an Abbe refractometer with a polarizing plate mounted on an ocular, using light at a wavelength of 589 nanometers. A surface of a main prism was rubbed in one direction, and then a sample was added dropwise onto the main prism. A refractive index (n∥) was measured when a direction of polarized light was parallel to a direction of rubbing. A refractive index (n⊥) was measured when the direction of polarized light was perpendicular to the direction of rubbing. A value of optical anisotropy was calculated from an equation: Δn = n∥ - n⊥.
(6) Dielectric anisotropy (Δε; measured at 25°C): A value of dielectric anisotropy was calculated from an equation: Δε = ε∥ - ε⊥. A dielectric constant (ε∥ and ε⊥) was measured as described below.
   (1) Measurement of dielectric constant (ε∥) : An ethanol (20 mL) solution of octadecyltriethoxysilane (0.16 mL) was applied to a well-cleaned glass substrate. After rotating the glass substrate with a spinner, the glass substrate was heated at 150°C for 1 hour. A sample was put in a VA device in which a distance (cell gap) between two glass substrates was 4 micrometers, and the device was sealed with an ultraviolet-curable adhesive. Sine waves (0.5 V, 1 kHz) were applied to the device, and after 2 seconds, a dielectric constant (ε∥) of liquid crystal molecules in a major axis direction was measured.
   (2) Measurement of dielectric constant (ε⊥): A polyimide solution was applied to a well-cleaned glass substrate. After calcining the glass substrate, rubbing treatment was applied to the alignment film obtained. A sample was put in a TN device in which a distance (cell gap) between two glass substrates was 9 micrometers and a twist angle was 80 degrees. Sine waves (0.5 V, 1 kHz) were applied to the device, and after 2 seconds, a dielectric constant (ε⊥) of liquid crystal molecules in a minor axis direction was measured.
(7) Threshold voltage (Vth; measured at 25°C; V): For measurement, an LCD-5100 luminance meter made by Otsuka Electronics Co., Ltd. was used. A light source was a halogen lamp. A sample was put in a normally black mode VA device in which a distance (cell gap) between two glass substrates was 4 micrometers and a rubbing direction was anti-parallel, and the device was sealed with an ultraviolet-curable adhesive. A voltage (60 Hz, rectangular waves) to be applied to the device was stepwise increased from 0 V to 20 V at an increment of 0.02 V. On the occasion, the device was irradiated with light from a direction perpendicular to the device, and an amount of light transmitted through the device was measured. A voltage-transmittance curve was prepared, in which the maximum amount of light corresponds to 100% transmittance and the minimum amount of light corresponds to 0% transmittance. A threshold voltage is expressed in terms of voltage at 10% transmittance.
(8) Voltage holding ratio (VHR-1; measured at 25°C; %): A TN device used for measurement had a polyimide alignment film, and a distance (cell gap) between two glass substrates was 5 micrometers. A sample was put in the device, and then the device was sealed with an ultraviolet-curable adhesive. A pulse voltage (60 microseconds at 5 V) was applied to the TN device and the device was charged. A decaying voltage was measured for 16.7 milliseconds with a high-speed voltmeter, and area A between a voltage curve and a horizontal axis in a unit cycle was determined. Area B is an area without decay. A voltage holding ratio is expressed in terms of a percentage of area A to area B.
(9) Voltage holding ratio (VHR-2; measured at 80°C; %): A voltage holding ratio was measured according to procedures identical with the procedures described above except that measurement was carried out at 80°C in place of 25°C. The thus obtained value was expressed in terms of VHR-2.
(10) Voltage holding ratio (VHR-3; measured at 25°C; %): Stability to ultraviolet light was evaluated by measuring a voltage holding ratio after a device was irradiated with ultraviolet light. A TN device used for measurement had a polyimide alignment film, and a cell gap was 5 micrometers. A sample was injected into the device, and the device was irradiated with light for 20 minutes. A light source was an ultra high-pressure mercury lamp USH-500D (made by Ushio, Inc.), and a distance between the device and the light source was 20 centimeters. In measurement of VHR-3, a decaying voltage was measured for 16.7 milliseconds. A composition having large VHR-3 has large stability to ultraviolet light. A value of VHR-3 is preferably 90% or more, and further preferably 95% or more.
(11) Voltage holding ratio (VHR-4; measured at 25°C; %): Stability to heat was evaluated by measuring a voltage holding ratio after a TN device into which a sample was injected was heated in a constant-temperature bath at 80°C for 500 hours. In measurement of VHR-4, a decaying voltage was measured for 16.7 milliseconds. A composition having large VHR-4 has large stability to heat.
(12) Response time (τ; measured at 25°C; ms) : For measurement, an LCD-5100 luminance meter made by Otsuka Electronics Co., Ltd. was used. A light source was a halogen lamp. A low-pass filter was set to 5 kHz. A sample was put in a normally black mode VA device in which a distance (cell gap) between two glass substrates was 4 micrometers and a rubbing direction was anti-parallel. The device was sealed with an ultraviolet-curable adhesive. A voltage (rectangular waves; 60 Hz, 10 V, 0.5 second) was applied to the device. On the occasion, the device was irradiated with light from a direction perpendicular to the device, and an amount of light transmitted through the device was measured. The maximum amount of light corresponds to 100% transmittance, and the minimum amount of light corresponds to 0% transmittance. A response time was expressed in terms of time required for a change from 90% transmittance to 10% transmittance (fall time; millisecond).
(13) Specific resistance (ρ; measured at 25°C; Qcm): Into a vessel equipped with electrodes, 1.0 milliliter of sample was injected. A direct current voltage (10 V) was applied to the vessel, and a direct current after 10 seconds was measured. Specific resistance was calculated from the following equation: (specific resistance) = {(voltage) × (electric capacity of a vessel) } / { (direct current) × (dielectric constant of vacuum)}.

The compounds in Examples were represented using symbols according to definitions in Table 3 described below. In Table 3, a configuration of 1,4-cyclohexylene is trans. A parenthesized number next to a symbolized compound corresponds to the number of the compound. A symbol (-) means any other liquid crystal compound. A proportion (percentage) of the liquid crystal compound is expressed in terms of weight percent (% by weight) based on the total amount of the liquid crystal composition. Values of the characteristics of the composition are summarized in a last part.

| Table 3. Method for description of compounds using symbols | | | |
|---|---|---|---|
| R -(A₁)-Z₁-·····-Zₙ-(Aₙ)-R' | | | |
| 1) Left-terminal group R- | Symbol | 4) Ring -Aₙ- | Symbol |
| F-CₙH₂ₙ- | Fn- | 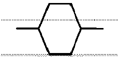 | H |
| CₙH₂ₙ₊₁- | n- | | |
| CₙH₂ₙ₊₁O- | nO- | 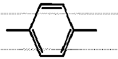 | B |
| CₘH₂ₘ₊₁OCₙH₂ₙ- | mOn- | | |
| CH₂=CH- | V- | 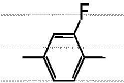 | B(F) |
| CₙH₂ₙ₊₁-CH=CH- | nV- | | |
| CH₂=CH-CₙH₂ₙ- | Vn- | | |
| CₘH₂ₘ₊₁-CH=CH-CₙH₂ₙ- | mVn- | 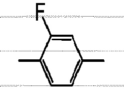 | B(2F) |
| CF₂=CH- | VFF- | | |
| CF₂=CH-CₙH₂ₙ- | VFFn- | | |
| CH₂=CH-COO- | AC- | 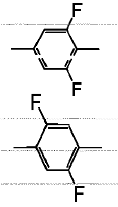 | B(F,F) |
| CH₂=C(CH₃)-COO- | MAC- | | |
| 2) Right-terminal group -R' | Symbol | | |
| -CₙH₂ₙ₊₁ | -n | | B(2F,5F) |
| -OCₙH₂ₙ₊₁ | -On | | |
| -CH=CH₂ | -V | | |
| -CH=CH-CₙH₂ₙ₊₁ | -Vn | | |
| -CₙH₂ₙ-CH=CH₂ | -nV | 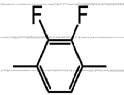 | B(2F,3F) |
| -CₘH₂ₘ-CH=CH-CₙH₂ₙ₊₁ | -mVn | | |
| -CH=CF₂ | -VFF | | |
| -OCO-CH=CH₂ | -AC | 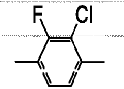 | B(2F,3CL) |
| -OCO-C(CH₃)=CH₂ | -MAC | | |
| 3) Bonding group -Zₙ- | Symbol | | |
| -CₙH₂ₙ- | n | 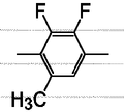 | B(2F,3F,6Me) |
| -COO- | E | | |
| -CH=CH- | V | | |
| -CH=CHO- | VO | 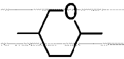 | dh |
| -OCH=CH- | OV | | |
| -CH₂O- | 1O | 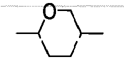 | Dh |
| -OCH₂- | O1 | | |
| 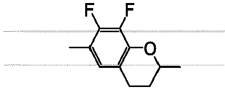 | C ro (7F,8F) | 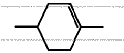 | ch |
| 5) Examples of description | | | |
| Example 1. V-HH-V1 | | Example 2. V_{2-BB}(₂F,3F)-O2 | |
| 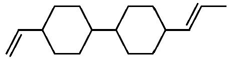 | | 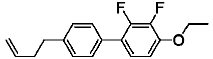 | |
| Example 3. V-HHB-1 | | Example 4. 3-HDhB(2F,3F)-O2 | |
| 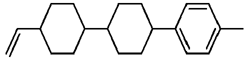 | | 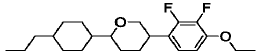 | |

### Comparative Example 1

Example 4 was selected from the compositions disclosed in JP H11-140447 A. The basis thereof is that the composition contains compound (1-2), compound (4-1) and compound (4-6). Components and characteristics of the composition were as described below.

| | | |
|---|---|---|
| V-HH-V1 | (1-2) | 24% |
| 3-HB(2F,3F)-O2 | (4-1) | 12% |
| 5-HB(2F,3F)-O2 | (4-1) | 12% |
| 3-HHB(2F,3F)-O2 | (4-6) | 14% |
| 5-HHB(2F,3F)-O2 | (4-6) | 13% |
| 2-HHB(2F,3F)-1 | (4-6) | 13% |
| 3-HHB(2F,3F)-1 | (4-6) | 12% |

NI = 88.5°C; Tc < -20°C; γ1 = 156.0 mPa·s; Δn = 0.090; Δε = -4.0; Vth = 2.31 V.

### Example 1

For comparison, a composition in which compound (2) similar thereto was used in place of the fourth component in Comparative Example 1 was taken as Example 1. Components and characteristics of the composition were as described below.

| | | |
|---|---|---|
| V-HH-V1 | (1-2) | 24% |
| 3-HB(2F,3F)-O2 | (4-1) | 12% |
| 5-HB(2F,3F)-O2 | (4-1) | 12% |
| V-HHB (2F,3F)-O2 | (2-5) | 14% |
| 5-HHB(2F,3F)-O2 | (4-6) | 13% |
| V-HHB (2F,3F)-1 | (2-5) | 13% |
| 3-HHB(2F,3F)-1 | (4-6) | 12% |

NI = 87.2°C; Tc < -20°C; γ1 = 123.3 mPa·s; Δn = 0.091; Δε = -4.1; Vth = 2.20 V.

### Comparative Example 2

Example 2 was selected from the compositions disclosed in JP 2011-89013 A. The basis thereof is that the composition contains compound (1-1), compound (1-2), compound (1-3), compound (1-5), compound (4-2), compound (4-8) and compound (4-10). Components and characteristics of the composition were as described below.

| | | |
|---|---|---|
| 3-H2B(2F,3F)-O2 | (4-2) | 13% |
| 5-H2B(2F,3F)-O2 | (4-2) | 13% |
| 3-HH1OB(2F,3F)-O2 | (4-8) | 10% |
| 3-HBB(2F,3F)-O2 | (4-10) | 14% |
| 5-HBB(2F,3F)-O2 | (4-10) | 10% |
| V-HH-V | (1-1) | 10% |
| V-HH-V1 | (1-2) | 7% |
| 1V-HH-V1 | (1-5) | 5% |
| V-HH-2V | (1-3) | 18% |

NI = 72.3°C; Tc < -20°C; Δn = 0.095; η = 15.4 mPa·s; Δε = -3.2; Vth = 2.09 V; τ = 9.5 ms; VHR-1 = 99.0%; VHR-2 = 98.0%; VHR-3 = 98.1%.

In addition, γ1 was measured according to a method described in the invention, resulted in 85.3 mPa·s.

### Example 2

For comparison, a composition in which compound (2) similar thereto was used in place of the fourth component in Comparative Example 2 was taken as Example 2. Components and characteristics of the composition were as described below.

| | | |
|---|---|---|
| V2-H2B (2F,3F)-O2 | (2-1) | 10% |
| 1V2-H2B(2F,3F)-O2 | (2-1) | 3% |
| 5-H2B(2F,3F)-O2 | (4-2) | 13% |
| V-HH1OB(2F,3F)-O2 | (2-7) | 5% |
| V2-HH1OB (2F,3F)-O2 | (2-7) | 5% |
| V-HBB(2F,3F)-O2 | (2-9) | 8% |
| V2-HBB (2F,3F)-O2 | (2-9) | 6% |
| 5-HBB(2F,3F)-O2 | (4-10) | 10% |
| V-HH-V | (1-1) | 10% |
| V-HH-V1 | (1-2) | 7% |
| 1V-HH-V1 | (1-5) | 5% |
| V-HH-2V | (1-3) | 18% |

NI = 70.7°C; Tc < -20°C; γ1 = 77.9 mPa·s; Δn = 0.096; Δε = -3.2; Vth = 1.94 V.

### Example 3

| | | |
|---|---|---|
| V-HH-V | (1-1) | 24% |
| V-HH-V1 | (1-2) | 20% |
| V2-BB(2F,3F)-O2 | (2-3) | 8% |
| V-HHB (2F,3F)-O2 | (2-5) | 7% |
| V-HHB (2F,3F)-O4 | (2-5) | 4% |
| V-HBB(2F,3F)-O2 | (2-9) | 7% |
| V-HBB(2F,3F)-O4 | (2-9) | 6% |
| 3-HB(2F,3F)-O2 | (4-1) | 5% |
| 3-HHB(2F,3F)-O2 | (4-6) | 6% |
| 2-BB(2F,3F)B-3 | (4-9) | 5% |
| 2-HBB(2F,3F)-O2 | (4-10) | 2% |
| 3-HBB(2F,3F)-O2 | (4-10) | 6% |

NI = 73.5°C; Tc < -20°C; γ1 = 63.0 mPa·s; Δn = 0.106; Δε = -2.7; Vth = 2.34 V.

### Example 4 (not according to the invention)

| | | |
|---|---|---|
| V-HH-V | (1-1) | 28% |
| 1V2-HH-2V1 | (1-10) | 4% |
| V2-BB(2F,3F)-O2 | (2-3) | 9 % |
| V-HHB (2F,3F)-O2 | (2-5) | 6% |
| V-HHB (2F,3F)-O4 | (2-5) | 6% |
| V2-HHB (2F,3F)-O2 | (2-5) | 6% |
| 2-HH-3 | (3-1) | 3% |
| 1-BB-3 | (3-3) | 3% |
| V-HHB-1 | (3-5) | 5 % |
| V-HBB-2 | (3-6) | 5% |
| V2-BB2B-1 | (3-9) | 3% |
| 3-BB(2F,3F)-O2 | (4-4) | 8% |
| 2-HHB(2F,3F)-O2 | (4-6) | 4% |
| 5-HHB(2F,3F)-O2 | (4-6) | 7% |
| 3-HHB(2F,3F)-1 | (4-6) | 3% |

NI = 71.4°C; Tc < -20°C; γ1 = 61.1 mPa·s; Δn = 0.101; Δε = -2.4; Vth = 2.48 V.

### Example 5 (not according to the invention)

| | | |
|---|---|---|
| V-HH-V | (1-1) | 20% |
| V-HH-2V1 | (1-4) | 10% |
| V2-HH-2V | (1-8) | 4% |
| V-H10B (2F,3F)-O2 | (2-2) | 5% |
| V2-HHB (2F,3F)-O2 | (2-5) | 3% |
| V-HH2B (2F,3F)-O2 | (2-6) | 4% |
| V-HH2B (2F,3F)-O4 | (2-6) | 4% |
| V2-BB(2F,3F)B-1 | (2-8) | 5% |
| V-HchB(2F,3F)-O2 | (2-18) | 3% |
| 3-HH-4 | (3-1) | 6% |
| 7-HB-1 | (3-2) | 3% |
| V2-HHB-1 | (3-5) | 3% |
| 3-HHEBH-3 | (3-11) | 3% |
| 3-H2B(2F,3F)-O2 | (4-2) | 4% |
| 5-H2B(2F,3F)-O2 | (4-2) | 6% |
| 5-BB(2F,3F)-O2 | (4-4) | 3% |
| 3-HH2B(2F,3F)-O2 | (4-7) | 3% |
| 2-HBB(2F,3F)-O2 | (4-10) | 3% |
| 4-HBB(2F,3F)-O2 | (4-10) | 5% |
| 3-HHB(2F,3CL)-O2 | (4-12) | 3% |

NI = 73.1°C; Tc < -20°C; γ1 = 61.5 mPa·s; Δn = 0.089; Δε = -2.4; Vth = 2.48 V.

### Example 6

| | | |
|---|---|---|
| V-HH-V | (1-1) | 26% |
| V-HH-V1 | (1-2) | 14% |
| 1V-HH-V1 | (1-5) | 5% |
| 1V2-HH-2V1 | (1-10) | 5% |
| V2-H2B(2F,3F)-O2 | (2-1) | 5% |
| V2-BB(2F,3F)-O2 | (2-3) | 8% |
| V-HHB (2F,3F)-O1 | (2-5) | 6% |
| V-HHB (2F,3F)-O2 | (2-5) | 7% |
| V-HHB (2F,3F)-O4 | (2-5) | 4% |
| V2-BB(2F,3F)B-1 | (2-8) | 4% |
| V2-HBB (2F,3F)-O2 | (2-9) | 3% |
| V-HBB(2F,3F)-O2 | (2-9) | 7% |
| V-HBB(2F,3F)-O4 | (2-9) | 6% |

NI = 71.5°C; Tc < -20°C; γ1 = 51.5 mPa·s; Δn = 0.102; Δε = -2.3; Vth = 2.49 V.

### Example 7

| | | |
|---|---|---|
| V-HH-V | (1-1) | 32% |
| 1V-HH-V1 | (1-5) | 4% |
| 1V2-HH-2V1 | (1-10) | 3% |
| V2-BB(2F,3F)-O2 | (2-3) | 5% |
| V-HHB (2F,3F)-O2 | (2-5) | 6% |
| 1V-HHB(2F,3F)-O2 | (2-5) | 3% |
| V2-HBB (2F,3F)-O2 | (2-9) | 6% |
| V-HDhB(2F,3F)-O2 | (2-15) | 4% |
| 3-HH-4 | (3-1) | 6% |
| 3-HHEH-3 | (3-4) | 3% |
| V2-BB2B-1 | (3-9) | 3% |
| 5-H2B(2F,3F)-O2 | (4-2) | 3% |
| 2-BB(2F,3F)-O2 | (4-4) | 3 % |
| 3-HH2B(2F,3F)-O2 | (4-7) | 2 % |
| 5-HH2B(2F,3F)-O2 | (4-7) | 6 % |
| 2-HBB(2F,3F)-O2 | (4-10) | 5% |
| 3-HDhB(2F,3F)-O2 | (4-16) | 4% |
| 3-B(2F)B(2F,3F)-O2 | (4-22) | 2% |

NI = 73.6°C; Tc < -20°C; γ1 = 60.8 mPa·s; Δn = 0.092; Δε = -2.7; Vth = 2.32 V.

### Example 8 (not according to the invention)

| | | |
|---|---|---|
| V-HH-V | (1-1) | 20% |
| V-HH-2V1 | (1-4) | 8% |
| V2-HH-2V | (1-8) | 5% |
| V2-BB(2F,3F)-O2 | (2-3) | 4% |
| 1V2-BB(2F,3F)-O2 | (2-3) | 5% |
| V-HHB (2F,3F)-O2 | (2-5) | 7% |
| V-HHB (2F,3F)-O4 | (2-5) | 4% |
| V-HBB(2F,3F)-O2 | (2-9) | 5% |
| V-dhBB(2F,3F)-O2 | (2-16) | 3% |
| 3-HH-V | (3-1) | 18% |
| 2O-BB(2F,3F)-O2 | (4-4) | 4% |
| 3-HHB(2F,3F)-O2 | (4-6) | 6% |
| 2-BB(2F,3F)B-3 | (4-9) | 5% |
| 2-HBB(2F,3F)-O2 | (4-10) | 3% |
| 3-BB(F)B(2F,3F)-O2 | (4-21) | 3% |

NI = 70.9°C; Tc < -20°C; γ1 = 51.4 mPa·s; Δn = 0.104; Δε = -2.6; Vth = 2.36 V.

### Example 9

| | | |
|---|---|---|
| V-HH-V | (1-1) | 24% |
| V-HH-V1 | (1-2) | 12% |
| 1V-HH-2V | (1-6) | 3% |
| V2-HH-2V1 | (1-9) | 3% |
| V2-BB(2F,3F)-O2 | (2-3) | 8% |
| V-HHB(2F,3F)-O2 | (2-5) | 8% |
| V-HHB(2F,3F)-O4 | (2-5) | 3% |
| V-HBB(2F,3F)-O2 | (2-9) | 6% |
| V-HBB(2F,3F)-O4 | (2-9) | 3% |
| V2-dhBB (2F,3F)-O2 | (2-16) | 3% |
| 4-HH-V | (3-1) | 3% |
| 3-HHB-1 | (3-5) | 3% |
| V-HHB-1 | (3-5) | 3% |
| 3-HB(2F,3F)-O2 | (4-1) | 3% |
| 3-B(2F,3F)B(2F,3F)-O2 | (4-5) | 3% |
| 2-BB(2F,3F)B-3 | (4-9) | 4% |
| 2-HBB(2F,3F)-O2 | (4-10) | 2% |
| 3-HBB(2F,3F)-O2 | (4-10) | 3% |
| 5-BB(2F)B(2F,3F)-O2 | (4-20) | 3% |

NI = 70.7°C; Tc < -20°C; γ1 = 62.3 mPa·s; Δn = 0.106; Δε = -2.5; Vth = 2.43 V.

### Example 10

| | | |
|---|---|---|
| V-HH-V | (1-1) | 22% |
| V-HH-2V1 | (1-4) | 15% |
| 1V-HH-2V1 | (1-7) | 8% |
| V2-BB(2F,3F)-O2 | (2-3) | 5% |
| V-HHB(2F,3F)-O2 | (2-5) | 7% |
| V-HHB(2F,3F)-O4 | (2-5) | 4% |
| V-HBB(2F,3F)-O2 | (2-9) | 6% |
| V-HBB(2F,3F)-O4 | (2-9) | 3% |
| V-chB(2F,3F)-O2 | (2-17) | 3% |
| 5-HH-V | (3-1) | 3% |
| 3-HBB-2 | (3-6) | 3% |
| 5-HB(2F,3F)-O2 | (4-1) | 6% |
| 3-HH1OB(2F,3F)-O2 | (4-8) | 9% |
| 2-BB(2F,3F)B-4 | (4-9) | 3% |
| 2-HchB(2F,3F)-O2 | (4-19) | 3% |

NI = 73.9°C; Tc < -20°C; γ1 = 61.2 mPa·s; Δn = 0.097; Δε = -2.4; Vth = 2.46 V.

### Example 11

| | | |
|---|---|---|
| V-HH-V | (1-1) | 25% |
| V-HH-V1 | (1-2) | 10% |
| 1V-HH-V1 | (1-5) | 5% |
| V2-BB(2F,3F)-O2 | (2-3) | 8 % |
| V-HHB (2F,3F)-O2 | (2-5) | 7% |
| V-HHB (2F,3F)-O4 | (2-5) | 4% |
| V-HH1OB(2F,3F)-O2 | (2-7) | 3% |
| V-HBB(2F,3F)-O2 | (2-9) | 5% |
| 3-HH-V1 | (3-1) | 3% |
| 1-BB(F)B-2V | (3-7) | 3% |
| 5-HB(2F,3F)-O2 | (4-1) | 3% |
| 3-HHB(2F,3F)-O2 | (4-6) | 5% |
| 5-HH2B(2F,3F)-O2 | (4-7) | 3% |
| 2-BB(2F,3F)B-3 | (4-9) | 6% |
| 2-HBB(2F,3F)-O2 | (4-10) | 3% |
| 3-HBB(2F,3F)-O2 | (4-10) | 4% |
| 3-chB(2F,3F)-O2 | (4-18) | 3% |

NI = 74.8°C; Tc < -20°C; γ1 = 60.4 mPa·s; Δn = 0.108; Δε = -2.7; Vth = 2.31 V.

### Example 12

| | | |
|---|---|---|
| V-HH-V | (1-1) | 25% |
| V-HH-V1 | (1-2) | 5 % |
| V-HH-2V | (1-3) | 10% |
| V2-H2B(2F,3F)-O2 | (2-1) | 3 % |
| V-H10B (2F,3F)-O2 | (2-2) | 5 % |
| V2-BB(2F,3F)-O2 | (2-3) | 5% |
| 1V2-BB(2F,3F)-O2 | (2-3) | 3% |
| V-HHB (2F,3F)-O1 | (2-5) | 4% |
| V-HHB (2F,3F)-O2 | (2-5) | 7% |
| V2-HBB (2F,3F)-O2 | (2-9) | 6% |
| V-HBB(2F,3F)-O2 | (2-9) | 3% |
| 1V-HHB(2F,3CL)-O2 | (2-11) | 3% |
| 3-HH-VFF | (3-1) | 3% |
| 5-B(F)BB-3 | (3-8) | 3% |
| 5-HH2B(2F,3F)-O2 | (4-7) | 8% |
| 2-BB(2F,3F)B-3 | (4-9) | 5% |
| 5-HBBH-101 | (-) | 2% |

NI = 71.5°C; Tc < -20°C; γ1 = 62.5 mPa·s; Δn = 0.101; Δε = -2.6; Vth = 2.37 V.

### Example 13

| | | |
|---|---|---|
| V-HH-V1 | (1-2) | 36% |
| 1V2-HH-2V1 | (1-10) | 3% |
| V2-BB(2F,3F)-O2 | (2-3) | 7% |
| 1V2-BB(2F,3F)-O2 | (2-3) | 4% |
| 1V-HH1OB(2F,3F)-O2 | (2-7) | 5% |
| V2-HBB (2F,3F)-O2 | (2-9) | 4% |
| 1V-HHB(2F,3CL)-O2 | (2-11) | 3% |
| 1-HH-2V1 | (3-1) | 3% |
| 1-BB2B-2V | (3-9) | 5% |
| 5-H2B(2F,3F)-O2 | (4-2) | 6% |
| 3-H1OB(2F,3F)-O2 | (4-3) | 5% |
| 3-HH2B(2F,3F)-O2 | (4-7) | 2% |
| 5-HH2B(2F,3F)-O2 | (4-7) | 6% |
| 3-HH1OB(2F,3F)-O2 | (4-8) | 3% |
| 2-BB(2F,3F)B-3 | (4-9) | 5% |
| 5-HDhB(2F,3F)-O2 | (4-16) | 3% |

NI = 74.1°C; Tc < -20°C; γ1 = 60.6 mPa·s; Δn = 0.106; Δε = -2.2; Vth = 2.53 V.

### Example 14

| | | |
|---|---|---|
| V-HH-V | (1-1) | 16% |
| V-HH-V1 | (1-2) | 27% |
| V2-BB (2F, 3F) -O2 | (2-3) | 10% |
| 1V2-BB(2F, 3F)-O2 | (2-3) | 2% |
| V-HHB (2F, 3F)-O2 | (2-5) | 8 % |
| V-HHB (2F, 3F)-O4 | (2-5) | 3% |
| V-HBB (2F, 3F)-O2 | (2-9) | 6% |
| V-HBB(2F, 3F)-O4 | (2-9) | 3% |
| V2-HHB(2F, 3CL)-O2 | (2-11) | 3% |
| 3-HH-V | (3-1) | 5% |
| 3-HB-O2 | (3-2) | 3% |
| 3-HB(F)HH-2 | (3-10) | 3% |
| 2-HH1OB(2F, 3F)-O2 | (4-8) | 3% |
| 2-HBB(2F, 3F)-O2 | (4-10) | 2% |
| 3-HH1OCro(7F, 8F)-5 | (4-15) | 3% |
| 3-dhBB(2F, 3F)-O2 | (4-17) | 3% |

NI = 72.9°C; Tc < -20°C; γ1 = 62.2 mPa·s; Δn = 0.095; Δε = -2.3; Vth = 2.48 V.

### Example 15

| | | |
|---|---|---|
| V-HH-V | (1-1) | 23% |
| V-HH-V1 | (1-2) | 21% |
| V-H10B (2F, 3F)-O4 | (2-2) | 3 % |
| V2-BB (2F, 3F) -O2 | (2-3) | 3 % |
| 1V2-BB(2F, 3F)-O2 | (2-3) | 2% |
| V-HHB (2F, 3F)-O2 | (2-5) | 5% |
| V-HHB (2F, 3F)-O4 | (2-5) | 3% |
| V-HH2B (2F, 3F)-O2 | (2-6) | 4% |
| V2-HBB (2F, 3F) -O2 | (2-9) | 8 % |
| V-HBB(2F, 3F)-O2 | (2-9) | 2% |
| 1-BB-5 | (3-3) | 3% |
| 5-HB(F)BH-3 | (3-12) | 3% |
| 3-HB(2F, 3F)-O4 | (4-1) | 3% |
| 3-HH2B(2F, 3F)-O2 | (4-7) | 4% |
| 5-HH2B(2F, 3F)-O2 | (4-7) | 4% |
| 5-HBB(2F, 3F)-O2 | (4-10) | 6% |
| 3-H1OCro(7F, 8F)-5 | (4-14) | 3% |

NI = 73.7°C; Tc < -20°C; γ1 = 62.0 mPa·s; Δn = 0.095; Δε = -2.5; Vth = 2.44 V.

### Example 16

| | | |
|---|---|---|
| V-HH-V1 | (1-2) | 21% |
| V-HH-2V | (1-3) | 11% |
| 1V-HH-V1 | (1-5) | 6% |
| 1V-HH-2V1 | (1-7) | 4% |
| V2-H1OB(2F, 3F)-O4 | (2-2) | 4% |
| 1V2-BB(2F, 3F)-O2 | (2-3) | 3% |
| V-HHB (2F, 3F)-O2 | (2-5) | 8% |
| 1V-HHB(2F, 3F)-O2 | (2-5) | 2% |
| V-HH2B (2F, 3F)-O2 | (2-6) | 5% |
| V-HBB(2F, 3F)-O2 | (2-9) | 2% |
| V2-BB-1 | (3-3) | 5% |
| 5-B(F)BB-2 | (3-8) | 3% |
| 3-HB(2F, 3F)-O2 | (4-1) | 4% |
| 3-H2B(2F, 3F)-O2 | (4-2) | 3% |
| 3-H1OB(2F, 3F)-O2 | (4-3) | 6% |
| 2-HHB(2F, 3F)-O2 | (4-6) | 3% |
| 3-HHB(2F, 3F)-O2 | (4-6) | 5% |
| 3-HH2B(2F, 3F)-O2 | (4-7) | 2% |
| 5-HBB(2F, 3CL)-O2 | (4-13) | 3% |

NI = 71.9°C; Tc < -20°C; γ1 = 60.1 mPa·s; Δn = 0.098; Δε = -2.3; Vth = 2.49 V.

### Example 17

| | | |
|---|---|---|
| V-HH-V | (1-1) | 30% |
| V-HH-2V1 | (1-4) | 5% |
| 1V-HH-2V | (1-6) | 8% |
| V-H1OB(2F, 3F)-O4 | (2-2) | 4% |
| 1V2-BB(2F, 3F)-O2 | (2-3) | 4% |
| V2-HHB(2F, 3F)-O2 | (2-5) | 7% |
| V2-HBB(2F, 3F)-O2 | (2-9) | 6% |
| V-HBB(2F, 3F)-O2 | (2-9) | 4% |
| 1V2-BB-1 | (3-3) | 3% |
| 3-HHB-3 | (3-5) | 3% |
| 5-HBB(F)B-3 | (3-13) | 2% |
| 3-H1OB(2F, 3F)-O2 | (4-3) | 3% |
| 3-BB(2F, 3F)-O2 | (4-4) | 6% |
| 2-HH1OB(2F, 3F)-O2 | (4-8) | 3% |
| 2-HBB(2F, 3F)-O2 | (4-10) | 4% |
| 5-HBB(2F, 3F)-O2 | (4-10) | 5% |
| 3-HBB(2F, 3CL)-O2 | (4-13) | 3% |

NI = 71.1°C; Tc < -20°C; γ1 = 61.8 mPa·s; Δn = 0.105; Δε = -2.8; Vth = 2.28 V.

### Example 18

| | | |
|---|---|---|
| V-HH-V | (1-1) | 24% |
| V-HH-V1 | (1-2) | 20% |
| V2-BB(2F,3F)-O2 | (2-3) | 8% |
| V-HHB(2F,3F)-O2 | (2-5) | 7% |
| V-HHB(2F,3F)-O4 | (2-5) | 3% |
| V-HBB(2F,3F)-O2 | (2-9) | 5% |
| V-HBB(2F,3F)-O4 | (2-9) | 4% |
| V-HHB(2F,3CL)-O2 | (2-11) | 3% |
| 3-HH-2V1 | (3-1) | 3% |
| 2-BB(F)B-3 | (3-7) | 3 % |
| 3-HB(2F,3F)-O2 | (4-1) | 5 % |
| 3-HHB(2F,3F)-O2 | (4-6) | 4 % |
| 2-BB(2F,3F)B-3 | (4-9) | 5% |
| 2-HBB(2F,3F)-O2 | (4-10) | 3% |
| 3-HEB(2F,3F)B(2F,3F)-O2 | (4-11) | 3% |

NI = 70.3°C; Tc < -20°C; γ1 = 59.7 mPa·s; Δn = 0.105; Δε = -2.4; Vth = 2.48 V.

### Example 19

| | | |
|---|---|---|
| V-HH-V | (1-1) | 24% |
| V-HH-V1 | (1-2) | 15% |
| V2-HH-2V1 | (1-9) | 7 % |
| V2-BB (2F, 3F) -O2 | (2-3) | 8% |
| V-HHB (2F, 3F)-O2 | (2-5) | 4% |
| 1V2-HHB(2F, 3F)-O2 | (2-5) | 3% |
| V-HBB (2F, 3F)-O2 | (2-9) | 7% |
| V-HBB(2F, 3F)-O4 | (2-9) | 5% |
| 2-HH-5 | (3-1) | 3% |
| 3-HHB-O1 | (3-5) | 3% |
| 5-HB (2F, 3F)-O2 | (4-1) | 3% |
| 3-HHB(2F, 3F)-O2 | (4-6) | 6% |
| 2-HHB(2F, 3F)-1 | (4-6) | 3% |
| 2-HBB(2F, 3F)-O2 | (4-10) | 3% |
| 3-HBB(2F, 3F)-O2 | (4-10) | 6% |

NI = 77.4°C; Tc < -20°C; γ1 = 54.5 mPa·s; Δn = 0.098; Δε = -2.4; Vth = 2.50 V.

### Example 20

| | | |
|---|---|---|
| V-HH-V | (1-1) | 20% |
| V-HH-V1 | (1-2) | 17% |
| V2-BB (2F, 3F) -O2 | (2-3) | 4 % |
| V-HHB (2F, 3F)-O2 | (2-5) | 10% |
| V-HBB (2F, 3F)-O2 | (2-9) | 7% |
| 3-HH-V1 | (3-1) | 8% |
| 3-HB(2F, 3F)-O2 | (4-1) | 8% |
| 5-HB (2F, 3F)-O2 | (4-1) | 2% |
| 3-HHB(2F, 3F)-O2 | (4-6) | 4% |
| 2-BB(2F, 3F)B-3 | (4-9) | 9 % |
| 3-HB(2F, 3F)B-2 | (4) | 11% |

NI = 74.5°C; Δn = 0.106; Δε = -2.9.

The viscosity (γ1) of the composition in Comparative Example 1 was 156.0 mPa·s, and the threshold voltage (Vth) was 2.31 V. In contrast, the viscosity of the composition in Example 1 was 123.3 mPa·s, and the threshold voltage was 2.20 V. The viscosity of the composition in Comparative Example 2 was 85.3 mPa·s, and the threshold voltage was 2.09 V. In contrast, the viscosity of the composition in Example 2 was 77.9 mPa·s, and the threshold voltage was 1.94 V. Moreover, the compositions in Example 3 to Example 19 had smaller viscosity in comparison with the compositions in Comparative Example 1 and 2. Accordingly, the liquid crystal composition of the invention is concluded to have superb characteristics.

### Industrial Applicability

A liquid crystal composition of the invention satisfies at least one of characteristics such as high maximum temperature, low minimum temperature, small viscosity, suitable optical anisotropy, large negative dielectric anisotropy, large specific resistance, high stability to ultraviolet light and high stability to heat, or has a suitable balance regarding at least two of the characteristics. A liquid crystal display device including the composition has characteristics such as a short response time, a large voltage holding ratio, low threshold voltage, a large contrast ratio and a long service life, and thus can be used in a liquid crystal projector, a liquid crystal television and so forth.

## Claims

1. A liquid crystal composition, being **characterized in that**: the liquid crystal composition has a nematic phase and negative dielectric anisotropy, and contains at least one compound selected from the group of compounds represented by formula (1) as a first component and at least one compound selected from the group of compounds represented by formula (2) as a second component: 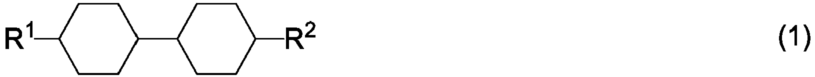 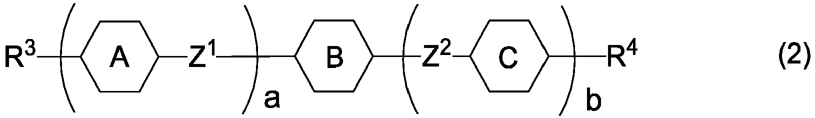 wherein, in formula (1), R¹ is independently alkenyl having 2 to 12 carbons; and R² is 1-propenyl; in formula (2), R³ is alkenyl having 2 to 12 carbons, or alkenyl having 2 to 12 carbons in which at least one hydrogen is replaced by fluorine or chlorine; R⁴ is alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one hydrogen is replaced by fluorine or chlorine; ring A and ring C are independently 1,4-cyclohexylene, 1,4-cyclohexenylene, tetrahydropyran-2,5-diyl, 1,4-phenylene, 1, 4-phenylene in which at least one hydrogen is replaced by fluorine or chlorine, naphthalene-2, 6-diyl, naphthalene-2, 6-diyl in which at least one hydrogen is replaced by fluorine or chlorine, chroman-2, 6-diyl, or chroman-2,6-diyl in which at least one hydrogen is replaced by fluorine or chlorine; ring B is 2,3-difluoro-1,4-phenylene, 2-chloro-3-fluoro-1,4-phenylene, 2, 3-difluoro-5-methyl-1, 4-phenylene, 3,4,5-trifluoronaphthalene-2,6-diyl or 7, 8-difluorochroman-2, 6-diyl; Z¹ and Z² are independently a single bond, ethylene, carbonyloxy or methyleneoxy; a is 0, 1 or 2; b is 0 or 1; a sum of a and b is 3 or less; and in which, ring A is 1,4-cyclohexylene, Z¹ is a single bond, a is 1, when b is 0, R⁴ is alkyl having 1 to 12 carbons, alkenyl having 2 to 12 carbons, alkenyloxy having 2 to 12 carbons, or alkyl having 1 to 12 carbons in which at least one hydrogen is replaced by fluorine or chlorine.

2. The liquid crystal composition according to claim 1, containing at least one compound selected from the group of compounds represented by formula (1-2), formula (1-5), formula (1-6) and formula (1-7) as the first component:

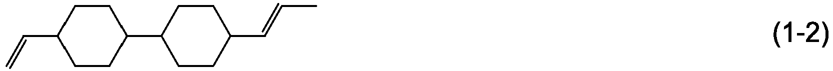

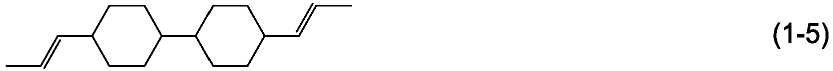

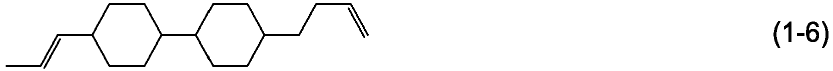

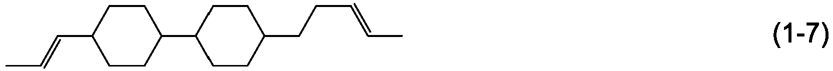

3. The liquid crystal composition according to claim 1 or 2, wherein a proportion of the first component is in the range of 5% by weight to 75% by weight based on the total amount of the liquid crystal composition.

4. The liquid crystal composition according to any one of claims 1 to 3, containing at least one compound selected from the group of compounds represented by formula (2-1) to formula (2-21) as the second component: 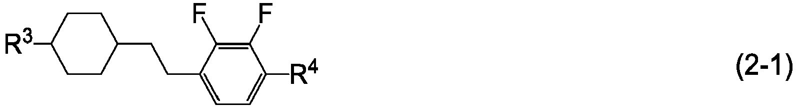 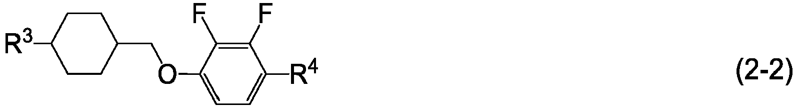 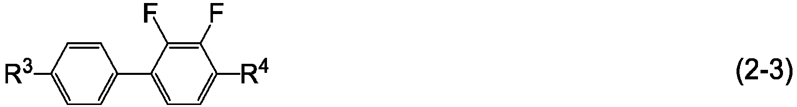 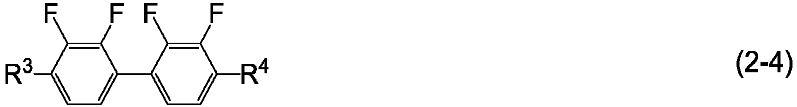 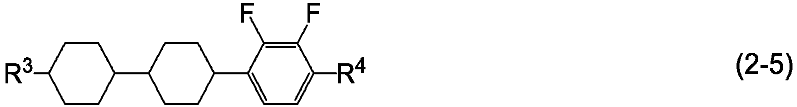 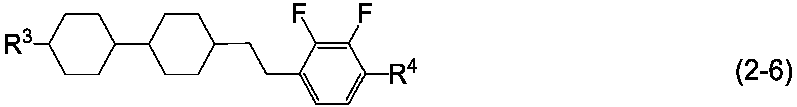 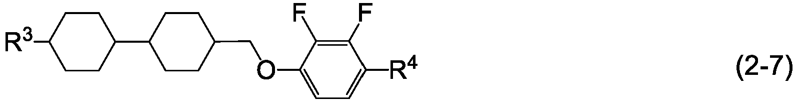 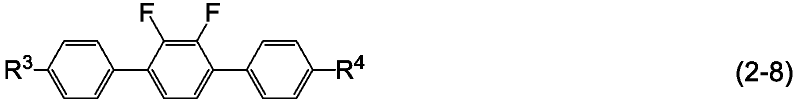 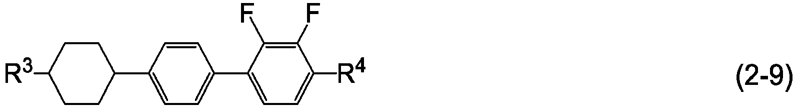 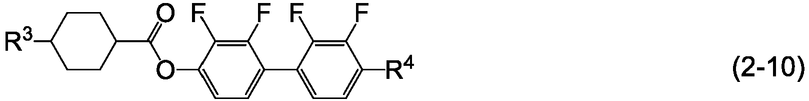 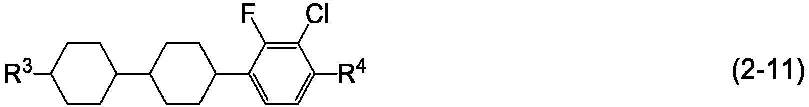 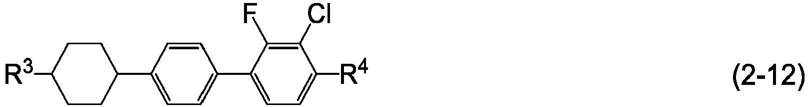 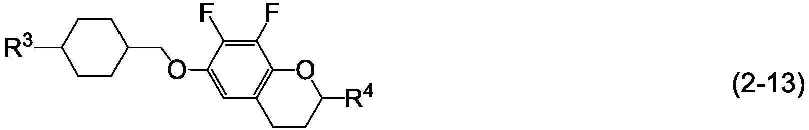 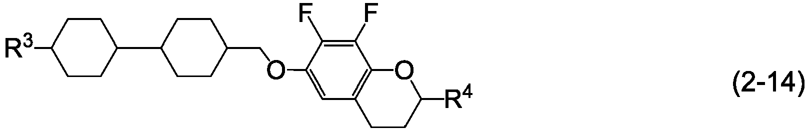 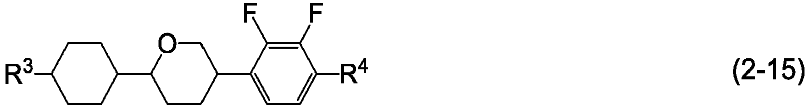 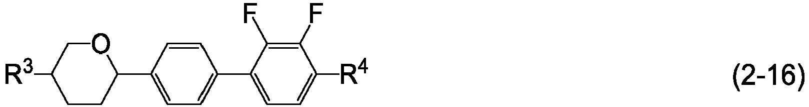 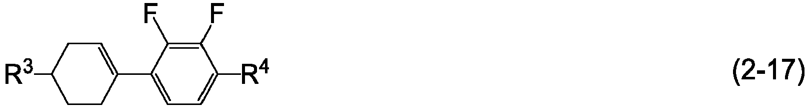 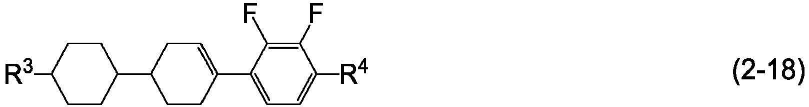 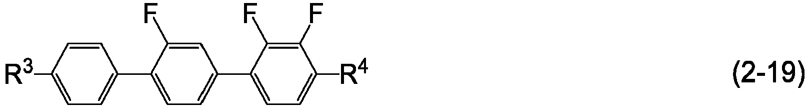 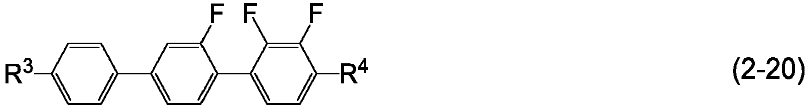 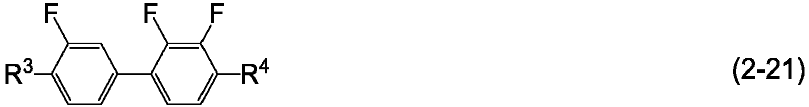 wherein, in formula (2-1) to formula (2-21), R³ is alkenyl having 2 to 12 carbons, or alkenyl having 2 to 12 carbons in which at least one hydrogen is replaced by fluorine or chlorine; and R⁴ is alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one hydrogen is replaced by fluorine or chlorine.

5. The liquid crystal composition according to any one of claims 1 to 4, wherein a proportion of the second component is in the range of 5% by weight to 70% by weight based on the total amount of the liquid crystal composition.

6. The liquid crystal composition according to any one of claims 1 to 5, containing at least one compound selected from the group of compounds represented by formula (3) as a third component: 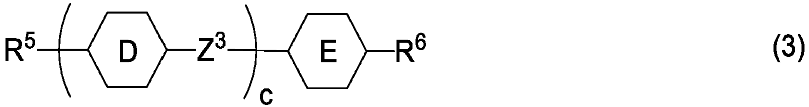 wherein, in formula (3), R⁵ and R⁶ are independently alkyl having 1 to 12 carbons, alkoxy having 1 to 12 carbons, alkenyl having 2 to 12 carbons, alkyl having 1 to 12 carbons in which at least one hydrogen is replaced by fluorine or chlorine, or alkenyl having 2 to 12 carbons in which at least one hydrogen is replaced by fluorine or chlorine; ring D and ring E are independently 1,4-cyclohexylene, 1,4-phenylene, 2-fluoro-1, 4-phenylene or 2, 5-difluoro-1, 4-phenylene; Z³ is a single bond, ethylene or carbonyloxy; c is 1, 2 or 3; and in which, the compound represented by formula (1) is excluded.

7. The liquid crystal composition according to any one of claims 1 to 6, containing at least one compound selected from the group of compounds represented by formula (3-1) to formula (3-13) as the third component: 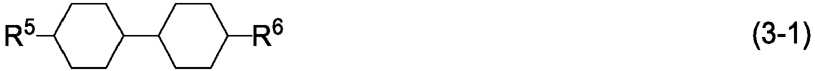 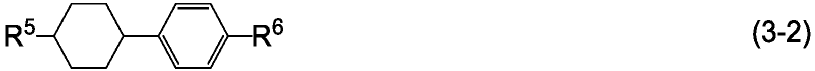 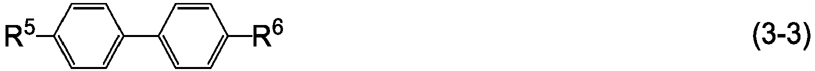 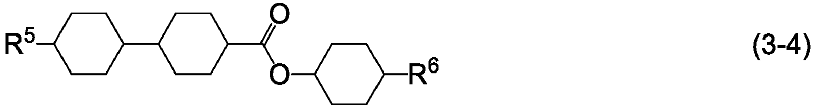 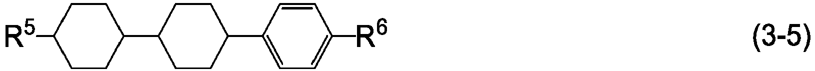 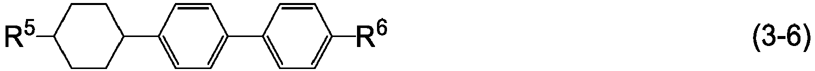 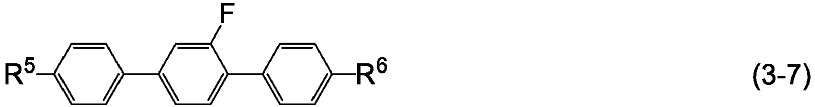 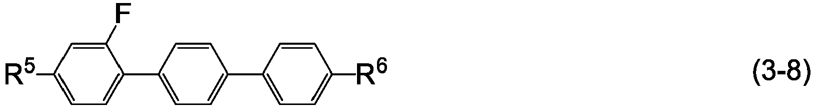 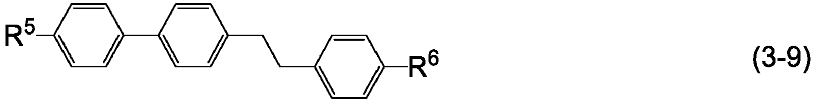 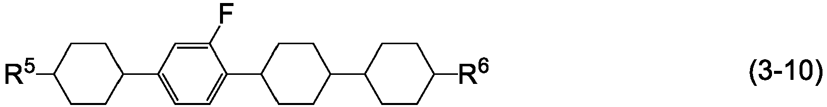 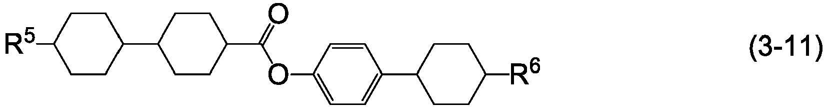 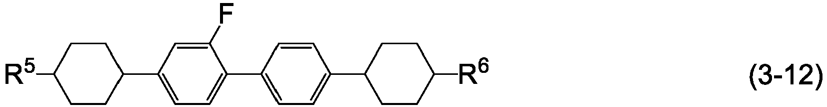 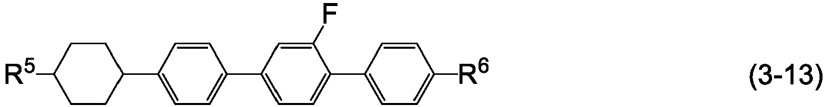 wherein, in formula (3-1) to formula (3-13), R⁵ and R⁶ are independently alkyl having 1 to 12 carbons, alkoxy having 1 to 12 carbons, alkenyl having 2 to 12 carbons, alkyl having 1 to 12 carbons in which at least one hydrogen is replaced by fluorine or chlorine, or alkenyl having 2 to 12 carbons in which at least one hydrogen is replaced by fluorine or chlorine, and in which the compound represented by formula (1) is excluded.

8. The liquid crystal composition according to claim 6 or 7, wherein a proportion of the third component is in the range of 3% by weight to 50% by weight based on the weight of the liquid crystal composition.

9. The liquid crystal composition according to any one of claims 1 to 8, containing at least one compound selected from the group of compounds represented by formula (4) as a fourth component: 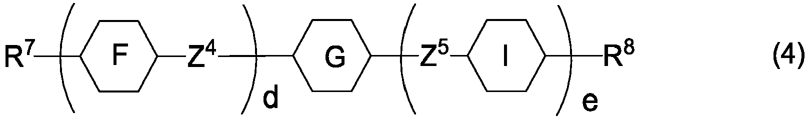 wherein, in formula (4), R⁷ and R⁸ are independently alkyl having 1 to 12 carbons, alkoxy having 1 to 12 carbons, or alkyl having 1 to 12 carbons in which at least one hydrogen is replaced by fluorine or chlorine; ring F and ring I are independently 1,4-cyclohexylene, 1,4-cyclohexenylene, tetrahydropyran-2,5-diyl, 1,4-phenylene, 1, 4-phenylene in which at least one hydrogen is replaced by fluorine or chlorine, naphthalene-2, 6-diyl, naphthalene-2, 6-diyl in which at least one hydrogen is replaced by fluorine or chlorine, chroman-2, 6-diyl, or chroman-2,6-diyl in which at least one hydrogen is replaced by fluorine or chlorine; ring G is 2, 3-difluoro-1, 4-phenylene, 2-chloro-3-fluoro-1, 4-phenylene, 2, 3-difluoro-5-methyl-1, 4-phenylene, 3,4,5-trifluoronaphthalene-2,6-diyl or 7, 8-difluorochroman-2, 6-diyl; Z⁴ and Z⁵ are independently a single bond, ethylene, carbonyloxy or methyleneoxy; d is 1, 2 or 3; e is 0 or 1; and a sum of d and e is 1 to 3.

10. The liquid crystal composition according to any one of claims 1 to 9, containing at least one compound selected from the group of compounds represented by formula (4-1) to formula (4-22) as the fourth component: 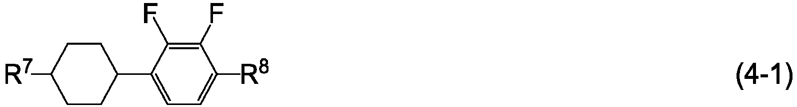 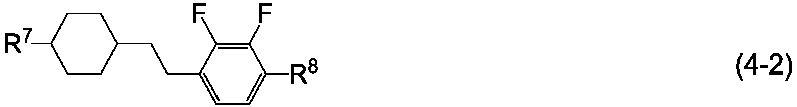 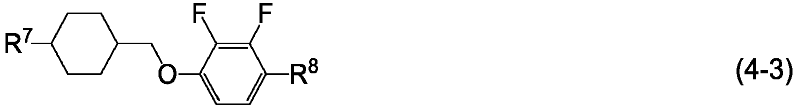 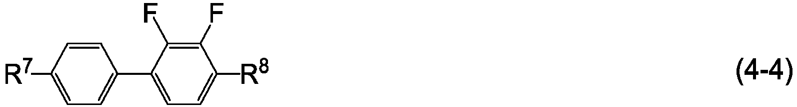 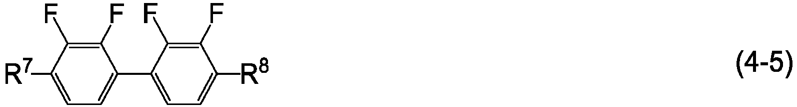 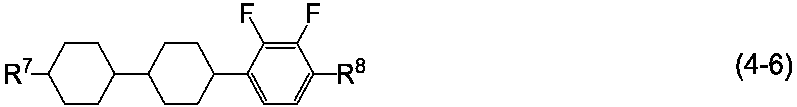 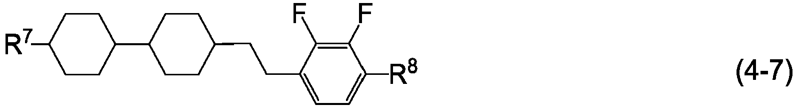 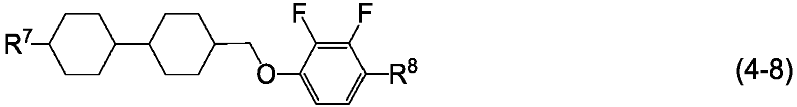 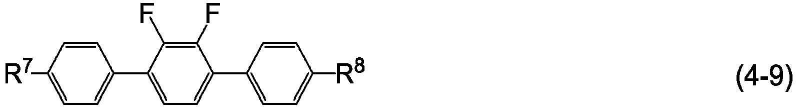 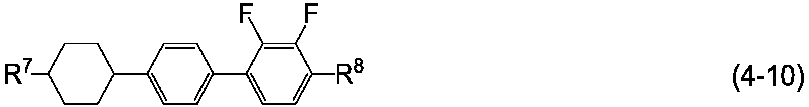 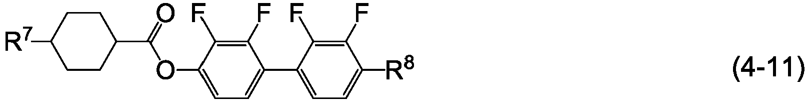 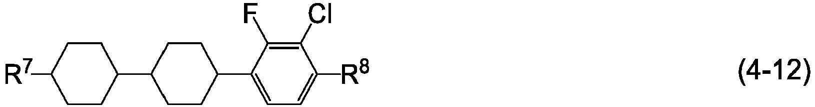 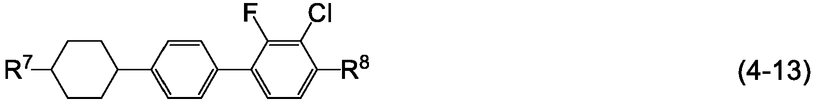 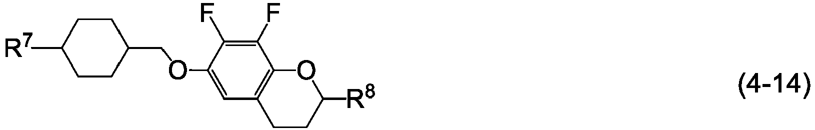 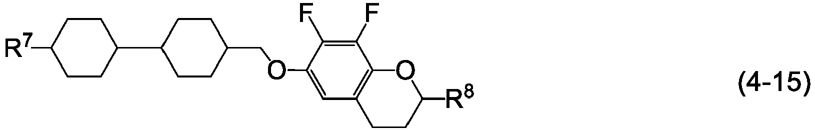 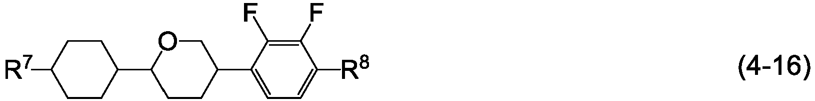 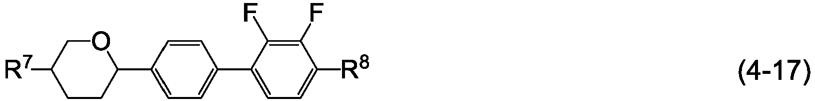 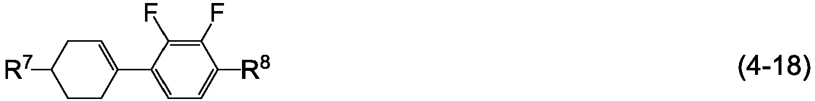 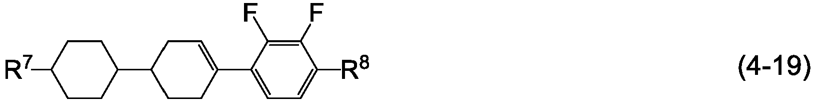 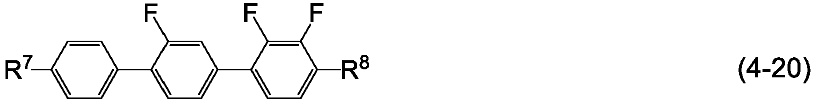 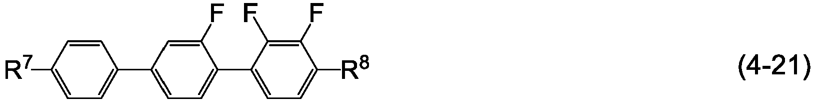 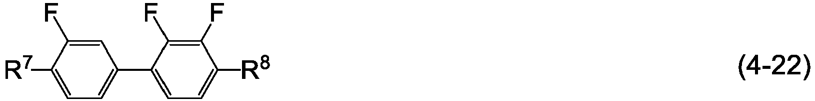 wherein, in formula (4-1) to formula (4-22), R⁷ and R⁸ are independently alkyl having 1 to 12 carbons, alkoxy having 1 to 12 carbons, or alkyl having 1 to 12 carbons in which at least one hydrogen is replaced by fluorine or chlorine.

11. The liquid crystal composition according to claim 9 or 10, wherein a proportion of the fourth component is in the range of 3% by weight to 60% by weight based on the weight of the liquid crystal composition.

12. The liquid crystal composition according to any one of claims 1 to 11, containing at least one polymerizable compound selected from the group of compounds represented by formula (5) as an additive: 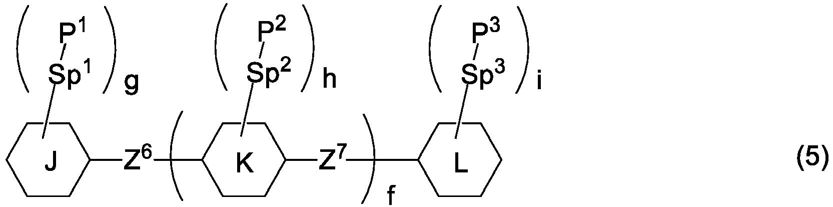 wherein, in formula (5), ring J and ring L are independently cyclohexyl, cyclohexenyl, phenyl, 1-naphthyl, 2-naphthyl, tetrahydropyran-2-yl, 1,3-dioxane-2-yl, pyrimidine-2-yl or pyridine-2-yl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine; ring K is 1, 4-cyclohexylene, 1, 4-cyclohexenylene, 1, 4-phenylene, naphthalene-1, 2-diyl, naphthalene-1, 3-diyl, naphthalene-1, 4-diyl, naphthalene-1, 5-diyl, naphthalene-1, 6-diyl, naphthalene-1, 7-diyl, naphthalene-1, 8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine; Z⁶ and Z⁷ are independently a single bond or alkylene having 1 to 10 carbons, and in the alkylene, at least one piece of -CH₂- may be replaced by -O-, -CO-, -COO- or -OCO-, and at least one piece of -CH₂-CH₂- may be replaced by -CH=CH-, -C(CH₃)=CH-, -CH=C(CH₃) - or -C(CH₃)=C(CH₃)-, and in the groups, at least one hydrogen may be replaced by fluorine or chlorine; P¹, P² and P³ are independently a polymerizable group; Sp¹, Sp² and Sp³ are independently a single bond or alkylene having 1 to 10 carbons, and in the alkylene, at least one piece of -CH₂- may be replaced by -O-, -COO-, -OCO- or -OCOO-, and at least one piece of -CH₂-CH₂- may be replaced by -CH=CH- or -C≡C-, and in the groups, at least one hydrogen may be replaced by fluorine or chlorine; f is 0, 1 or 2; g, h and i are independently 0, 1, 2, 3 or 4; and a sum of g, h and i is 1 or more.

13. The liquid crystal composition according to any one of claims 1 to 12, containing at least one polymerizable compound selected from the group of compounds represented by formula (5-1) to formula (5-27) as the additive: 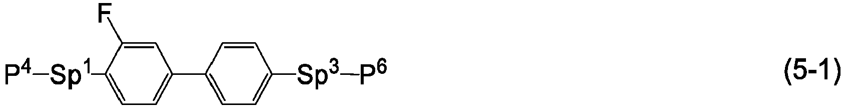 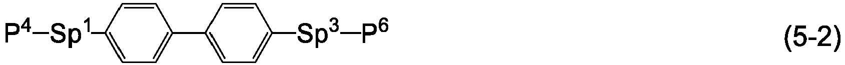 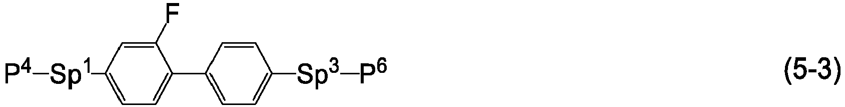 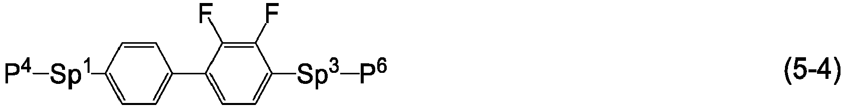 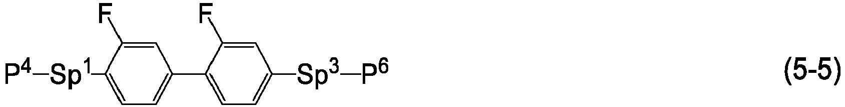 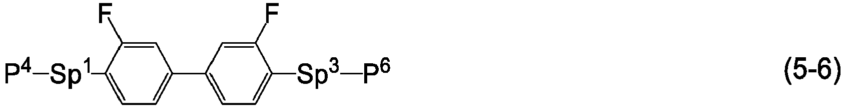 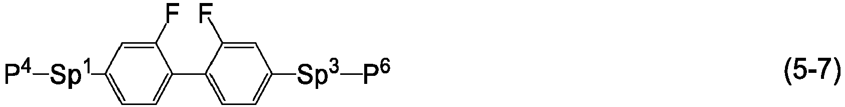 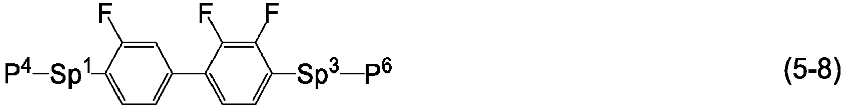 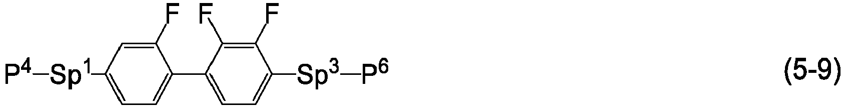 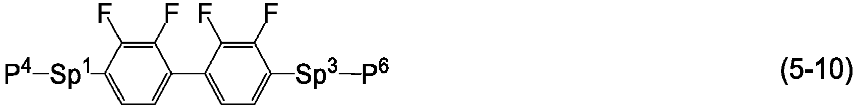 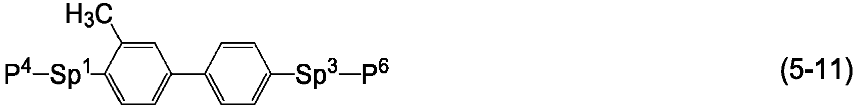 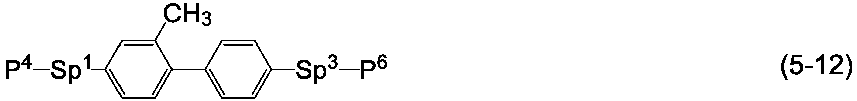 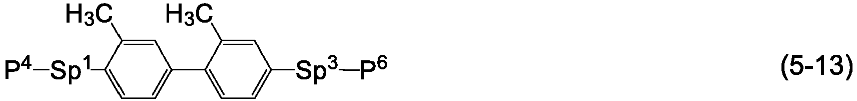 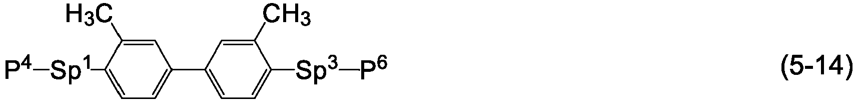 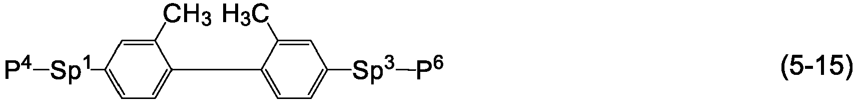 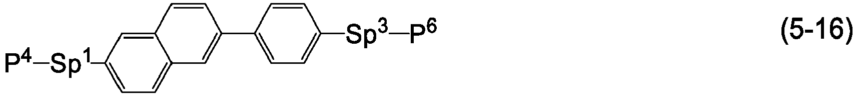 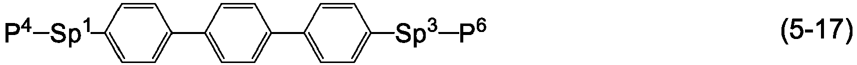 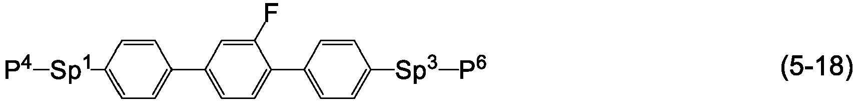 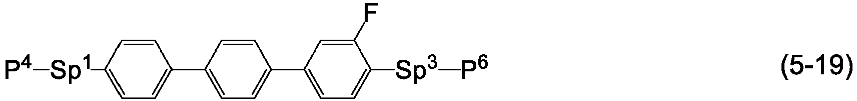 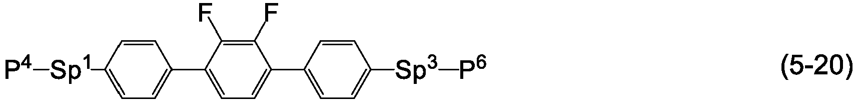 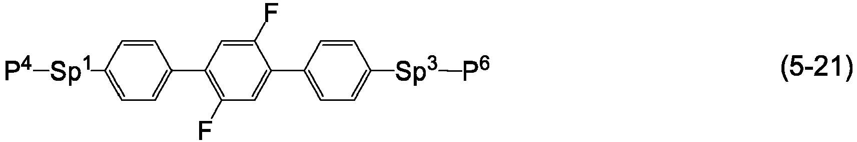 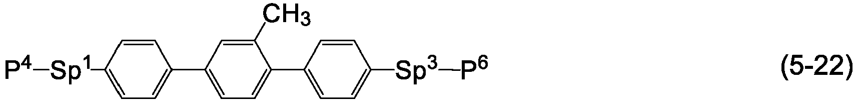 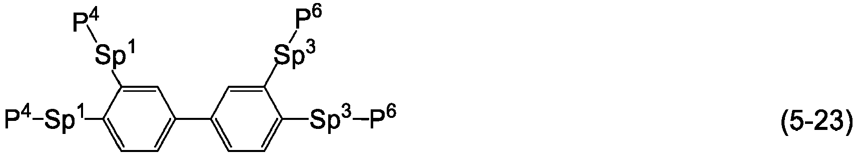 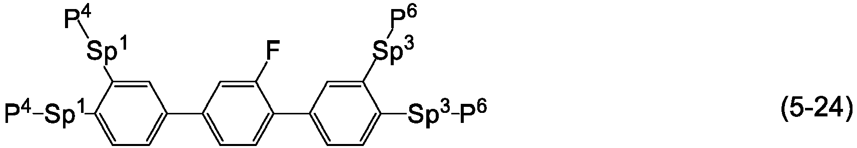 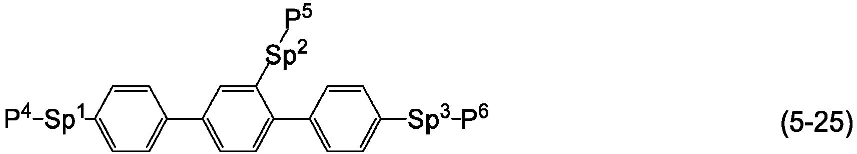 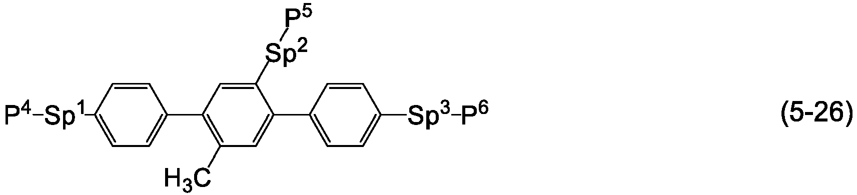 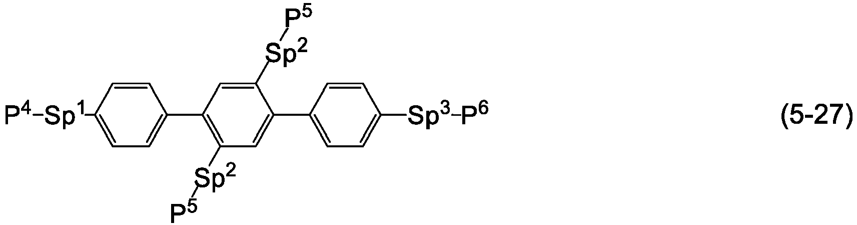 wherein, in formula (5-1) to formula (5-27), P⁴, P⁵ and P⁶ are independently a polymerizable group selected from the group of groups represented by formula (P-1) to formula (P-3); 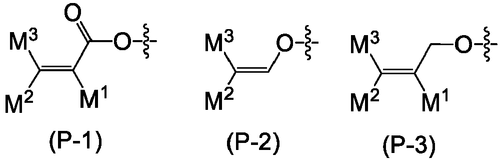
wherein, in formula (P-1) to formula (P-3), M¹, M² and M³ are independently hydrogen, fluorine, alkyl having 1 to 5 carbons, or alkyl having 1 to 5 carbons in which at least one hydrogen is replaced by fluorine or chlorine; and
in formula (5-1) to formula (5-27), Sp¹, Sp² and Sp³ are independently a single bond or alkylene having 1 to 10 carbons, and in the alkylene, at least one piece of -CH₂- may be replaced by -O-, -COO-, -OCO- or -OCOO-, and at least one piece of -CH₂-CH₂-may be replaced by -CH=CH- or -C≡C-, and in the groups, at least one hydrogen may be replaced by fluorine or chlorine.

14. A liquid crystal display device, including the liquid crystal composition according to any one of claims 1 to 13.

15. Use of the liquid crystal composition according to any one of claims 1 to 13 in a liquid crystal display device.

## Patentansprüche

1. Flüssigkristallzusammensetzung, **dadurch gekennzeichnet, dass**: die Flüssigkristallzusammensetzung eine nematische Phase und eine negative dielektrische Anisotropie aufweist und wenigstens eine Verbindung, ausgewählt aus der Gruppe von Verbindungen, die durch Formel (1) dargestellt sind, als eine erste Komponente und wenigstens eine Verbindung, ausgewählt aus der Gruppe von Verbindungen, die durch die Formel (2) dargestellt sind, als eine zweite Komponente enthält: 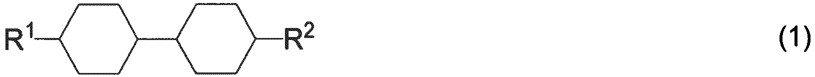 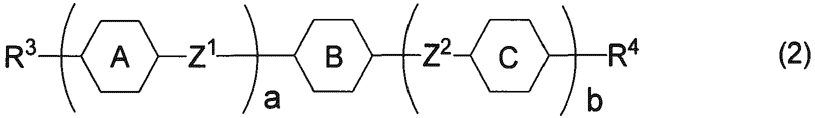 wobei in Formel (1) R¹ unabhängig Alkenyl mit 2 bis 12 Kohlenstoffen ist; und R² 1-Propenyl ist; in Formel (2), R³ Alkenyl mit 2 bis 12 Kohlenstoffen ist, oder Alkenyl mit 2 bis 12 Kohlenstoffen ist, in dem wenigstens ein Wasserstoff durch Fluor oder Chlor ersetzt ist; R⁴ Alkyl mit 1 bis 12 Kohlenstoffen, Alkoxy mit 1 bis 12 Kohlenstoffen, Alkenyl mit 2 bis 12 Kohlenstoffen, Alkenyloxy mit 2 bis 12 Kohlenstoffen oder Alkyl mit 1 bis 12 Kohlenstoffen ist, in dem wenigstens ein Wasserstoff durch Fluor oder Chlor ersetzt ist; Ring A und Ring C unabhängig 1,4-Cyclohexylen, 1,4-Cyclohexenylen, Tetrahydropyran-2,5-diyl, 1,4-Phenylen, 1,4-Phenylen, in dem wenigstens ein Wasserstoff durch Fluor oder Chlor ersetzt ist, Naphthalin-2,6-diyl, Naphthalin-2,6-diyl, in dem wenigstens ein Wasserstoff durch Fluor oder Chlor ersetzt ist, Chroman-2,6-diyl oder Chroman-2,6-diyl, in dem wenigstens ein Wasserstoff durch Fluor oder Chlor ersetzt ist; Ring B 2,3-Difluor-1, 4-phenylen,2-Chlor-3-fluor-1 ,4-phenylen, 2,3-Difluor-5-methyl-1,4-phenylen, 3,4,5-Trifluornaphthalin-2,6-diyl oder 7,8-Difluorchroman-2,6-diyl ist; Z¹ und Z² unabhängig eine Einfachbindung, Ethylen, Carbonyloxy oder Methylenoxy sind; a 0, 1 oder 2 ist; b 0 oder 1 ist; eine Summe von a und b 3 oder weniger ist; und in welcher Ring A 1,4-Cyclohexylen ist, Z¹ eine Einfachbindung ist, a 1 ist, wenn b 0 ist, R⁴ Alkyl ist mit 1 bis 12 Kohlenstoffen, Alkenyl mit 2 bis 12 Kohlenstoffen, Alkenyloxy mit 2 bis 12 Kohlenstoffen oder Alkyl mit 1 bis 12 Kohlenstoffen, in dem wenigstens ein Wasserstoff durch Fluor oder Chlor ersetzt ist.

2. Flüssigkristallzusammensetzung gemäß Anspruch 1, enthaltend wenigstens eine Verbindung, ausgewählt aus der Gruppe von Verbindungen, die durch Formel (1-2), Formel (1-5), Formel (1-6) und Formel (1-7) als die erste Komponente dargestellt sind:

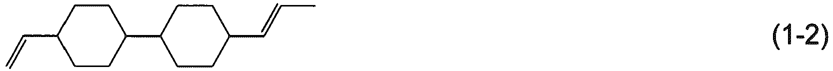

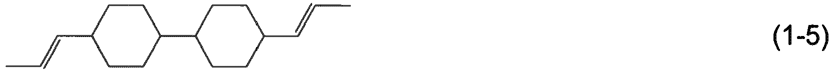

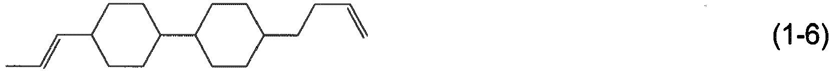

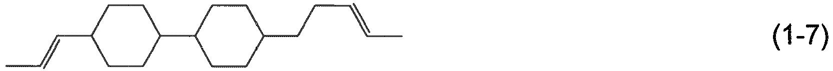

3. Flüssigkristallzusammensetzung gemäß Anspruch 1 oder 2, wobei ein Anteil der ersten Komponente in dem Bereich von 5 Gew.-% bis 75 Gew.-% liegt, basierend auf der Gesamtmenge der Flüssigkristallzusammensetzung.

4. Flüssigkristallzusammensetzung gemäß einem der Ansprüche 1 bis 3, enthaltend wenigstens eine Verbindung, ausgewählt aus der Gruppe von Verbindungen, die durch Formel (2-1) bis Formel (2-21) dargestellt sind, als die zweite Komponente: 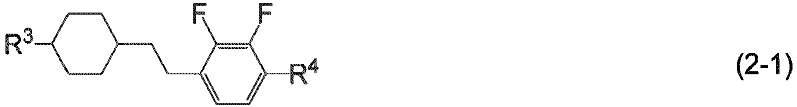 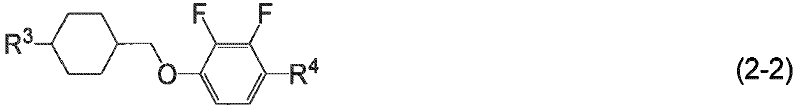 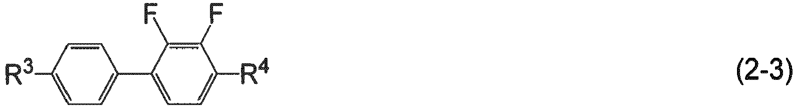 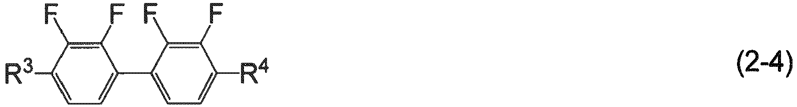 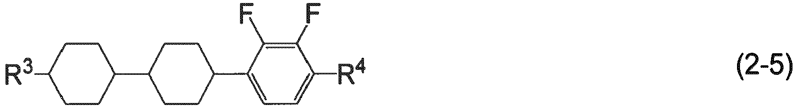 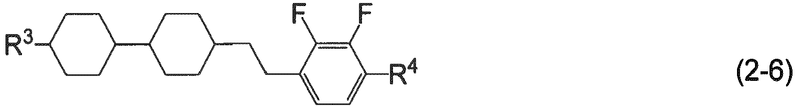 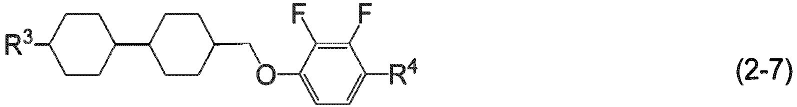 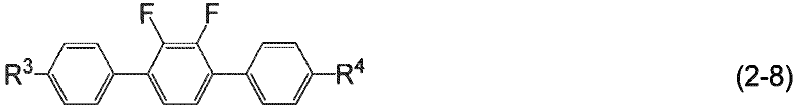 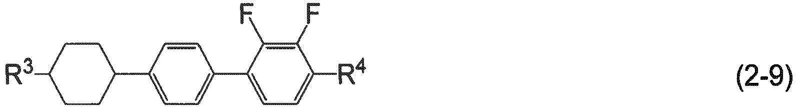 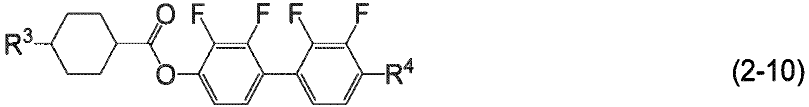 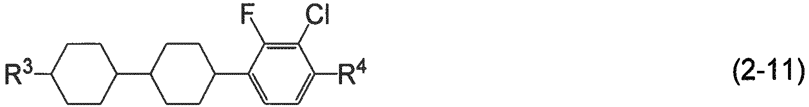 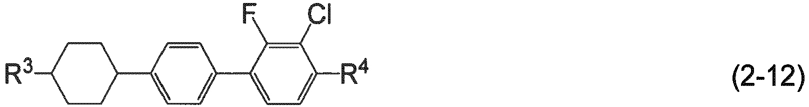 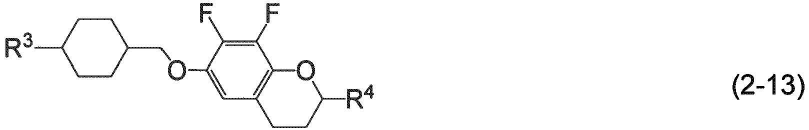 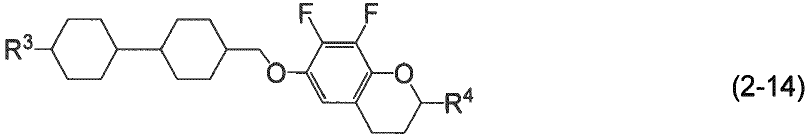 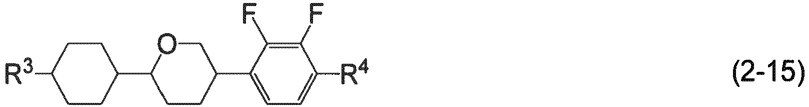 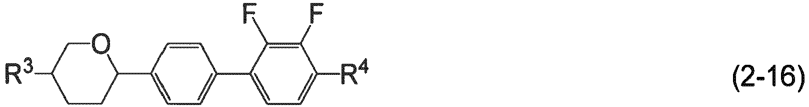 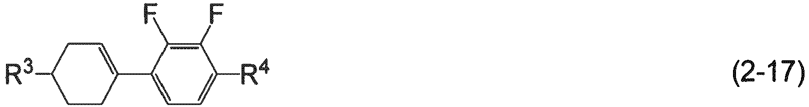 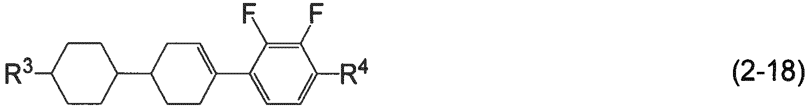 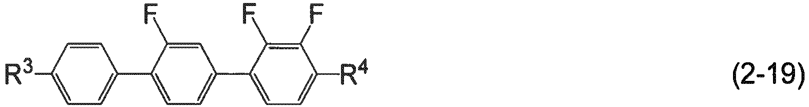 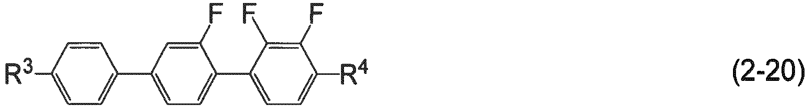 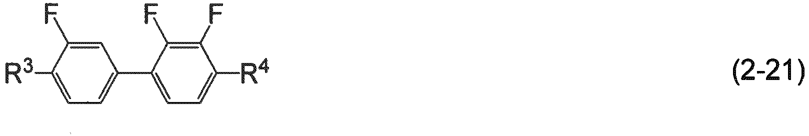 wobei in Formel (2-1) bis Formel (2-21) R³ Alkenyl mit 2 bis 12 Kohlenstoffen oder Alkenyl mit 2 bis 12 Kohlenstoffen ist, in dem wenigstens ein Wasserstoff durch Fluor oder Chlor ersetzt ist; und R⁴ Alkyl mit 1 bis 12 Kohlenstoffen, Alkoxy mit 1 bis 12 Kohlenstoffen, Alkenyl mit 2 bis 12 Kohlenstoffen, Alkenyloxy mit 2 bis 12 Kohlenstoffen oder Alkyl mit 1 bis 12 Kohlenstoffen ist, in dem wenigstens ein Wasserstoff durch Fluor oder Chlor ersetzt ist.

5. Flüssigkristallzusammensetzung gemäß einem der Ansprüche 1 bis 4, wobei ein Anteil der zweiten Komponente in dem Bereich von 5 Gew.-% bis 70 Gew.-% liegt, basierend auf der Gesamtmenge der Flüssigkristallzusammensetzung.

6. Flüssigkristallzusammensetzung gemäß einem der Ansprüche 1 bis 5, enthaltend wenigstens eine Verbindung, ausgewählt aus der Gruppe von Verbindungen, dargestellt durch Formel (3), als eine dritte Komponente: 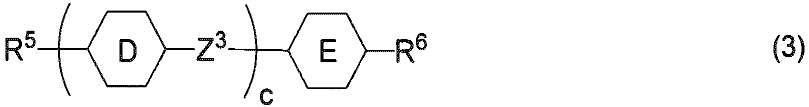 wobei in Formel (3) R⁵ und R⁶ unabhängig Alkyl mit 1 bis 12 Kohlenstoffen, Alkoxy mit 1 bis 12 Kohlenstoffen, Alkenyl mit 2 bis 12 Kohlenstoffen, Alkyl mit 1 bis 12 Kohlenstoffen, in dem wenigstens ein Wasserstoff durch Fluor oder Chlor ersetzt ist, oder Alkenyl mit 2 bis 12 Kohlenstoffen sind, in dem wenigstens ein Wasserstoff durch Fluor oder Chlor ersetzt ist; Ring D und Ring E unabhängig 1,4-Cyclohexylen, 1,4-Phenylen, 2-Fluor-1,4-phenylen oder 2,5-Difluor-1,4-phenylen sind; Z³ eine Einfachbindung, Ethylen oder Carbonyloxy ist; c 1, 2 oder 3 ist; und in welcher die Verbindung, dargestellt durch Formel (1), ausgeschlossen ist.

7. Flüssigkristallzusammensetzung gemäß einem der Ansprüche 1 bis 6, enthaltend wenigstens eine Verbindung, ausgewählt aus der Gruppe von Verbindungen, die durch Formel (3-1) bis Formel (3-13) dargestellt sind, als die dritte Komponente: 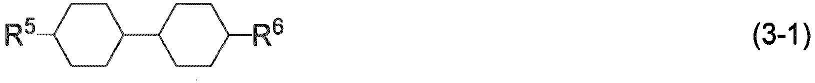 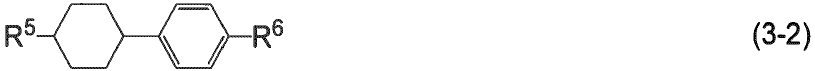 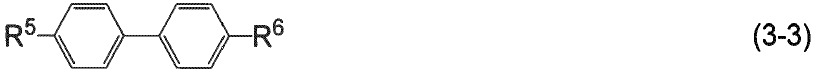 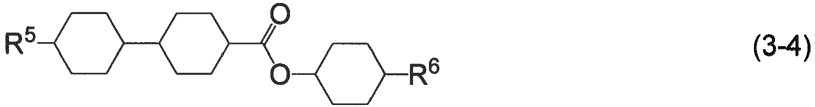 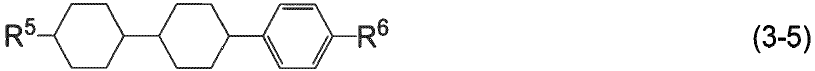 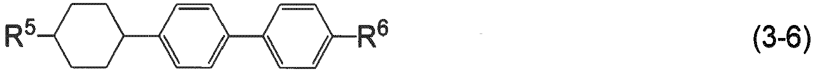 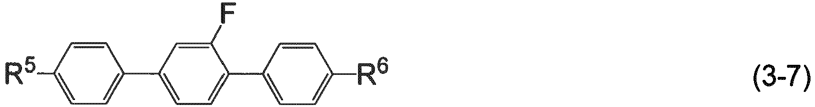 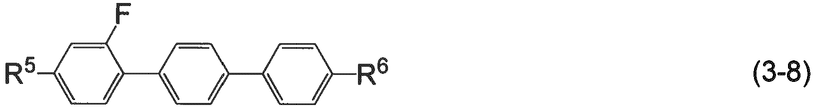 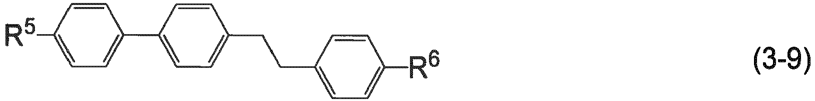 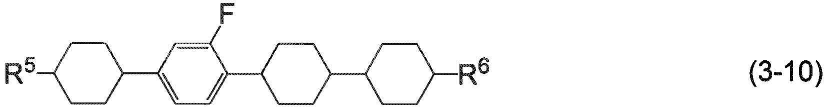 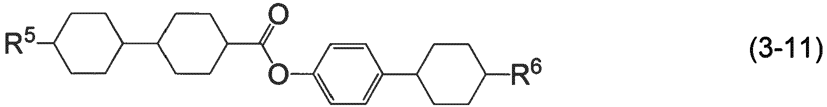 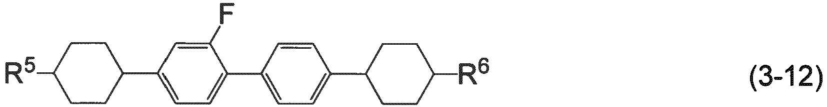 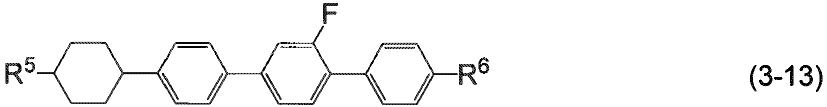 wobei in Formel (3-1) bis Formel (3-13) R⁵ und R⁶ unabhängig Alkyl mit 1 bis 12 Kohlenstoffen, Alkoxy mit 1 bis 12 Kohlenstoffen, Alkenyl mit 2 bis 12 Kohlenstoffen, Alkyl mit 1 bis 12 Kohlenstoffen, in dem wenigstens ein Wasserstoff durch Fluor oder Chlor ersetzt ist, oder Alkenyl mit 2 bis 12 Kohlenstoffen sind, in dem wenigstens ein Wasserstoff durch Fluor oder Chlor ersetzt ist, und in welcher die Verbindung, dargestellt durch Formel (1), ausgeschlossen ist.

8. Flüssigkristallzusammensetzung gemäß Anspruch 6 oder 7, wobei ein Anteil der dritten Komponente in dem Bereich von 3 Gew.-% bis 50 Gew.-% liegt, basierend auf dem Gewicht der Flüssigkristallzusammensetzung.

9. Flüssigkristallzusammensetzung gemäß einem der Ansprüche 1 bis 8, enthaltend wenigstens eine Verbindung, ausgewählt aus der Gruppe von Verbindungen, dargestellt durch Formel (4), als eine vierte Komponente: 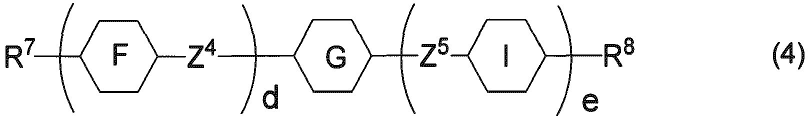 wobei in Formel (4) R⁷ und R⁸ unabhängig Alkyl mit 1 bis 12 Kohlenstoffen, Alkoxy mit 1 bis 12 Kohlenstoffen oder Alkyl mit 1 bis 12 Kohlenstoffen sind, in dem wenigstens ein Wasserstoff durch Fluor oder Chlor ersetzt ist; Ring F und Ring I unabhängig 1,4-Cyclohexylen, 1,4-Cyclohexenylen, Tetrahydropyran-2,5-diyl, 1,4-Phenylen, 1,4-Phenylen, in dem wenigstens ein Wasserstoff durch Fluor oder Chlor ersetzt ist, Naphthalin-2,6-diyl, Naphthalin-2,6-diyl, in dem wenigstens ein Wasserstoff durch Fluor oder Chlor ersetzt ist, Chroman-2,6-diyl oder Chroman-2,6-diyl, in dem wenigstens ein Wasserstoff durch Fluor oder Chlor ersetzt ist; Ring G 2,3-Difluor-1,4-phenylen, 2-Chlor-3-fluor-1,4-phenylen, 2,3-Difluor-5-methyl-1,4-phenylen, 3,4,5-Trifluornaphthalin-2,6-diyl oder 7,8-Difluorchroman-2,6-diyl ist; Z⁴ und Z⁵ unabhängig eine Einfachbindung, Ethylen, Carbonyloxy oder Methylenoxy sind; d 1, 2 oder 3 ist; e 0 oder 1 ist; und eine Summe von d und e 1 bis 3 ist.

10. Flüssigkristallzusammensetzung gemäß einem der Ansprüche 1 bis 9, enthaltend wenigstens eine Verbindung, ausgewählt aus der Gruppe von Verbindungen, die durch Formel (4-1) bis Formel (4-22) dargestellt sind, als die vierte Komponente: 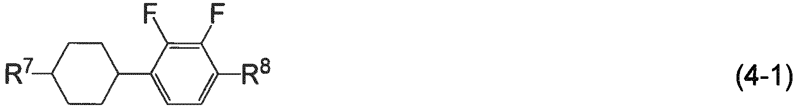 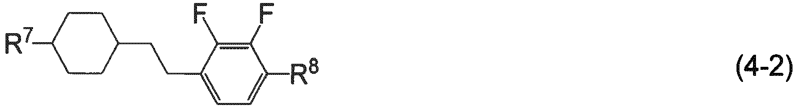 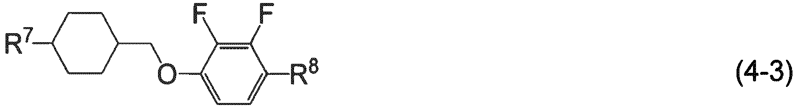 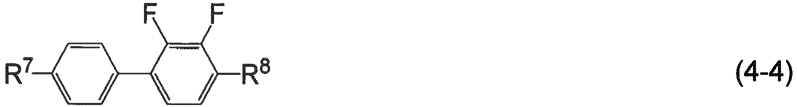 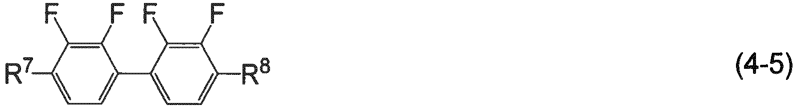 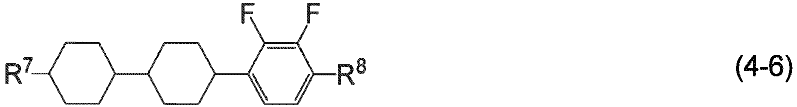 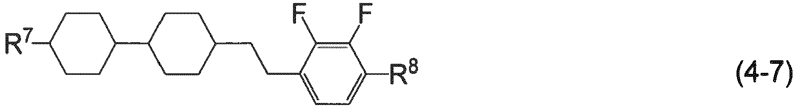 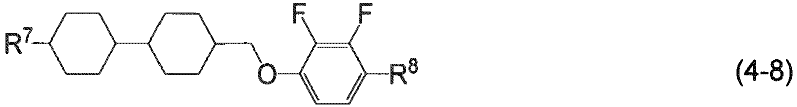 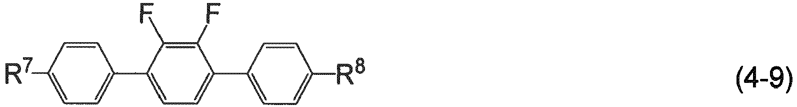 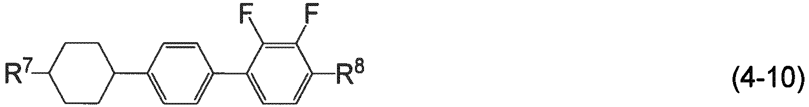 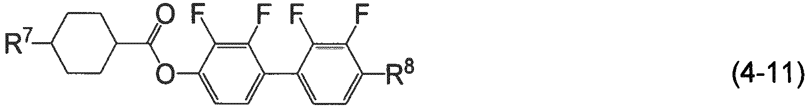 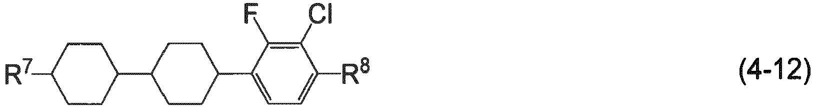 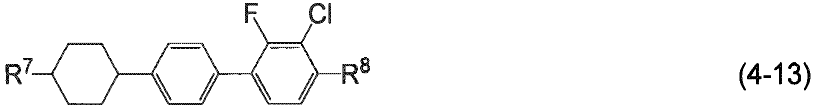 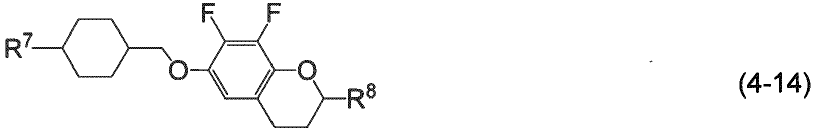 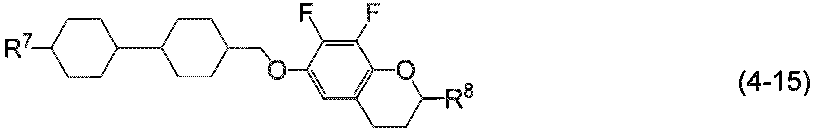 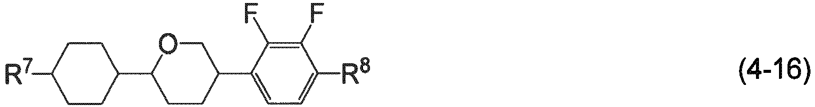 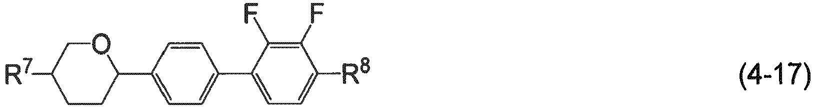 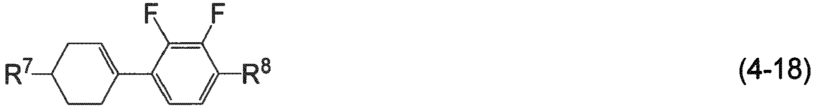 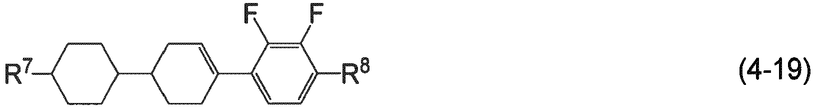 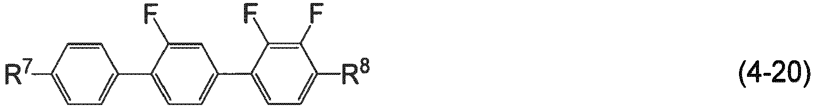 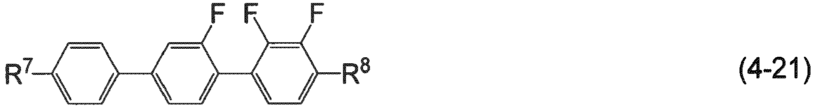 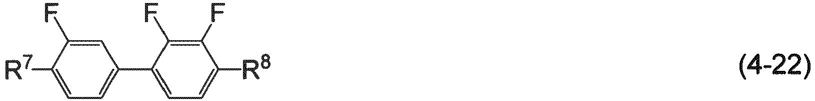 wobei in Formel (4-1) bis Formel (4-22) R⁷ und R⁸ unabhängig Alkyl mit 1 bis 12 Kohlenstoffen, Alkoxy mit 1 bis 12 Kohlenstoffen oder Alkyl mit 1 bis 12 Kohlenstoffen sind, in dem wenigstens ein Wasserstoff durch Fluor oder Chlor ersetzt ist.

11. Flüssigkristallzusammensetzung gemäß Anspruch 9 oder 10, wobei ein Anteil der vierten Komponente in dem Bereich von 3 Gew.-% bis 60 Gew.-% liegt, basierend auf dem Gewicht der Flüssigkristallzusammensetzung.

12. Flüssigkristallzusammensetzung gemäß einem der Ansprüche 1 bis 11, enthaltend wenigstens eine polymerisierbare Verbindung, ausgewählt aus der Gruppe von Verbindungen, die durch Formel (5) dargestellt sind, als ein Additiv: 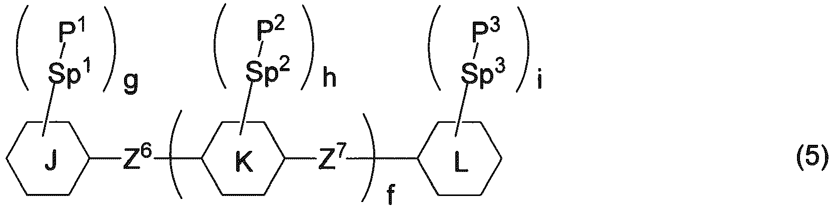 wobei in Formel (5) Ring J und Ring L unabhängig Cyclohexyl, Cyclohexenyl, Phenyl, 1-Naphthyl, 2-Naphthyl, Tetrahydropyran-2-yl, 1,3-Dioxan-2-yl, Pyrimidin-2-yl oder Pyridin-2-yl sind, und in den Ringen, wenigstens ein Wasserstoff durch Fluor, Chlor, Alkyl mit 1 bis 12 Kohlenstoffen, Alkoxy mit 1 bis 12 Kohlenstoffen oder Alkyl mit 1 bis 12 Kohlenstoffen, in dem wenigstens ein Wasserstoff durch Fluor oder Chlor ersetzt ist, ersetzt sein kann; Ring K 1,4-Cyclohexylen, 1,4-Cyclohexenylen, 1,4-Phenylen, Naphthalin-1,2-diyl, Naphthalin-1,3-diyl, Naphthalin-1,4-diyl, Naphthalin-1,5-diyl, Naphthalin-1,6-diyl, Naphthalin-1,7-diyl, Naphthalin-1,8-diyl, Naphthalin-2,3-diyl, Naphthalin-2,6-diyl, Naphthalin-2,7-diyl, Tetrahydropyran-2,5-diyl, 1,3-Dioxan-2,5-diyl, Pyrimidin-2,5-diyl oder Pyridin-2,5-diyl ist, und in den Ringen wenigstens ein Wasserstoff durch Fluor, Chlor, Alkyl mit 1 bis 12 Kohlenstoffen, Alkoxy mit 1 bis 12 Kohlenstoffen oder Alkyl mit 1 bis 12 Kohlenstoffen, in dem wenigstens ein Wasserstoff durch Fluor oder Chlor ersetzt ist, ersetzt sein kann; Z⁶ und Z⁷ unabhängig eine Einfachbindung oder Alkylen mit 1 bis 10 Kohlenstoffen sind, und in dem Alkylen wenigstens ein Stück -CH₂- durch -O-, -CO-, -COO- oder -OCO- ersetzt sein kann und wenigstens ein Stück -CH₂-CH₂- durch -CH=CH-, -C(CH₃)=CH-, -CH=C(CH₃)- oder -C(CH₃)=C(CH₃)- ersetzt sein kann, und in den Gruppen wenigstens ein Wasserstoff durch Fluor oder Chlor ersetzt sein kann; P¹, P² und P³ unabhängig eine polymerisierbare Gruppe sind; Sp¹, Sp² und Sp³ unabhängig eine Einfachbindung oder Alkylen mit 1 bis 10 Kohlenstoffen sind, und in dem Alkylen wenigstens ein Stück -CH₂- durch -O-, -COO-, -OCO- oder -OCOO- ersetzt sein kann und wenigstens ein Stück -CH₂-CH₂- durch -CH=CH- oder -C≡C- ersetzt sein kann, und in den Gruppen wenigstens ein Wasserstoff durch Fluor oder Chlor ersetzt sein kann; f 0, 1 oder 2 ist; g, h und i unabhängig 0, 1, 2, 3 oder 4 sind; und eine Summe von g, h und i 1 oder mehr ist.

13. Flüssigkristallzusammensetzung gemäß einem der Ansprüche 1 bis 12, enthaltend wenigstens eine polymerisierbare Verbindung, ausgewählt aus der Gruppe von Verbindungen, dargestellt durch Formel (5-1) bis Formel (5-27), als das Additiv: 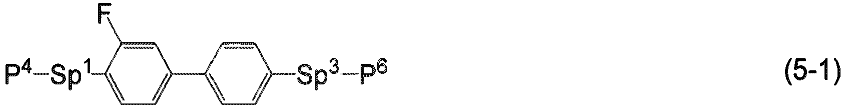 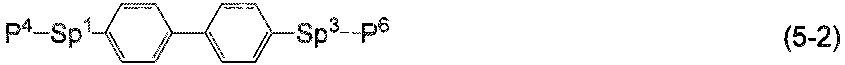 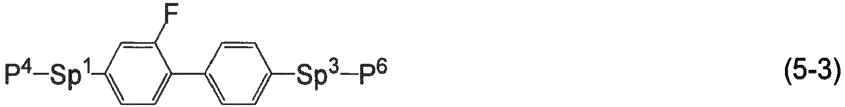 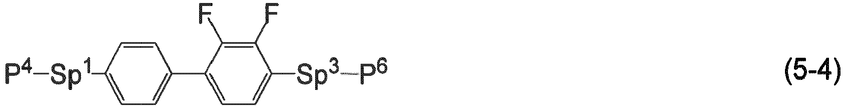 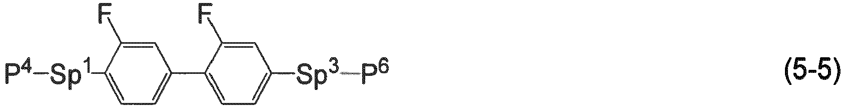 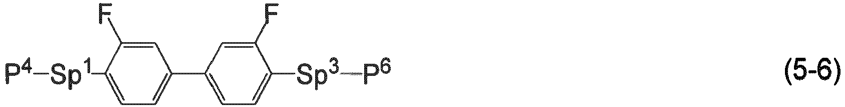 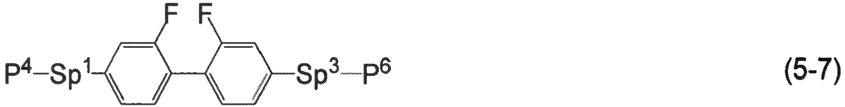 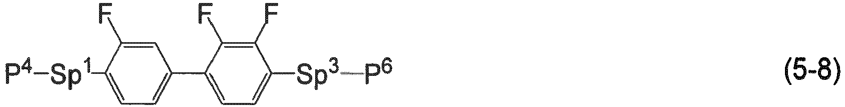 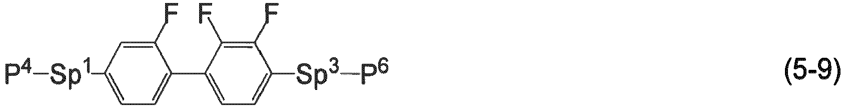 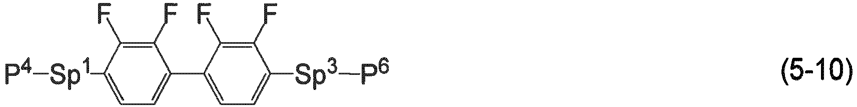 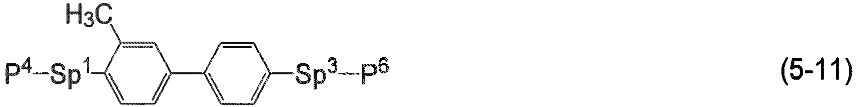 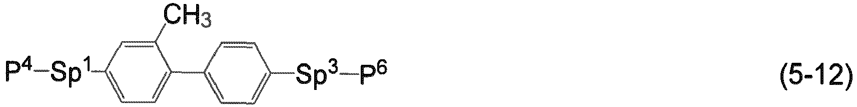 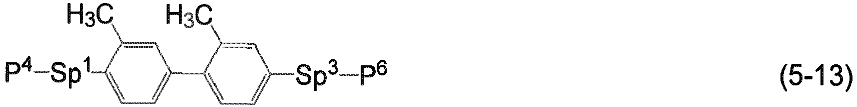 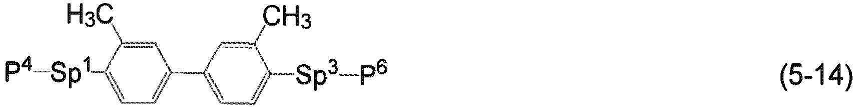 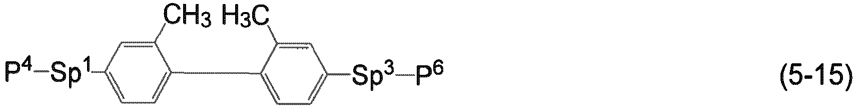 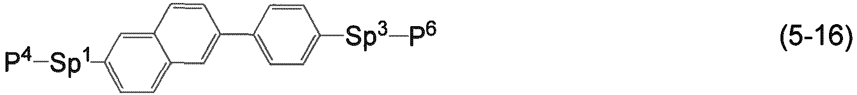 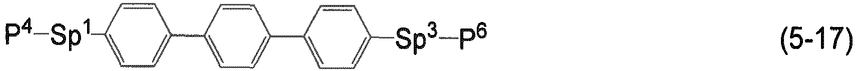 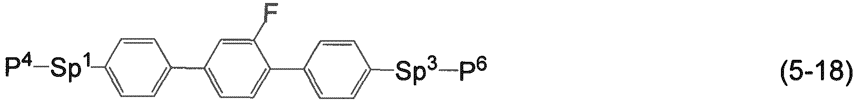 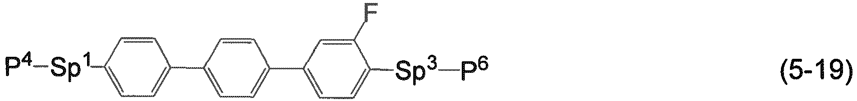 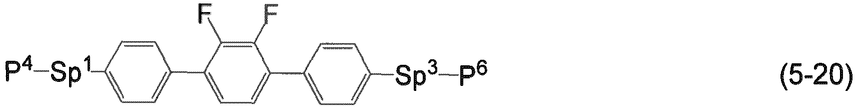 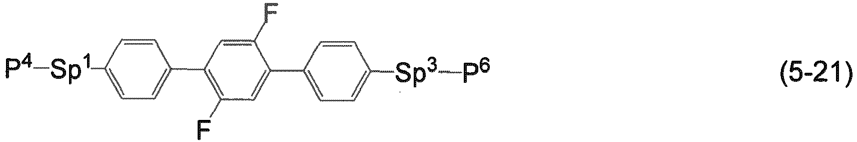 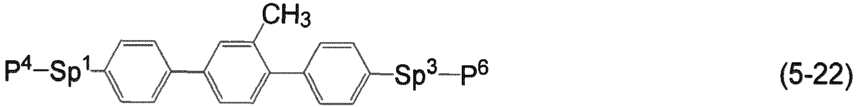 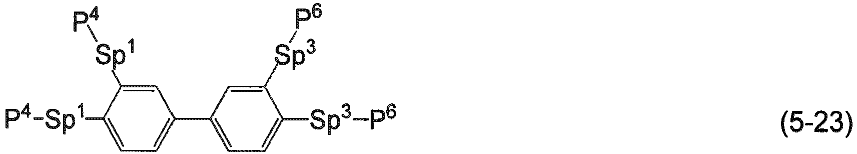 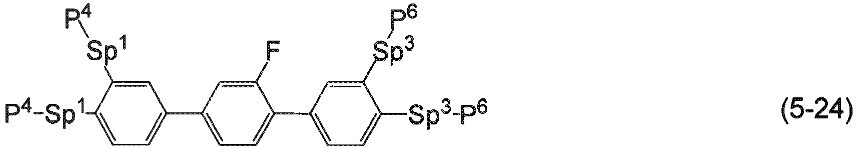 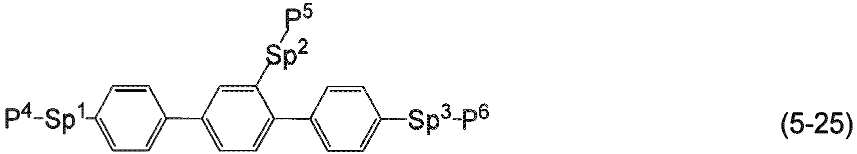 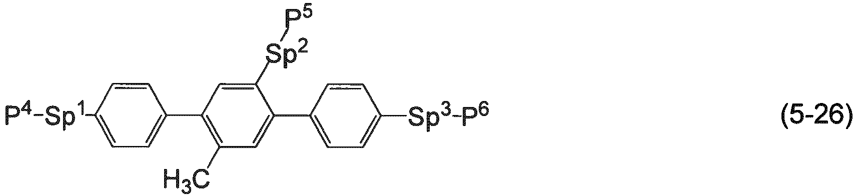 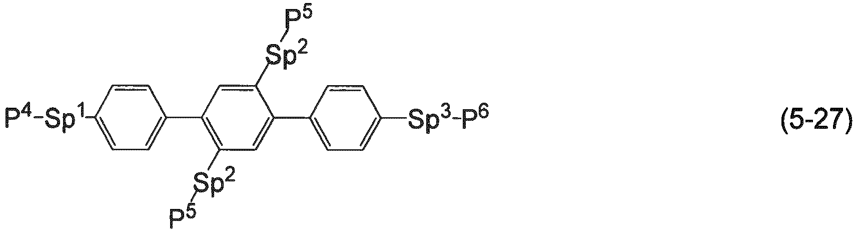 wobei, in Formel (5-1) bis Formel (5-27), P⁴, P⁵ und P⁶ unabhängig eine polymerisierbare Gruppe sind, ausgewählt aus der Gruppe, dargestellt durch die Formel (P-1) bis Formel (P-3); 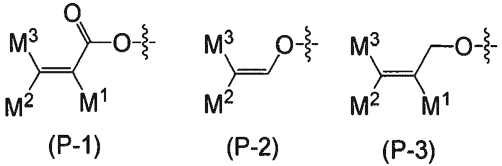 wobei in Formel (P-1) bis Formel (P-3) M¹, M² und M³ unabhängig Wasserstoff, Fluor, Alkyl mit 1 bis 5 Kohlenstoffen oder Alkyl mit 1 bis 5 Kohlenstoffen sind, in dem wenigstens ein Wasserstoff durch Fluor oder Chlor ersetzt ist; und
in Formel (5-1) bis Formel (5-27) Sp¹, Sp² und Sp³ unabhängig eine Einfachbindung oder Alkylen mit 1 bis 10 Kohlenstoffen sind, und in dem Alkylen wenigstens ein Stück -CH₂- durch -O-, -COO-, -OCO- oder -OCOO- ersetzt sein kann, und wenigstens ein Stück -CH₂-CH₂- durch -CH=CH- oder -C=C- ersetzt sein kann, und in den Gruppen wenigstens ein Wasserstoff durch Fluor oder Chlor ersetzt sein kann.

14. Flüssigkristallanzeigevorrichtung, die die Flüssigkristallzusammensetzung gemäß einem der Ansprüche 1 bis 13 enthält.

15. Verwendung der Flüssigkristallzusammensetzung gemäß einem der Ansprüche 1 bis 13 in einer Flüssigkristallanzeigevorrichtung.

## Revendications

1. Composition de cristaux liquides, étant **caractérisée en ce que** : la composition de cristaux liquides a une phase nématique et une anisotropie diélectrique négative, et contient au moins un composé sélectionné dans le groupe de composés représentés par la formule (1) en tant que premier constituant et au moins un composé sélectionné dans le groupe de composés représentés par la formule (2) en tant que second constituant : 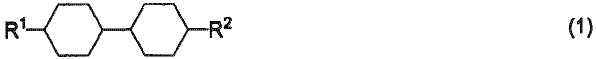 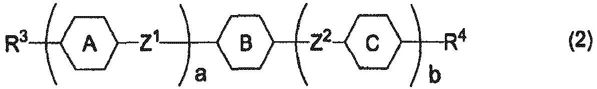 dans laquelle, dans la formule (1), R¹ est indépendamment un alcényle ayant de 2 à 12 carbones ; et R² est un 1-propényle ; dans la formule (2), R³ est un alcényle ayant de 2 à 12 carbones, ou un alcényle ayant de 2 à 12 carbones dans lequel au moins un hydrogène est remplacé par un fluor ou un chlore ; R⁴ est un alkyle ayant de 1 à 12 carbones, un alcoxy ayant de 1 à 12 carbones, un alcényle ayant de 2 à 12 carbones, un alcényloxy ayant de 2 à 12 carbones, ou un alkyle ayant de 1 à 12 carbones dans lequel au moins un hydrogène est remplacé par un fluor ou un chlore ; le cycle A et le cycle C sont indépendamment un 1,4-cyclohexène, un 1,4-cyclohexénylène, un tétrahydropyran-2,5-diyl, un 1,4-phénylène, un 1,4 phénylène dans lequel au moins un hydrogène est remplacé par un fluor ou un chlore, un naphtalène-2,6-diyl, un naphtalène-2,6-diyl dans lequel au moins un hydrogène est remplacé par un fluor ou un chlore, un chroman-2,6-diyl, ou un chroman-2,6-diyl dans lequel au moins un hydrogène est remplacé par un fluor ou un chlore ; le cycle B est un 2,3-difluoro-1,4-phénylène, un 2-chloro-3-fluoro-1,4-phénylène, un 2,3-difluoro-5-méthyl-1,4-phénylène, un 3,4,5-trifluoronaphtalène-2,6-diyl ou un 7,8-difluorochroman-2,6-diyl ; Z¹ et Z² sont indépendamment une liaison unique, un éthylène, un carbonyloxy ou un méthylèneoxy ; a est 0, 1 ou 2 ; b est 0 ou 1 ; une somme de a et b est 3 ou moins ; et dans laquelle, le cycle A est un 1,4-cyclohexylène, Z¹ est une liaison simple, a est 1, lorsque b est 0, R⁴ est un alkyle ayant de 1 à 12 carbones, un alcényle ayant de 2 à 12 carbones, un alcényloxy ayant de 2 à 12 carbones, ou un alkyle ayant de 1 à 12 carbones dans lequel au moins un hydrogène est remplacé par un fluor ou un chlore.

2. Composition de cristaux liquides selon la revendication 1, contenant au moins un composé sélectionné dans le groupe de composés représentés par la formule (1-2), la formule (1-5), la formule (1-6) et la formule (1-7) en tant que premier constituant :

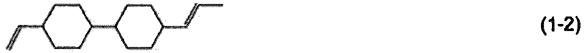

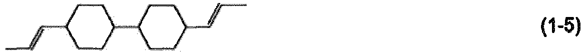

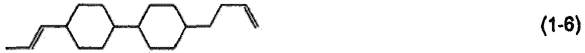

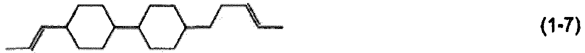

3. Composition de cristaux liquides selon la revendication 1 ou 2, dans laquelle une proportion du premier constituant se trouve dans la plage de 5 % en poids à 75 % en poids sur la base de la quantité totale de la composition de cristaux liquides.

4. Composition de cristaux liquides selon l'une quelconque des revendications 1 à 3, contenant au moins un composé sélectionné dans le groupe de composés représentés par la formule (2-1) à la formule (2-21) en tant que deuxième constituant : 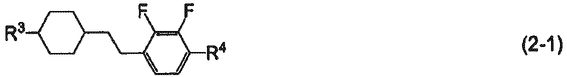 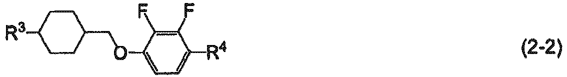 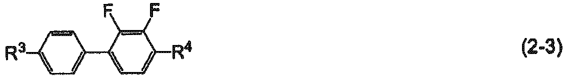 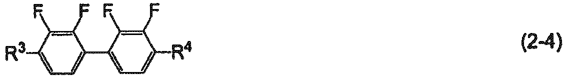 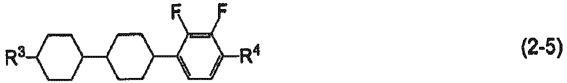 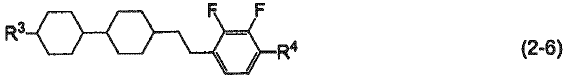 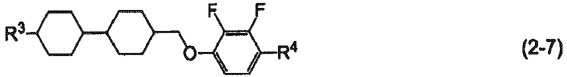 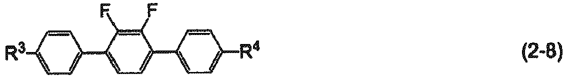 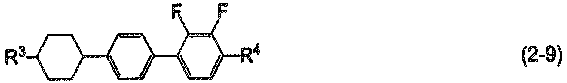 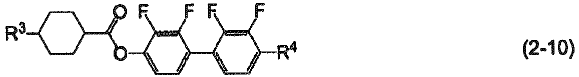 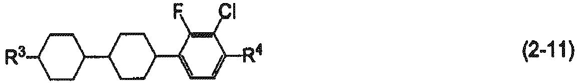 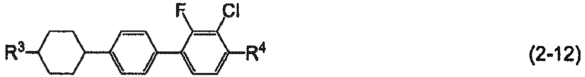 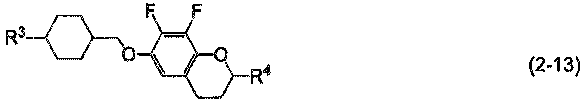 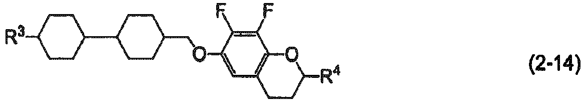 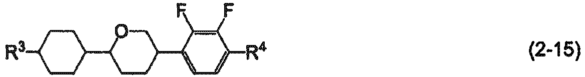 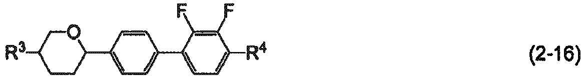 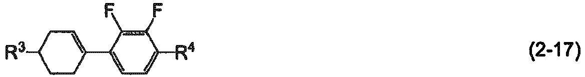 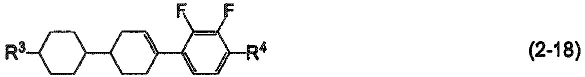 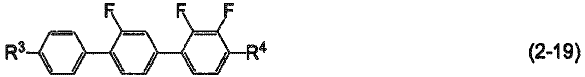 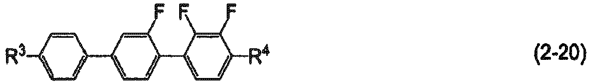 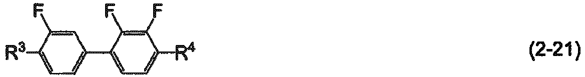 dans laquelle, dans la formule (2-1) à la formule (2-21), R³ est un alcényle ayant de 2 à 12 carbones, ou un alcényle ayant de 2 à 12 carbones dans lequel au moins un hydrogène est remplacé par un fluor ou un chlore ; et R⁴ est un alkyle ayant de 1 à 12 carbones, un alcoxy ayant de 1 à 12 carbones, un alcényle ayant de 2 à 12 carbones, un alcényloxy ayant de 2 à 12 carbones, ou un alkyle ayant de 1 à 12 carbones dans lequel au moins un hydrogène est remplacé par un fluor ou un chlore.

5. Composition de cristaux liquides selon l'une quelconque des revendications 1 à 4, dans laquelle une proportion du second constituant se trouve dans la plage de 5 % en poids à 70 % en poids sur la base de la quantité totale de la composition de cristaux liquides.

6. Composition de cristaux liquides selon l'une quelconque des revendications 1 à 5, contenant au moins un composé sélectionné dans le groupe de composés représentés par la formule (3) en tant que troisième constituant : 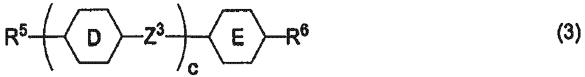 dans laquelle, dans la formule (3), R⁵ et R⁶ sont indépendamment un alkyle ayant de 1 à 12 carbones, un alcoxy ayant de 1 à 12 carbones, un alcényle ayant de 2 à 12 carbones, un alkyle ayant de 1 à 12 carbones dans lequel au moins un hydrogène est remplacé par un fluor ou un chlore, ou un alcényle ayant de 2 à 12 carbones dans lequel au moins un hydrogène est remplacé par un fluor ou un chlore ; le cycle D et le cycle E sont indépendamment un 1,4-cyclohexène, un 1,4-phénylène, un 2-fluoro-1,4-phénylène ou un 2,5-difluoro-1,4-phénylène ; Z³ est une liaison simple, un éthylène ou un carbonyloxy ; c est 1, 2 ou 3 ; et dans lequel, le composé représenté par la formule (1) est exclu.

7. Composition de cristaux liquides selon l'une quelconque des revendications 1 à 6, contenant au moins un composé sélectionné dans le groupe de composés représentés par la formule (3-1) à la formule (3-13) en tant que troisième constituant : 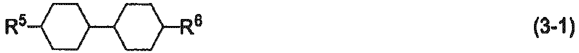 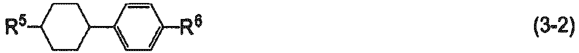 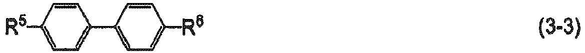 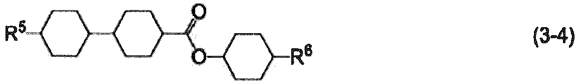 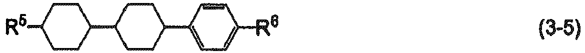 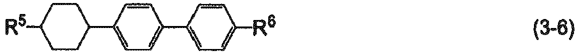 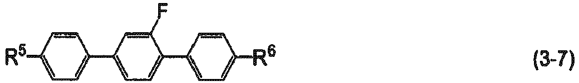 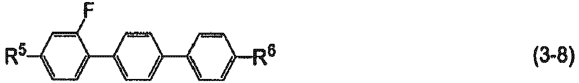 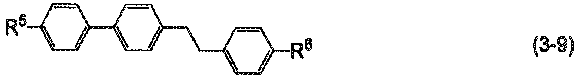 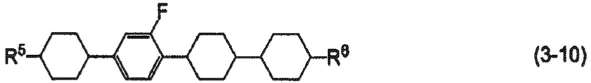 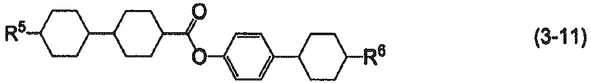 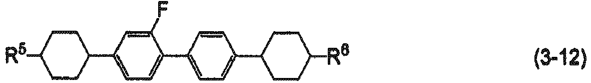 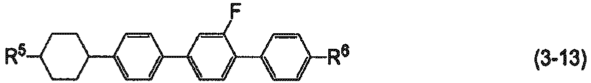 dans laquelle, dans la formule (3-1) à la formule (3-13), R⁵ et R⁶ sont indépendamment un alkyle ayant de 1 à 12 carbones, un alcoxy ayant de 1 à 12 carbones, un alcényle ayant de 2 à 12 carbones, un alkyle ayant de 1 à 12 carbones dans lequel au moins un hydrogène est remplacé par un fluor ou un chlore, ou un alcényle ayant de 2 à 12 carbones dans lequel au moins un hydrogène est remplacé par un fluor ou un chlore, et dans lequel le composé représenté par la formule (1) est exclu.

8. Composition de cristaux liquides selon la revendication 6 ou 7, dans laquelle une proportion du troisième constituant se trouve dans la plage de 3 % en poids à 50 % en poids sur la base de la quantité totale de la composition de cristaux liquides.

9. Composition de cristaux liquides selon l'une quelconque des revendications 1 à 8, contenant au moins un composé sélectionné dans le groupe de composés représentés par la formule (4) en tant que quatrième constituant : 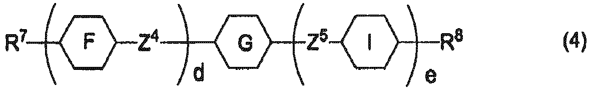 dans laquelle, dans la formule (4), R⁷ et R⁸ sont indépendamment un alkyle ayant de 1 à 12 carbones, un alcoxy ayant de 1 à 12 carbones, ou un alkyle ayant de 1 à 12 carbones dans lequel au moins un hydrogène est remplacé par un fluor ou un chlore ; le cycle F et le cycle I sont indépendamment un 1,4-cyclohexène, un 1,4-cyclohexénylène, un tétrahydropyran-2,5-diyl, un 1,4-phénylène, un 1,4 phénylène dans lequel au moins un hydrogène est remplacé par un fluor ou un chlore, un naphtalène-2,6-diyl, un naphtalène-2,6-diyl dans lequel au moins un hydrogène est remplacé par un fluor ou un chlore, un chroman-2,6-diyl, ou un chroman-2,6-diyl dans lequel au moins un hydrogène est remplacé par un fluor ou un chlore ; le cycle G est un 2,3-difluoro-1,4-phénylène, un 2-chloro-3-fluoro-1,4-phénylène, un 2,3-difluoro-5-méthyl-1,4-phénylène, un 3,4,5-trifluoronaphtalène-2,6-diyl ou un 7,8-difluorochroman-2,6-diyl ; Z⁴ et Z⁵ sont indépendamment une liaison unique, un éthylène, un carbonyloxy ou un méthylèneoxy ; d est 1, 2 ou 3 ; e est 0 ou 1 ; et une somme de d et e est de 1 à 3.

10. Composition de cristaux liquides selon l'une quelconque des revendications 1 à 9, contenant au moins un composé sélectionné dans le groupe de composés représentés par la formule (4-1) à la formule (4-22) en tant que quatrième constituant : 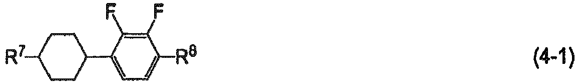 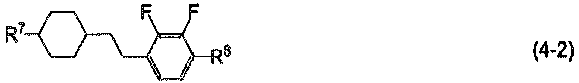 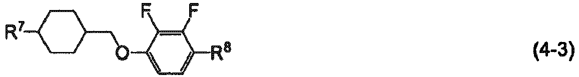 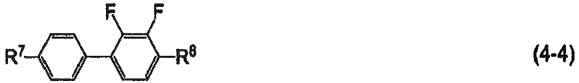 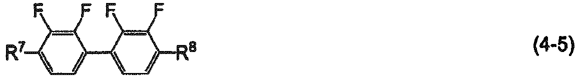 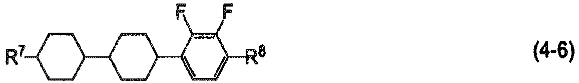 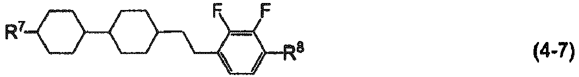 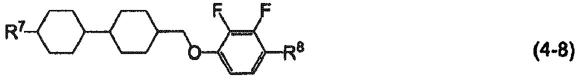 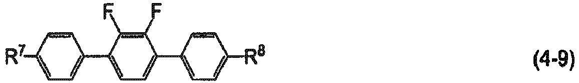 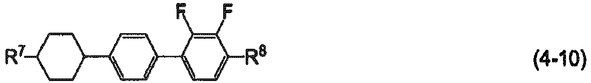 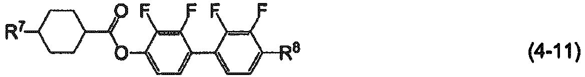 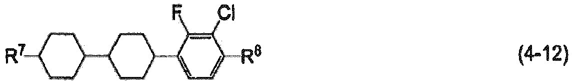 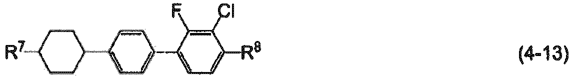 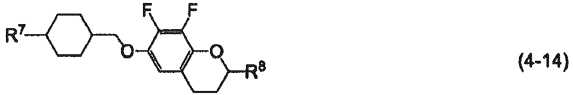 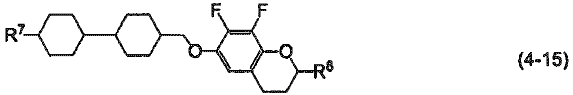 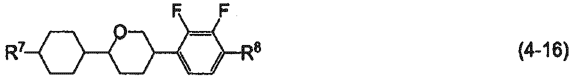 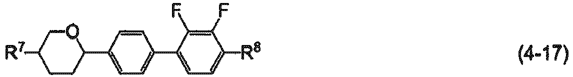 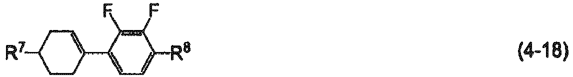 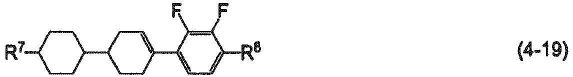 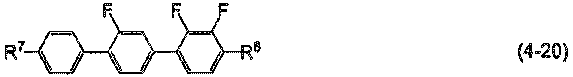 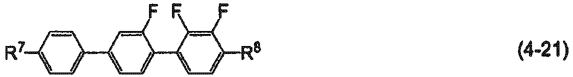 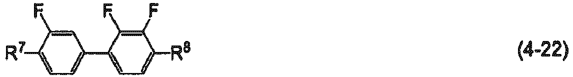 dans laquelle, dans la formule (4-1) à la formule (4-22), R⁷ et R⁸ sont indépendamment un alkyle ayant de 1 à 12 carbones, un alcoxy ayant de 1 à 12 carbones, ou un alkyle ayant de 1 à 12 carbones dans lequel au moins un hydrogène est remplacé par un fluor ou un chlore.

11. Composition de cristaux liquides selon la revendication 9 ou 10, dans laquelle une proportion du quatrième constituant se trouve dans la plage de 3 % en poids à 60 % en poids sur la base de la quantité totale de la composition de cristaux liquides.

12. Composition de cristaux liquides selon l'une quelconque des revendications 1 à 11, contenant au moins un composé polymérisable sélectionné dans le groupe de composés représentés par la formule (5) en tant qu'additif : 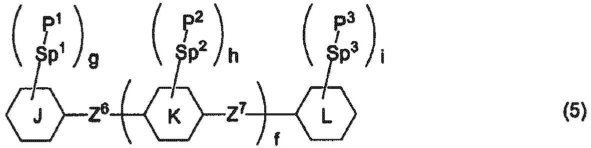 dans laquelle, dans la formule (5), le cycle J et le cycle L sont indépendamment un cyclohexyle, un cyclohexényle, un phényle, un 1-naphtyle, un 2-naphtyle, un tétrahydropyran-2-yl, un 1, 3-dioxane-2-yl, un pyrimidine-2-yl ou un pyridine-2-yl, et dans les cycles, au moins un hydrogène peut être remplacé par un fluor, un chlore, un alkyle ayant de 1 à 12 carbones, un alcoxy ayant de 1 à 12 carbones, ou un alkyle ayant de 1 à 12 carbones dans lequel au moins un hydrogène est remplacé par un fluor ou un chlore ; le cycle K est un 1,4-cyclohexylène, un 1,4-cyclohexénylène, un 1,4-phénylène, un naphtalène-1,2-diyl, un naphtalène-1,3-diyl, un naphtalène-1,4-diyl, un naphtalène-1,5-diyl, un naphtalène-1,6-diyl, un naphtalène-1,7-diyl, un naphtalène-1,8-diyl, un naphtalène-2,3-diyl, un naphtalène-2,6-diyl, un naphtalène-2,7-diyl, un tétrahydropyran-2,5-diyl, un 1,3-dioxane-2,5-diyl, un pyrimidine-2,5-diyl ou un pyridine-2,5-diyl, et dans les cycles, au moins un hydrogène peut être remplacé par un fluor, un chlore, un alkyle ayant de 1 à 12 carbones, un alcoxy ayant de 1 à 12 carbones, ou un alkyle ayant de 1 à 12 carbones dans lequel au moins un hydrogène est remplacé par un fluor ou un chlore ; Z⁶ et Z⁷ sont indépendamment une liaison simple ou un groupe alkylène ayant de 1 à 10 carbones, et dans l'alkylène, au moins une partie de - CH₂- peut être remplacée par -O-, -CO-, -COO- ou -OCO-, et au moins une partie de -CH₂-CH₂- peut être remplacée par -CH=CH-, -C(CH₃)=CH-, -CH=C(CH₃)- ou - C(CH₃)=C(CH₃)-, et dans les groupes, au moins un hydrogène peut être remplacé par un fluor ou un chlore ; P¹, P² et P³ sont indépendamment un groupe polymérisable ; Sp¹, Sp² et Sp³ sont indépendamment une liaison simple ou un groupe alkylène ayant de 1 à 10 carbones, et dans l'alkylène, au moins une partie de - CH₂- peut être remplacée par -O-, -COO-, -OCO- ou - OCOO-, et au moins une partie de -CH₂-CH₂- peut être remplacée par -CH=CH- ou -C=C-, et dans les groupes, au moins un hydrogène peut être remplacé par un fluor ou un chlore ; f est 0, 1 ou 2 ; g, h et i sont indépendamment 0, 1, 2, 3 ou 4 ; et une somme de g, h et i est de 1 ou plus.

13. Composition de cristaux liquides selon l'une quelconque des revendications 1 à 12, contenant au moins un composé polymérisable sélectionné dans le groupe de composés représentés par la formule (5-1) à la formule (5-27) en tant qu'additif : 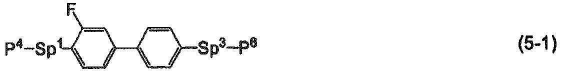 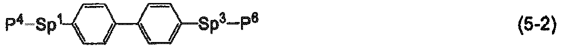 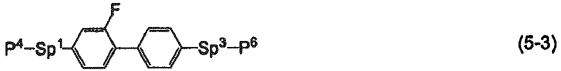 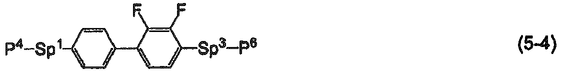 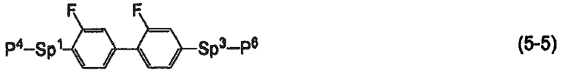 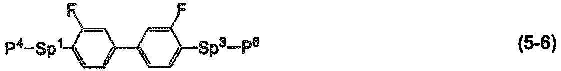 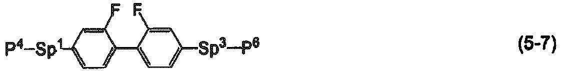 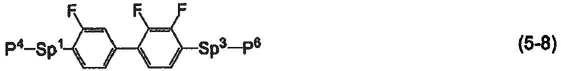 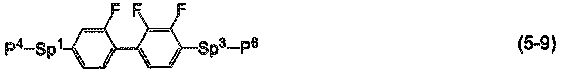 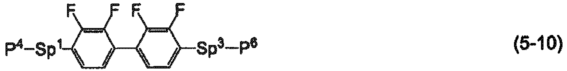 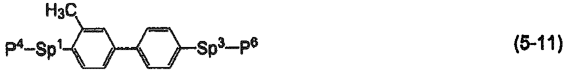 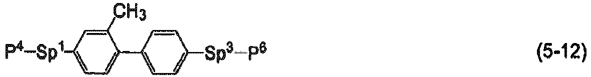 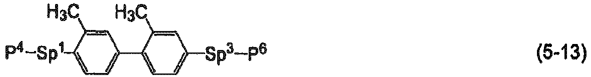 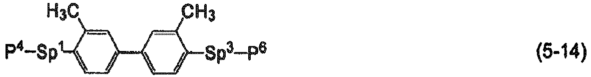 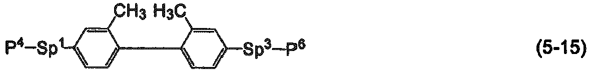 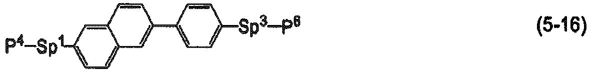 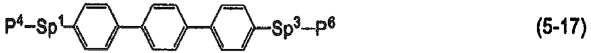 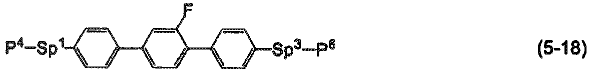 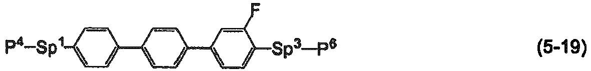 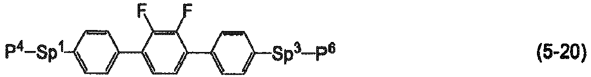 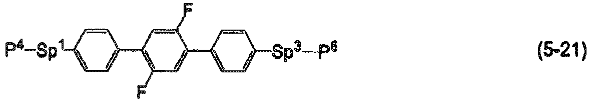 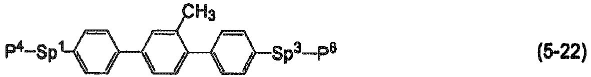 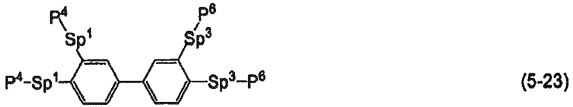 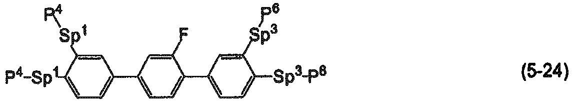 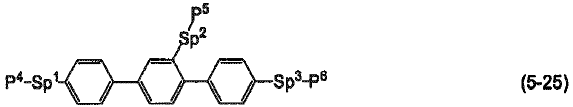 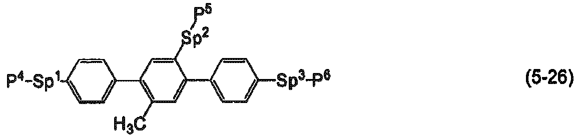 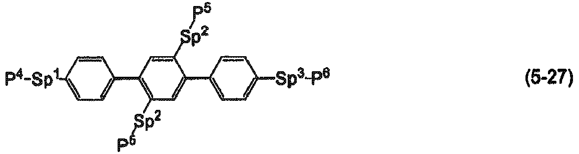 dans laquelle, dans la formule (5-1) à la formule (5-27), P⁴, P⁵ et P⁶ sont indépendamment un groupe polymérisable sélectionné dans le groupe des groupes représentés par la formule (P-1) à la formule (P-3) ; 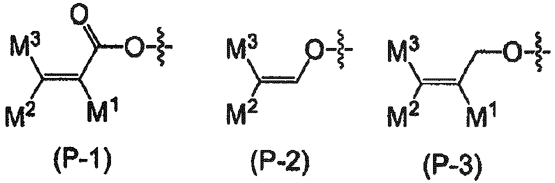 dans laquelle, dans la formule (P-1) à la formule (P-3), M¹, M² et M³ sont indépendamment un hydrogène, un fluor, un alkyle ayant de 1 à 5 carbones, ou un alkyle ayant de 1 à 5 carbones dans lequel au moins un hydrogène est remplacé par un fluor ou un chlore ; et dans la formule (5-1) à la formule (5-27), Sp¹, Sp² et Sp³ sont indépendamment une liaison simple ou un groupe alkylène ayant de 1 à 10 carbones, et dans l'alkylène, au moins une partie de -CH₂- peut être remplacée par -O-, -COO-, -OCO- ou -OCOO-, et au moins une partie de -CH₂-CH₂- peut être remplacée par -CH=CH- ou -C=C-, et dans les groupes, au moins un hydrogène peut être remplacé par un fluor ou un chlore.

14. Dispositif d'affichage à cristaux liquides, comprenant la composition de cristaux liquides selon l'une quelconque des revendications 1 à 13.

15. Utilisation de la composition de cristaux liquide selon l'une quelconque des revendications 1 à 13 dans un dispositif d'affichage à cristaux liquides.
